(19) Europäisches Patentamt
European Patent Office
Office européen des brevets

(11) **EP 1 826 899 A1**

(12) **EUROPEAN PATENT APPLICATION**
published in accordance with Art. 158(3) EPC

(43) Date of publication:
**29.08.2007 Bulletin 2007/35**

(51) Int Cl.:
*H02P 6/08* (2006.01)   *B62D 5/04* (2006.01)
*B62D 6/00* (2006.01)   *H02M 7/48* (2007.01)

(21) Application number: **05809520.9**

(22) Date of filing: **24.11.2005**

(86) International application number:
**PCT/JP2005/021615**

(87) International publication number:
**WO 2006/057317 (01.06.2006 Gazette 2006/22)**

(84) Designated Contracting States:
**DE FR GB**

(30) Priority: **24.11.2004  JP 2004338743**
**24.11.2004  JP 2003387434**
**06.12.2004  JP 2004352841**
**28.12.2004  JP 2004379613**

(71) Applicant: **NSK Steering Systems Co., Ltd.**
**Tokyo 141-8560 (JP)**

(72) Inventors:
• **MAEDA, Masahiro c/o NSK Steering Systems Co., Ltd.**
**Maebashi-shi, Gunma 3718527 (JP)**
• **MIURA, Tomohiro NSK Steering Systems Co., Ltd.**
**Maebashi-shi, Gunma 3718527 (JP)**
• **ITAKURA, Yuseke c/o NSK Steering Systems Co., Ltd.**
**Maebashi-shi, Gunma 3718527 (JP)**

(74) Representative: **Klingseisen, Franz**
**Klingseisen & Partner**
**Postfach 10 15 61**
**80089 München (DE)**

(54) **NON-CONNECTION MOTOR, ITS DRIVE CONTROL DEVICE AND MORTORIZED POWER STEERING DEVICE USING DRIVE CONTROL DEVICE OF NON-CONNECTION MOTOR**

(57)   A drive control device of an unconnected motor capable of resolving power shortage and increasing motor output without using a boost circuit, and an electric power steering device using the unconnected motor. The drive control device comprises an unconnected motor (12) having a rotor in which permanent magnets are allocated and a stator opposing the rotor, in which armature winding Lu to Lw of a plurality (N number) of phases are independently arranged, a pair of inverter circuits (34a, 34b) individually connected to both ends of each armature winding, and a drive control circuit (15) which drives the pair of inverter circuits (34a, 34b) with a predetermined number (e.g. 2N) of PWM drive control signals.

F I G. 5

EP 1 826 899 A1

**Description**

Technical Field

The present invention relates to an unconnected motor in which armature windings of a stator are unconnected and independently arranged, a drive control device thereof, and an electric power steering device using the drive control device of the unconnected motor.

Background Art

Motors used in electric power steering devices desirably generate significant steering assist torque from limited power supply voltages.

Therefore, conventionally, a known motor drive control devices is arranged to calculate a phase current command value of each phase of the motor using vector control while sensing a motor phase current of each phase to control a motor phase current based on the phase current command value and the motor phase current, and use either a rectangular wave current or a pseudo-rectangular wave current as a motor current, or a rectangular wave voltage or a pseudo-rectangular wave voltage as a motor induced voltage (for instance, refer to Patent Document 1: JP2004-201487A).

In addition, while configurations using brush DC motors are common in electric power steering devices for small-sized vehicles, loss due to heating and durability of brush mechanisms limit current values which may be put into practical use, and prevent increases in output in such electric power steering devices.

In recent years, the practical realization of central processing units (CPUs) and digital signal processing devices (DSPs) capable of high-speed processing, together with the evolution in motor control technology and semiconductor elements for motor driving such as power MOSFETs, have produced inverter circuits and drive control devices thereof in which such brush mechanisms are replaced with semiconductor elements and high-performance microcomputers capable of satisfying advanced levels of torque controllability, quietness and low-friction properties demanded by electric power steering devices through driving of wye-connection or delta-connection high-efficiency brushless motors, and have contributed to the widespread use of electric power steering devices in midsize vehicles.

Output performance of motors required in electric power steering devices may be roughly divided into maximum motor torque necessary for satisfying rack thrust characteristics, and maximum motor rotational velocity necessary for satisfying high-speed steering characteristics.

Motor torque T may be expressed as $T = Kt \times Iq$ (where Kt: torque constant). While it is necessary to increase motor current or the torque constant Kt in order to increase torque, the motor current is limited by the maximum current capacities of power MOSFETs, relays and motor harnesses used within the inverter circuit section.

In addition, when the torque constant Kt is increased, given that motor driving voltage remains the same, the motor rotational velocity will decrease and high-speed steering characteristics will no longer be satisfied. In other words, for a motor, maximum output torque and maximum rotational velocity are conflicting characteristics.

In order to solve the above problem, a method is known in which a boost power source is added between a 12-volt battery and an inverter circuit in order to remedy power shortage.

More specifically, an electric power steering device is proposed in which: a target current value It to be supplied to the motor is calculated based on a steering torque sensed by a steering torque sensor and a vehicle speed sensed value sensed by a vehicle speed sensor; a deviation between the target current value It and the current sensed value Is is calculated to generate a command value V for feedback control; a calculated duty ratio Dc is calculated based on the command value V; and when the calculated duty ratio Dc exceeds a threshold D0 such as 100%, a reactor, an Hi-MOS which configures serially connected switching elements, a Lo-MOS which configures a switching element connected between the connection point of the reactor with the Hi-MOS and ground, and a boost circuit composed of a boost chopper having a smoothing capacitor connected between the output-side of the Hi-MOS and ground are activated to calculate an output duty ratio Dp, and when the calculated output duty ratio Dp is less than or equal to the threshold D0, the boost circuit is suspended, the calculated duty ratio Dc is deemed as the output duty ratio Dp, and the calculated duty ratio Dp is supplied to a PWM signal generation circuit (for instance, refer to Patent Document 2: JP2003-200838A).

In addition, electric power steering devices generally use N-phase brushless motors in which permanent magnets are used in their motors and armature windings of N number of phases (where N is an integer greater than or equal to 3) are either wye-connected or delta-connected, as motors for generating steering assist force for steering systems. Such N-phase brushless motors are arranged to be drive-controlled by a motor drive circuit according to steering torques sensed by steering torque sensing means.

In such a motor drive circuit, an inverter circuit having twice as many switching elements as the number of phases and driven by a pulse width modulation (PWM) signal is connected to an N-phase armature winding of the N-phase brushless motor. A position of a rotor of the brushless motor is sensed by a position sensor while currents respectively flowing through the armature windings are sensed by a current sensing circuit. The motor drive circuit further comprises a control circuit which drives the inverter circuit based on the rotor position sensed by the position sensor, on each armature winding current sensed by the current sensing circuit and on a current target value.

As for current sensing circuits for sensing a current flowing through each armature winding, for instance, a configuration is known in which voltages developed across current sensing resistors inserted into at least N-1 number of connecting wires between an inverter circuit and an N-phase brushless motor are sensed, and the voltages developed across the current sensing resistors are converted into digital signals by an A/D converter to be inputted to a microcomputer which drive-controls the inverter circuit (for instance, refer to Patent Document 3: JP2002-238293A).

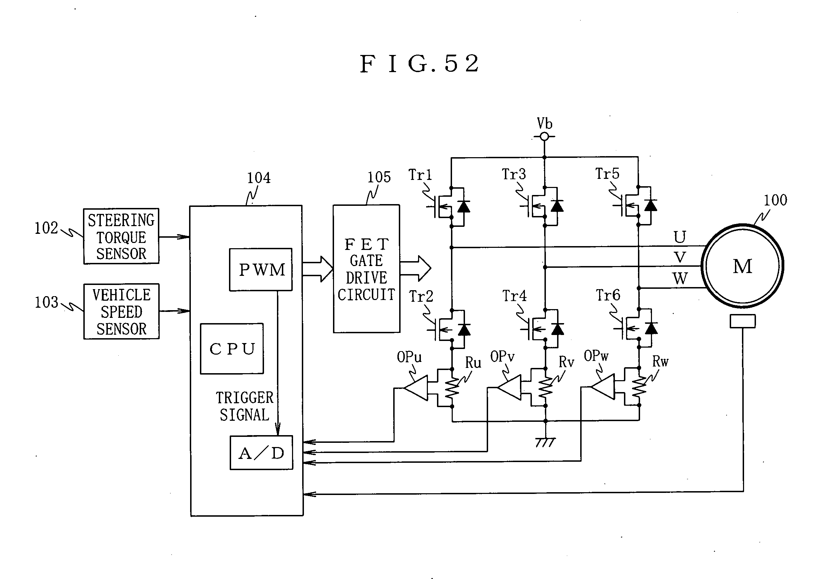

In another current sensing method shown in Figure 52, an electric power steering device comprises: a three-phase inverter circuit 101 having an upper arm composed of three switching elements Tr1, Tr3 and Tr5 and a lower arm composed of three switching elements Tr2, Tr4 and Tr6 which supply current to U-phase to W-phase armature windings of a three-phase brushless motor 100; current sensing operational amplifiers OPu, OPv and OPw to which voltages developed across current sensing resistors Ru, Rv and Rw, respectively inserted between each of the switching elements Tr2, Tr4 and Tr6 which configure the lower arm of the inverter circuit 101 and ground; a microcomputer 104 to which steering torques and vehicle speeds respectively sensed by the steering torque sensor 102 and the vehicle speed sensor 103 are inputted, having an A/D conversion input terminal to which sensed voltages of the operational amplifiers OPu, OPv and OPw are inputted; and a gate drive circuit 105 to which a duty command value calculated by the pulse width modulation (PWM) function of the microcomputer 104 is inputted to drive the three-phase inverter circuit 100; wherein A/D conversion of the motor currents sensed by the current sensing operational amplifiers OPu, OPv and OPw by the A/D conversion function within the microcomputer 104 is arranged to be initiated by a trigger signal from the pulse width modulation function, and the motor currents are converted into digital signals to be read in.

Furthermore, another configuration is known in which a shunt resistor is inserted to the grounding side of a three-phase inverter circuit, and a current flowing through the shunt resistor is sensed by a current sensing circuit to be inputted to a microcomputer (for instance, refer to Patent Document 4: JP12-350490A).

Moreover, electric power steering devices generally use brush DC motors or brushless DC motors using permanent magnets therein as motors for generating steering assist force for the steering system, and involve drive-controlling the DC motors using motor drive circuits.

In the case of brush DC motors, when one of the switching elements configuring a motor drive circuit enters a state of persistent on-abnormalities, both ends of a brush DC motor BM form a closed loop circuit connected via the switching element with the on-abnormality and a flywheel diode inserted in parallel to a normal switching element. When the DC motor is rotated by an external force, a current caused by an induced electromotive force flows through the closed loop circuit acts as an electromagnetic brake on the DC motor. Therefore, a method for preventing such occurrences is known which involves setting switching means between electric motor driving means and the electric motor, and restoring a manual steering state by switching the switching means to its off-state when an on-abnormality of a switching element is sensed (for instance, refer to Patent Document 5: JP7-096387B).

Additionally, a method is known for continuously imparting steering assist torque when a non-conduction state abnormality is sensed in one of the excitation coils of the brushless motor by arranging the drive current flowing through the brushless motor to be smaller than the drive current during a normal state without detaching the brushless motor from the steering system (for instance, refer to Patent Document 6: JP10-181617A).

Furthermore, electric power steering devices generally use brush DC motors or brushless DC motors using permanent magnets therein as motors for generating steering assist forces for the steering system, and involves drive-controlling the DC motors using motor drive circuits.

In such electric power steering devices, detection of short-to-power faults and short-to-ground faults in motor conducting control systems are essential for ensuring steering performance of vehicles. For the purpose of detecting short-to-power faults or short-to-ground faults in motor conduction control systems, an electric power steering device is known comprising drive means which determines an occurrence of a short-to-power or a short-to-ground fault in a motor conduction control system when there is a continuous abnormality in a difference between a sensed value of a motor terminal voltage and a motor terminal voltage estimated from a duty ratio applicable in a case where the motor is driven by PWM in which the abnormality continues to exceed a predetermined value over a predetermined period of time, and thereby terminates motor output (for instance, refer to Patent Document 7: JP11-263240A).

Additionally, an electric power steering device has been proposed which comprises a microcomputer which senses terminal voltages VM+ and VM- of a motor 1 and determines whether the sensed values deviate from set values VTHH and VTHL when supply voltage is determined not to be at a predetermined value, and determines a fault in the wiring connected to the motor when each terminal voltage VM$\pm$ is determined to be deviating from the set values VTHH and VTHL (for instance, refer to Patent Document 8: Re-published patent No. W098-588338).

Furthermore, a method is known which focuses attention on the fact that, in a three-phase brushless motor, the sum of the currents simultaneously flowing through the coils of the three phases is ensured to be "0" by Kirchhoff's Law, and detects faults in a current sensing circuit when an absolute value of the sum of the currents is greater than or equal to a set value (for instance, refer to Patent Document 9: JP2003-237597A).

Disclosure of the Invention

However, according to the conventional example described in the above-mentioned Patent Document 1, since motor drive control is performed using a rectangular wave current or a pseudo-rectangular wave current as a motor current, or a rectangular wave voltage or a pseudo-rectangular wave voltage as a motor induced voltage, greater output may be obtained because an effective value for a rectangular wave current or a rectangular wave voltage is greater than that of a sinusoidal wave current or a sinusoidal wave voltage if a current peak value or a voltage peak value is the same. However, since the excitation coils of the motor are mutually connected, for instance, a three-phase motor is incapable of applying a third harmonic wave to the excitation coils. Therefore, an unsolved problem exists in that further increase of output is limited.

More specifically, in a three-phase motor in which excitation coils are wye-connected or delta-connected, voltage must be applied to each terminal of each excitation coil in order to apply current to each phase. Terminal voltages required to apply a first order component (sinusoidal wave) current to each of the U, V and W phases are as follows:

$$Iu = I_0 \sin\theta \qquad Vu = V_0 \sin\theta$$

$$Iv = I_0 \sin(\theta - 2\pi/3) \qquad Vv = V_0 \sin(\theta - 2\pi/3)$$

$$Iw = I_0 \sin(\theta + 2\pi/3) \qquad Vw = V_0 \sin(\theta + 2\pi/3)$$

Terminal voltages required to apply a current on which a third harmonic wave has been superimposed are as follows:

$$Vu = V_0 \sin\theta + V_1 \sin 3\theta$$

$$Vv = V_0 \sin(\theta - 2\pi/3) + V_1 \sin\{3(\theta - 2\pi/3)\}$$
$$= V_0 \sin(\theta - 2\pi/3) + V_1 \sin(3\theta - 2\pi)$$
$$= V_0 \sin(\theta - 2\pi/3) + V_1 \sin 3\theta$$

$$Vw = V_0 \sin(\theta + 2\pi/3) + V_1 \sin\{3(\theta + 2\pi/3)\}$$
$$= V_0 \sin(\theta + 2\pi/3) + V_1 \sin(3\theta + 2\pi)$$
$$= V_0 \sin(\theta + 2\pi/3) + V_1 \sin 3\theta$$

As seen, since the same voltage $V_1 \sin 3\theta$ will be applied to each terminal, third harmonic currents may not be applied to each of the phases U, V and W. In a similar manner, fifth harmonic currents may not be applied to each of the phases of a five-phase motor.

In addition, according to the conventional example described in the above-mentioned Patent Document 2, a boost circuit is capable of increasing a torque constant Kt of a motor by increasing motor drive voltage. As a result, motor currents may be kept low, and power loss from a motor harness or motor drive elements and the like may also be kept low. On the other hand, an input current from a battery to a boost circuit may be expressed as (output current of boost current $\times$ output voltage) / (input voltage $\times$ boost efficiency). A boost circuit of an electric power steering device having a high consumption current, consumes approximately 20 percent of inputted energy as boost loss. As a result, from the viewpoint of energy balance, the power loss reduction effect of a motor line is balanced out by the increase of loss from the boost circuit. Therefore, an unsolved problem exists in that further increase of motor output is prevented.

Furthermore, since the total value of a battery interval resistor, a harness resistor, a fuse resistor, a noise reduction coil resistor, a relay contact resistor as well as contact resistors of the respective sections existing on the line to which the input current is applied is around 25 m$\Omega$, another unsolved problem exists in that power loss of the battery line increases even when increasing battery current, resulting in a decrease in efficiency of the electric power steering device.

Moreover, there is yet another unsolved problem in that the limit in permissible output current of 12-volt batteries, which is said to be around 85 A, prevents further increase in motor output.

In addition, according to the conventional example described in the above-mentioned Patent Document 3, since current detection means are provided on at least two phases among the wirings between the inverter circuit and the three-phase brushless motor, timing control of A/D conversion may be performed with the utmost ease. However, there is an unsolved problem in that potential fluctuation of the current-sensing shunt resistor is significant, and the configuration of the current sensing circuit becomes complicated.

Furthermore, according to the conventional example shown in Figure 52, current sensing resistors Ru to Rw which individually sense currents in each phase are inserted in the inverter circuit 100, and voltages developed across the current sensing resistors Ru to Rw are individually sensed by current sensing operational amplifiers OPu to OPw. However, since currents flow in different directions in current sensing resistors Ru to Rw, an output dynamic range of the current sensing operational amplifiers OPu to OPw must be set at a wide range in order to secure values obtained by respectively adding margins to positive/negative motor current maximum values ±I max. As a result, a bit rate of current sensed values, or, in other words, a motor current magnitude A/bit per one bit of an A/D converter increases, creating an unsolved problem in that the low degree of ionization detection accuracy adversely influences control of an electric power steering device.

Furthermore, according to the conventional example described in the above-mentioned Patent Document 4, although not included in the publication, PWM signals are outputted from the phases in an decreasing order of duty value size of the PWM signals in the upper arm, and timings of initiating PWM output of each phase is delayed through sample-holding performed by the A/D converter by a predetermined delay time necessary for performing A/D conversion. By regularly delaying PWM output timings, timing is generated in which a value of a current flowing through the shunt resistor matches a phase current value. Sensing of currents of at least two phases from a single shunt resistor is enabled by performing A/D conversion at this timing, while a current of the remaining phase must be obtained from the relational expression of Iu + Iv + Iw = 0. While a most simple circuit configuration may be used, since PWM signal generation is specific and whether or not such PWM signal generation may be performed is dependent on selection of a microcomputer, an unsolved problem exists in that a downscale model microcomputer may not be used.

Moreover, according to the conventional example described in the above-mentioned Patent Document 5, switching means such as a relay circuit and the like must be formed between electric motor drive means and the electric motor in order to break a closed loop circuit which is formed upon an on-abnormality of a switching element of a motor drive circuit. As a result, configuration becomes more complicated, and drive control of the DC motor is suspended when the switching means is opened. Therefore, steering assist force generated up to this point by the DC motor may no longer be applied, and an unsolved problem exists in that particularly, in large-sized vehicles, large steering forces required when steering a steering wheel becomes a significant burden for drivers.

In addition, according to the conventional example described in the above-mentioned Patent Document 6, there is an unsolved problem in that, while motor drive may be sustained during an off-abnormality of a switching element of a motor drive circuit, a closed loop circuit will be inevitably formed during an on-abnormality of a switching element or an occurrence of a short-to-power fault or a short-to-ground fault at a motor harness, generating an electromagnetic brake and in turn a braking torque.

Furthermore, according to the conventional examples described in the above-mentioned Patent Document 7 to 9, when using a three-phase brushless motor as an electric motor, since each phase coil is either wye-connected or delta-connected and only three wirings are required between the drive circuit and the brushless motor, an A/D converter, to be used to perform fault determination by providing current sensing circuits on each wiring and inputting signals sensed therefrom to, for instance, a microcomputer configuring a control device, requires only three channels. Thus, a relatively inexpensive microcomputer may be applied.

However, when applying an unconnected brushless motor in which each phase coil of, for instance, a three-phase brushless motor is independently allocated without mutual interconnection, an inverter circuit must be connected to both ends of each phase coil in order to perform conduction control of each phase coil. This means that six wirings are required between the drive circuit and the unconnected brushless motor, which further means that six sensing circuits are required for detecting short-to-power and short-to-ground faults at each wiring, while six A/D converters are required for performing digital processing on the sensed signals using a microcomputer and the like. As a result, it is possible that a downscale model microcomputer may not be applied. In addition, while it is conceivable that vector control, which is well known for controlling normal brushless motors, may be also applied to unconnected brushless motors, such vector control will become a significant processing load to microcomputers, and may even necessitate configuring an electric power steering device using a plurality of microcomputers.

Therefore, in order to perform control using a low-end microcomputer in an application of an unconnected motor, it is desired that the number of A/D converters be reduced and fault determination processing be simplified. Furthermore, since each phase coil is not connected in an unconnected brushless motor and therefore Kirchhoff's Law does not apply, fault determination cannot be performed based on a sum of each phase current as described in Patent Document 3. Thus, new fault detection means are desired.

In consideration of the above, the present invention is made to solve the unsolved problem of the conventional example described in the above-mentioned Patent Document 1, and a first object of the present invention is to provide an unconnected motor capable of obtaining high output through active use of high harmonic components which cannot be generated by wye-connection or delta-connection motors through the use of an unconnected motor as a motor, a drive control device of the unconnected motor, and an electric power steering device which uses the unconnected motor.

In addition, a second object of the present invention is to solve the unsolved problem of the conventional example described in the above-mentioned Patent Document 2 by providing a drive control device of an unconnected motor capable of resolving voltage shortage and achieving increased motor output without using a boost circuit, and an electric power steering device which uses the unconnected motor.

Furthermore, a third object of the present invention is to solve the unsolved problems of the conventional example described in the above-mentioned Patent Document 3, Figure 37 and Patent Document 4 by providing an electric power steering device capable of sensing motor current at a high degree of accuracy through a simple configuration, to which a low-end microcomputer may be applied.

Moreover, a fourth object of the present invention is to solve the unsolved problems of the conventional example described in the above-mentioned Patent Documents 5 and 6 by providing a control device of an unconnected motor capable of continuously driving a brushless motor to generate a predetermined torque even when an on-abnormality of a switching element, a short-to-power or short-to-ground of a motor harness and the like occurs at a drive control section of an inverter and the like, and an electric power steering device which uses the unconnected motor.

In addition, a fifth object of the present invention is to solve the unsolved problems of the conventional example described in the above-mentioned Patent Documents 7 to 9 by providing an electric power steering device capable of reducing the number of A/D converters and simplifying abnormality determination processes.

In order to achieve the above objects, an unconnected motor according to claim 1 is characterized by comprising a rotor in which permanent magnets are allocated and a stator opposing the rotor, in which a plurality of N-phases of armature windings are independently arranged, wherein for each armature winding, at least one of either a back emf waveform or a drive current waveform is arranged to be a pseudo rectangular wave.

In addition, an unconnected motor according to claim 2 is characterized in that the pseudo rectangular wave of the invention according to claim 1 is formed by superimposing on a sinusoidal wave its high harmonic component.

Furthermore, an unconnected motor according to claim 3 is characterized in that the pseudo rectangular wave of the invention according to claim 1 is formed by superimposing on a sinusoidal wave any one or a plurality of its third, fifth and seventh harmonic components.

Moreover, an unconnected motor according to claim 4 is characterized by comprising a rotor in which permanent magnets are allocated and a stator opposing the rotor, in which a plurality of N-phases of armature windings are independently arranged, wherein an Nth harmonic current is arranged to be conductive through each armature winding.

According to the inventions of the above-described claims 1 to 4 which comprise a rotor in which permanent magnets are allocated and a stator, in which a plurality of N-phases of armature windings are independently arranged, since for each armature winding, at least one of either a back emf waveform or a drive current waveform is arranged to be a pseudo rectangular wave, an advantage may be gained in that a pseudo rectangular wave drive current formed by superimposing on a sinusoidal wave its Nth harmonic current may be applied to a Nth phase armature winding, which had been unachievable through connection motors, and effective values may be actively improved in order to obtain higher output (power). In addition, effective values may further be increased by applying a pseudo rectangular wave including high harmonic waves to both a back emf waveform and a drive current waveform, and an advantage may be gained in that higher output may be obtained.

A drive control device of an unconnected motor according to claim 5 is characterized by comprising: an unconnected motor having a rotor in which permanent magnets are allocated, and a stator opposing the rotor, in which a plurality of N-phases of armature windings are independently arranged; a pair of inverter circuits, respectively connected to both ends of each armature winding, which arranges a current waveform of each armature winding to assume a pseudo rectangular wave-shape; and a drive control circuit for drive-controlling the pair of inverter circuits.

Additionally, a drive control device of an unconnected motor according to claim 6 is characterized in that the drive control circuit of the invention according to claim 5 is arranged to form control signals for the pair of inverters based on a pseudo rectangular wave-shaped voltage waveform including high harmonic waves of each armature windings of the unconnected motor.

Furthermore, a drive control device of an unconnected motor according to claim 7 is characterized in that the drive control circuit of the invention according to claim 5 is configured to form control signals for the pair of inverters based on a corrected current command value corrected by superimposing a high harmonic component onto a phase current command value for each armature winding of the unconnected motor.

Moreover, a drive control device of an unconnected motor according to claim 8 is characterized in that the drive control device according to claim 5 further comprises an electrical angle sensing circuit which senses electrical angles of the unconnected motor, wherein the drive control circuit comprises: a phase current target value computing section having a phase current target value calculation section which respectively outputs a phase current target value on which a high harmonic component has been superimposed for each armature winding of the unconnected motor based on the electrical angle sensed by the electrical angle sensing means, and a phase current command value calculation section which calculates phase current command values for the armature windings of the unconnected motor by multiplying each phase current target value calculated by the phase current target value calculation section by a control current command value; a motor current sensing circuit which senses a phase current of each armature winding; and a current control section which controls a drive current for each armature winding based on the phase current command value and the phase current.

Furthermore, a drive control device of an unconnected motor according to claim 9 is characterized in that the phase current target value calculation section according to claim 8 further comprises a storage table which stores a relationship between a phase current command value waveform on which a high harmonic component is superimposed, which has the same waveform as an induced voltage waveform onto which a high harmonic component is superimposed, and an electrical angle of the unconnected motor for armature windings in the unconnected motor, and is arranged to reference the storage table based on an electrical angle sensed by the electrical angle sensing circuit in order to calculate a phase current target value.

According to the inventions of the above-described claims 5 to 9, since a drive control device which drives an unconnected motor is arranged to drive an inverter circuit connected to an armature winding in a drive control circuit so that a drive current waveform of the armature winding assumes a pseudo rectangular wave state which includes a high harmonic wave, an advantage may be gained in that an unconnected motor may be driven with a large output by increasing its effective value.

Furthermore, by calculating an N-phase current command value reference command value with the same waveform as an induced voltage waveform with a pseudo rectangular wave state which includes a high harmonic wave, and performing current feedback control based on the calculated reference command value, an advantage may be gained in that a drive control device of a small-sized unconnected brushless DC motor with low torque ripple and high output may be provided.

An electric power steering device according to claim 10 is characterized in that a drive device of an unconnected motor according to any one of the claims 5 to 9 is used.

In addition, an electric power steering device according to claim 11 is characterized by comprising: a steering torque sensing section which senses steering torques; an unconnected motor having a rotor in which permanent magnets are allocated and a stator opposing the rotor, in which a plurality of N-phases of armature windings are independently arranged, which generates steering assist force for a steering system, a pair of inverter circuits individually connected to both ends of each armature winding, which arranges a current waveform of each armature winding to assume a pseudo rectangular wave-shape; and a drive control circuit for outputting control signals to the pair of inverter based on steering torque sensed by the steering torque sensing section.

Furthermore, an electric power steering device according to claim 12 is characterized in that the drive control circuit of the invention according to claim 11 is arranged to form control signals for the pair of inverters based on a phase current target value of each armature winding of the unconnected motor corresponding to a back emf waveform including a high harmonic component of each armature winding, and on a torque command value based on the steering torque.

Moreover, an electric power steering device according to claim 13 is characterized in that the drive control circuit of the invention according to claim 11 comprises: a phase current command value computing section which calculates a phase current command value for each armature winding based on the steering torque sensed value; a motor current sensing circuit which senses a phase current of each armature winding; and a current control section which controls a drive current for each armature winding based on the phase current command value and the phase current.

In addition, an electric power steering device according to claim 14 is characterized in that the invention according to claim 13 has an electrical angle sensing circuit which senses electrical angles of the unconnected motor, wherein the phase current command value computing section comprises: a phase current target value calculation section which calculates a phase current target value corresponding to a back emf including a high harmonic component, corresponding to each armature winding of the unconnected motor based on the electrical angle; and a phase current command value calculation section which calculates a phase current command value for each armature winding based on the phase current target value and the steering torque sensed value.

Furthermore, an electric power steering device according to claim 15 is characterized in that the drive control circuit of the invention according to claim 11 is arranged to form a control signal for the pair of inverters by superimposing a high harmonic component on a command voltage for each armature winding, calculated based on a deviation between a phase current command value of each armature winding of the unconnected motor calculated based on the steering torque sensed value, and a current sensed value of each armature winding.

Moreover, an electric power steering device according to claim 16 is characterized in that the current control section of the invention according to claim 15 comprises: a current controller which calculates based on a deviation between the phase current command value and the phase current, a phase voltage command value; a high harmonic wave superposition section which calculates a corrected phase voltage command value by superimposing a high harmonic component on a phase voltage command value calculated by the current controller; and a pulse width modulation section which generates a control signal, consisting of a pulse width modulation signal, to be supplied to the pair of inverters based on the corrected phase voltage command value from the high harmonic wave superposition section.

According to the inventions of the above-described claims 10 to 16, by configuring an electric power steering device using an unconnected motor, an advantage may be gained in that an electric power steering device may be provided which generates steering assist force capable of smooth following even upon abrupt steering of the steering wheel and enables steering wheel operations which are free of discomfort while keeping noise at a low level.

A drive control device of an unconnected motor according to claim 17 is characterized by comprising: an unconnected motor having a rotor in which permanent magnets are allocated, and a stator opposing the rotor, in which a plurality of N-phases of armature windings are independently arranged; a pair of inverter circuits individually connected to both ends of each armature winding; and a drive control circuit for drive-controlling the pair of inverter circuits, wherein the drive control circuit is arranged to drive the pair of inverter circuits with a predetermined number of PWM drive control signals.

In addition, a drive control device of an unconnected motor according to claim 18 is characterized in that the drive control circuit of claim 17 is arranged to drive the pair of inverter circuits with 2N number of PWM drive control signals.

Furthermore, a drive control device of an unconnected motor according to claim 19 is characterized in that the drive control circuit of claim 17 is arranged to output 2N number of PWM drive control signals to a pair of inverter circuits, wherein N number of PWM drive control signals are supplied to an upper arm of one of the inverter circuits and a lower arm of the other inverter circuit, and the remaining N number of PWM drive control signals are supplied to the lower arm of the former inverter circuit and an upper arm of the latter inverter circuit.

Moreover, a drive control device of an unconnected motor according to claim 20 is characterized in that the drive control circuit of either claim 17 or claim 18 is arranged so that a voltage between terminals of each armature winding is adjustable.

Moreover, a drive control device of an unconnected motor according to claim 21 is characterized in that the drive control circuit of the invention according to claim 20 comprises: a vector control phase command value calculation section which calculates a phase current command value for each armature winding using vector control; a motor current sensing circuit which senses a phase current of each armature winding; and a current control section which controls a drive current for each armature winding based on the phase current command value and the phase current.

In addition, a drive control device of an unconnected motor according to claim 22 is characterized in that the current control section of the invention according to claim 21 comprises: a computing control section which calculates a phase voltage command value based on a deviation between the phase current command value and the phase current; a voltage limiting section which limits a maximum value of the phase voltage command value calculated by the computing control section; a duty command value calculation section which calculates a duty command value based on the phase voltage command value limited by the voltage limiting section; a phase conversion section which phase-converts the duty command value calculated by the duty command value calculation section into a number of armature windings to calculate a phase duty command value; and a drive control signal formation section which forms a predetermined number of PWM drive control signals to be supplied to the pair of inverters based on the phase duty command value outputted from the phase conversion section.

Furthermore, a drive control device of an unconnected motor according to claim 23 is characterized in that the drive control signal formation section of the invention according to claim 21 comprises: a first computing section which computes a first phase duty command value for one of the inverters based on the phase duty command value outputted from the phase conversion section; a second computing section which computes a second phase duty command value for the other inverter based on the phase duty command value outputted from the phase conversion section; a first PWM circuit which forms a PWM drive control signal for the former inverter based on the first phase duty command value outputted from the first computing section; and a second PWM circuit which forms a PWM drive control signal for the latter inverter based on the second phase duty command value outputted from the second computing section.

Moreover, a drive control device of an unconnected motor according to claim 24 is characterized in that either the first computing section or the second computing section of the of the invention according to claim 23 is arranged to output a phase duty command value with a duty ratio of 50% to a corresponding PWM circuit.

In addition, a drive control device of an unconnected motor according to claim 25 is characterized in that the invention according to claim 23 comprises a gain setting section which sets a gain for the phase duty command value, wherein the second computing section is arranged to compute the second phase duty command value based on a value obtained by multiplying the phase duty command value outputted from the phase conversion section by the gain.

Furthermore, a drive control device of an unconnected motor according to claim 26 is characterized in that the gain setting section of the invention according to claim 25 is arranged to set a gain based on a q-axis phase voltage command value formed by the current control section.

According to the inventions of the above-described claims 17 to 26, an unconnected motor, in which armature windings of a predetermined number of phases are independently allocated in a stator, arranged to individually provide drive signals to each armature winding, and a pair of inverter circuits connected to both ends of each armature winding, are provided to enable drive control of a pair of inverter circuits using a single drive control circuit, resulting in a gained advantage in that overall circuit configuration may be simplified.

Additionally, in the drive control circuit, by arranging voltage between terminals of each armature winding to be adjustable, an advantage may be gained in that an arbitrary voltage between terminals may be generated and output characteristics of the unconnected motor become adjustable.

An electric power steering device according to claim 27 is characterized in that a drive device of an unconnected motor according to any one of the claims 20 to 26 is used.

In addition, an electric power steering device according to claim 28 is characterized by comprising: a steering torque sensing section which senses steering torques; an unconnected motor having a rotor in which permanent magnets are allocated and a stator opposing the rotor, in which a plurality of N-phases of armature windings are independently arranged, which generates steering assist force for a steering system, a pair of inverter circuits individually connected to both ends of each armature winding; and a drive control circuit for outputting a predetermined number of drive control signals to the pair of inverter circuits based on steering torque sensed by the steering torque sensing section.

Furthermore, an electric power steering device according to claim 29 is characterized in that the drive control circuit of the invention according to claim 28 is arranged to output 2N number of PWM drive control signals to a pair of inverter circuits, wherein N number of drive control signals are supplied to an upper arm of one of the inverter circuits and a lower arm of the other inverter circuit, and the remaining N number of drive control signals are supplied to the lower arm of the former inverter circuit and an upper arm of the latter inverter circuit.

Moreover, an electric power steering device according to claim 30 is characterized in that the drive control circuit of the invention according to claim 28 or 29 comprises: a vector control phase command value calculation section which uses vector control to calculate a phase current command value for each armature winding based on the steering torque sensed value; a motor current sensing circuit which senses a phase current of each armature winding; and a current control section which controls a drive current for each armature winding based on the phase current command value and the phase current.

In addition, an electric power steering device according to claim 31 is characterized in that the current control section of the invention according to claim 30 comprises: a computing control section which calculates a phase voltage command value based on a deviation between the phase current command value and the phase current; a voltage limiting section which limits a maximum value of the phase voltage command value calculated by the computing control section; a duty command value calculation section which calculates a duty command value based on the phase voltage command value limited by the voltage limiting circuit; a phase conversion section which phase-converts the duty command value calculated by the duty command value calculation section into a number of armature windings to calculate a phase duty command value; and a drive control signal formation section which forms a predetermined number of PWM drive control signals to be supplied to the pair of inverters based on the phase duty command value outputted from the phase conversion section.

Furthermore, an electric power steering device according to claim 32 is characterized in that the drive control signal formation section of the invention according to claim 30 comprises: a first computing section which computes a first phase duty command value for one of the inverters based on the phase duty command value outputted from the phase conversion section; a second computing section which computes a second phase duty command value for the other inverter based on the phase duty command value; a first PWM circuit which forms a PWM drive control signal for the former inverter based on the first phase duty command value outputted from the first computing section; and a second PWM circuit which forms a PWM drive control signal for the latter inverter based on the second phase duty command value outputted from the second computing section.

Moreover, an electric power steering device according to claim 33 is characterized in that either the first computing section or the second computing section of the of the invention according to claim 32 is arranged to output a phase duty command value with a duty ratio of 50% to a corresponding PWM circuit.

In addition, an electric power steering device according to claim 34 is characterized in that the invention according to claim 32 comprises a gain setting section which sets a gain for the phase duty command value, wherein the second computing section is arranged to compute the second phase duty command value based on a value obtained by multiplying the phase duty command value outputted from the phase conversion section by the gain.

Furthermore, an electric power steering device according to claim 35 is characterized in that the invention according to claim 32 comprises a rotational velocity sensing section which senses a rotational velocity of the unconnected motor, wherein the gain setting section is arranged to set the gain based on a steering torque sensed by the steering torque sensing section and a motor rotational velocity sensed by the rotational velocity sensing section.

Moreover, an electric power steering device according to claim 36 is characterized in that the gain setting section according to claim 35 comprises a gain calculation table which uses the gain as a parameter to express a relationship between the steering torque and motor rotational velocity.

Additionally, an electric power steering device according to claim 37 is characterized in that the gain setting section of the invention according to claim 34 is arranged to compute a gain based on a q-axis phase voltage command value formed by the current control section.

According to the inventions of the above-described claims 27 to 37, by arranging a drive control device which drives an unconnected motor to calculate each phase current command value based on vector control and to perform current feedback control, an advantage may be gained in that a drive control device which drives an unconnected motor may be provided which is small-sized and has low torque ripple, yet capable of producing large output.

In addition, by configuring an electric power steering device using an unconnected motor, an advantage may be gained in that an electric power steering device may be provided which generates steering assist force capable of smooth following even upon abrupt steering of the steering wheel and enables steering wheel operations which are free of discomfort while keeping noise at a low level.

An electric power steering device according to claim 38 is characterized by comprising: an unconnected brushless motor having a rotor in which permanent magnets are allocated, and a stator opposing the rotor, in which a plurality of N-phases of armature windings are independently arranged; steering torque sensing means which senses steering torques inputted to a steering system; a plurality (N-number) of inverter circuits, to which both ends of each armature winding of the unconnected brushless motor are respectively connected, which individually supplies a drive signal to each armature winding; current sensing means allocated to either a ground-side or a power-side of each inverter circuit; and a drive control section which drive-controls each inverter circuit based on winding current sensed by the current sensing means and steering torque sensed by the steering torque sensing means.

In addition, an electric power steering device according to claim 39 is characterized in that the current sensing means of the invention according to claim 38 is arranged to sense voltage between terminals of a current sensing resistor inserted to either a ground-side or a power-side of each inverter circuit, and the drive control section has A/D conversion means for performing A/D conversion by sampling voltage between terminals sensed by the current sensing means, wherein a sampling timing of the A/D conversion means is determined based on a duty ratio of a pulse width modulation signal supplied to each armature winding.

Furthermore, an electric power steering device according to claim 40 is characterized in that the invention according to claim 39 comprises a rotational velocity sensing section which senses a rotational velocity of the unconnected motor, wherein the gain setting section is arranged to set a gain based on a steering torque sensed by the steering torque sensing section and a motor rotational velocity sensed by the rotational velocity sensing section.

Moreover, an electric power steering device according to claim 41 is characterized in that the current sensing means of the invention according to claim 38 is arranged to detect voltage between terminals of a current sensing resistor inserted to either a ground-side or a power-side of each inverter circuit, and the drive control section has A/D conversion means for performing A/D conversion by sampling voltage between terminals sensed by the current sensing means, wherein a sampling timing of the A/D conversion means is determined for each armature winding based on a direction and size of a drive current thereof.

In addition, an electric power steering device according to claim 42 is characterized in that switching of sampling timings of the A/D conversion means in the invention according to claim 41 is set so that a drive current of an armature winding has hysteresis characteristics of a predetermined width across a zero-point.

According to the inventions of the above-described claims 38 to 42, performing current detection of each armature winding of an unconnected brushless motor, having a rotor in which permanent magnets are allocated, and a stator in which a plurality (N number) of phases of armature windings are independently arranged without mutual interconnection, by individually sensing a current of each armature winding by current sensing means provided either on a power-side or a ground-side of inverter circuits individually connected to both ends of each armature winding enables adjustment of timings of performing A/D conversion of sensed currents, which in turn allows an advantage to be gained in that current values which take approximate absolute values without including current direction information may be sensed, and current-sensing accuracy may be improved by reducing dynamic ranges and by reducing bit rates of current sensed values.

A drive control device for an unconnected motor according to claim 43 is characterized by comprising: an unconnected brushless motor having a rotor in which permanent magnets are allocated, and a stator in which a plurality (N number) of phases of armature windings are independently arranged without mutual interconnection to oppose the rotor; inverter circuits individually connected to both ends of each armature winding, which supply a drive signal to each armature winding; a drive control section which drive-controls the inverter circuits; an abnormality detection section which respectively detects current/voltage abnormalities of each armature winding; and an abnormal-time control section which drives the unconnected brushless motor while suppressing braking force generated by the unconnected brushless motor when a current/voltage abnormality is sensed in one of the armature windings by the abnormality detection section.

In addition, a drive control device for an unconnected motor according to claim 44 is characterized by comprising: an unconnected brushless motor having a rotor in which permanent magnets are allocated, and a stator in which a plurality (N number) of phases of armature windings are independently arranged without mutual interconnection to oppose the rotor; inverter circuits individually connected to both ends of each armature winding, which supply a drive signal to each armature winding; a drive control section which drive-controls the inverter circuits; an abnormality detection section which respectively detects current/voltage abnormalities of each armature winding; an abnormal-time control section which drives the unconnected brushless motor while suppressing braking force generated by the unconnected brushless motor when a current/voltage abnormality is sensed in one of the armature windings by the abnormality detection section; a rotational velocity sensing section which senses a rotational velocity of the unconnected brushless motor; and a motor velocity suppression section which suppresses the rotational velocity of the unconnected brushless motor when the motor rotational velocity sensed by the rotational velocity sensing section is greater than or equal to a set velocity, in the event that a current/voltage abnormality is sensed in one of the armature windings by the abnormality detection circuit.

Furthermore, a drive control device for an unconnected motor according to claim 45 is characterized in that the abnormal-time control section of the invention according to claim 43 or 44 is arranged, in the event that a current/voltage abnormality is sensed in one of the armature windings by the abnormality detection section, to suspend only drive control of a drive element of only an inverter circuit corresponding to the relevant armature winding.

Moreover, a drive control device for an unconnected motor according to claim 46 is characterized in that the abnormality detection section of the invention according to any one of the claims 43 to 45 is arranged to detect an abnormality of a drive element which composes an inverter circuit as well as an abnormality of a motor harness between the relevant inverter circuit and an armature winding of the unconnected brushless motor.

Furthermore, a drive control device of an unconnected motor according to claim 47 is characterized in that the drive control section of the invention according to any one of the claims 43 to 46 is configured to form control signals for the inverter circuits based on a current command value corrected by superimposing a high harmonic component onto a phase current command value for each armature winding of the unconnected motor.

According to the inventions of the above-described claims 43 to 47, since current abnormalities of each armature winding of an unconnected brushless motor, having a rotor in which permanent magnets are allocated and a stator in which a plurality (N number) of phases of armature windings are independently arranged without mutual interconnection, are independently sensed by an abnormality detection circuit, and in the event that a current/voltage abnormality such as a short-to-power or a short-to-ground and the like is sensed in one of the armature windings by the abnormality detection section, an abnormal-time control section drives the unconnected brushless motor while suppressing braking force due to current caused by an induced electromotive force generated by the armature winding at which the current/voltage abnormality has occurred, an advantage may be gained in that drive torque may be outputted even during an occurrence of current/voltage abnormalities.

In addition, since the abnormal-time control section also suppresses rotational velocity of an unconnected brushless motor when the rotational velocity is greater than or equal to a set velocity, an advantage may be gained in that braking force generated by induced electromotive force may be suppressed to secure drive torque.

Furthermore, an advantage may be gained in that, when a current abnormality occurs at one of the armature windings, a pseudo rectangular wave current may be applied to the remaining normal armature windings by superimposing high harmonic components of the second-order, third-order and so on in order to reduce drive torque pulsation.

An electric power steering device according to claim 48 is characterized in that a drive control device of an unconnected motor according to any one of the claims 43 to 47 is used.

In addition, an electric power steering device according to claim 49 is characterized by comprising: a steering torque sensing section which senses a steering torque; an unconnected brushless motor, having a rotor in which permanent magnets are allocated and a stator in which a plurality (N number) of phases of armature windings are independently arranged without mutual interconnection to oppose the rotor, which generates steering assist force for a steering system; inverter circuits individually connected to both ends of each armature winding, which supply a drive signal to each armature winding; a drive control section which drive-controls the inverter circuits based on a steering torque sensed by the steering torque sensing section; an abnormality detection section which respectively detects current/voltage abnormalities of each armature winding; and an abnormal-time control section which drives the unconnected brushless motor while suppressing braking force generated by the unconnected brushless motor when a current/voltage abnormality is sensed in one of the armature windings by the abnormality detection section.

Furthermore, an electric power steering device according to claim 50 is characterized by comprising: a steering torque sensing section which senses a steering torque; an unconnected brushless motor having a rotor in which permanent magnets are allocated and a stator in which a plurality (N number) of phases of armature windings are independently arranged without mutual interconnection to oppose the rotor; inverter circuits individually connected to both ends of each armature winding, which supply a drive signal to each armature winding; a drive control section which drive-controls the inverter circuits based on a steering torque sensed by the steering torque sensing section; an abnormality detection section which respectively detects current/voltage abnormalities of each armature winding; an abnormal-time control section which drives the unconnected brushless motor while suppressing braking force generated by the unconnected brushless motor when a current/voltage abnormality is sensed in one of the armature windings by the abnormality detection section; a rotational velocity sensing section which senses a rotational velocity of the unconnected brushless motor; and a motor velocity suppression section which suppresses the rotational velocity of the unconnected brushless motor when the motor rotational velocity sensed by the rotational velocity sensing section is greater than or equal to a set velocity in the event that a current/voltage abnormality is detected in one of the armature windings by the abnormality detection circuit.

Moreover, an unconnected motor drive control device according to claim 51 is characterized in that the drive control section of the invention according to claim 49 or 50 comprises: a phase current command value computing section which calculates a phase current command value for each armature winding based on the steering torque; a motor current sensing section which senses a phase current of each armature winding; and a current control section which controls a drive current for each armature winding based on the phase current command value and the phase current.

In addition, an electric power steering device according to claim 52 is characterized in that the invention according to claim 51 has an electrical angle sensing circuit which senses electrical angles of the unconnected motor, wherein the phase current command value computing section comprises: a phase current command value calculation section which calculates a phase current command value corresponding to a back emf including a high harmonic component corresponding to each armature winding of the unconnected motor based on the electrical angle; and a phase current target value calculation section which calculates a phase current target value for each armature winding based on the phase current command value and the steering torque sensed value.

According to the inventions of the above-described claims 48 to 52, since steering assist torque may be generated by an unconnected brushless motor and transferred to a steering system even when a current/voltage abnormality occurs at one of the armature windings of the unconnected brushless motor by configuring an electric power steering device using a drive control device for an unconnected motor, an advantage may be gained in that steering assist control may be sustained during an occurrence of a current/voltage abnormality without producing significant fluctuations in steering assist force and without causing significant discomfort.

An electric power steering device according to claim 53 is characterized by comprising: a steering torque sensing section which senses steering torques; an unconnected brushless motor, having a rotor in which permanent magnets are allocated and a stator in which phase coils of a plurality (N number) of phases are independently arranged without mutual interconnection to oppose the rotor, which generates steering assist force for a steering system; inverter circuits individually connected to both ends of each phase coil and supplies a drive signal to each phase coil; a drive control section which drive-controls the inverter circuit based on a steering torque sensed by the steering torque sensing section; and an abnormality detection section which detects abnormalities in a conduction control system including the respective phase coils and the inverters based on a voltage between terminals of each phase coil.

In addition, an electric power steering device according to claim 54 is characterized in that the inverter circuits of the invention according to claim 53 are respectively connected to both ends of each phase coil.

Furthermore, an electric power steering device according to claim 55 is characterized in that the inverter circuits of the invention according to claim 54, connected to both ends of each phase coil, are driven at opposite phases to each other.

Moreover, an electric power steering device according to claim 56 is characterized in that the abnormality detection section of the invention according to any one of the claims 53 to 55 comprises: a voltage addition section which adds voltages developed across phase coils; and an abnormality judgment section which compares the added voltage added by the voltage addition section with a set voltage range based on a power supply voltage supplied to the conduction control system in order to judge whether a short-to-power/short-to-ground has occurred in the conduction control system.

In addition, an electric power steering device according to claim 57 is characterized in that the abnormality detection section of the invention according to any one of the claims 53 to 55 comprises: a voltage addition section which adds voltages developed across each phase coil; a bias circuit which applies a bias voltage of around half of the power supply voltage of the conduction control system at a high impedance to the terminal voltages of both ends of each phase coil; and an abnormality judgment section which compares the added voltage added by the voltage addition section with a set voltage range based on a power supply voltage supplied to the conduction control system in order to judge whether a short-to-power/short-to-ground has occurred in the conduction control system.

Furthermore, an electric power steering device according to claim 58 is characterized in that the abnormality detection section of the invention according to any one of the claims 53 to 55 comprises: a voltage addition section which adds voltages developed across each phase coil; a bias circuit which applies a bias voltage of around half of the power supply voltage of the conduction control system at a high impedance to the terminal voltage of either one of the ends of each phase coil; and an abnormality judgment section which compares the added voltage added by the voltage addition section with a set voltage range based on a power supply voltage supplied to the conduction control system in order to judge whether a short-to-power/short-to-ground fault and an open abnormality has occurred in the conduction control system.

Moreover, an electric power steering device according to claim 59 is characterized in that the abnormality judgment section of the invention according to any one of the claims 56 to 58 is arranged to judge that a short-to-power/short-to-ground fault has occurred when a state in which the added voltage added by the voltage addition section deviates from the set voltage range continues for more than a predetermined period of time.

Additionally, an electric power steering device according to claim 60 is characterized in that the abnormality judgment section of the invention according to claim 59 is arranged to calculate an average value of the added voltages added by the voltage addition section, and to judge whether the average value deviates from the set voltage range.

Furthermore, an electric power steering device according to claim 61 is characterized in that the abnormality judgment section of the invention according to any one of the claims 56 to 58 is arranged to detect a voltage change in the added voltages added by the voltage addition section, and judge that a short-to-power/short-to-ground fault has occurred when a voltage change has occurred.

According to the inventions of the above-described claims 53 to 61, since abnormalities are arranged to be performed at an abnormality detection section based on the voltage developed across each phase coil of an unconnected brushless motor, having a rotor in which permanent magnets are allocated and a stator in which a plurality (N number) of phase coils are independently arranged without mutual interconnection, by using an added voltage of voltages respectively developed across the phase coils as judgment criteria at the abnormality judgment section, an advantage may be gained in that abnormality judgment processing may be performed with a fewer number of A/D converters and may also be simplified.

In addition, by providing a bias circuit for applying a bias voltage to voltages developed across phase coils, an advantage may be gained in that an initial diagnosis in a state in which driving of an inverter circuit has been suspended may be performed accurately.

Furthermore, by applying bias voltage from bias circuit to only one of the voltages developed across a phase coil, an advantage may be gained in that open fault may be judged in addition to short-to-power and short-to-ground faults.

Brief Description of the Drawings

Figure 1 is a system configuration diagram showing a first embodiment in a case in which the present invention is applied to an electric power steering device;

Figure 2 is a characteristic diagram showing an output characteristic of steering torque sensed values outputted from a steering torque sensor;

Figure 3 is a cross-sectional diagram showing an unconnected motor;

Figure 4 is a perspective view showing a rotor of Figure 3;

Figure 5 is a block diagram showing a drive circuit of an unconnected motor;

Figure 6 is a circuit diagram showing an equivalent circuit of an unconnected motor;

Figure 7 is a block diagram showing a drive control circuit which drives an inverter of an unconnected motor;

Figures 8A to 8D are characteristic line diagrams showing induced voltages and motor currents of an unconnected motor;

Figure 9 is a circuit diagram showing an equivalent circuit of a conventional wye-connection motor;

Figures 10A and 10B are characteristic line diagrams showing terminal voltages of an unconnected motor and terminal voltages of a wye-connection motor;

Figures 11A and 11B are characteristic line diagrams showing voltages developed across coils in an unconnected motor and voltages developed across coils in a wye-connection motor;

Figure 12 is a circuit diagram showing an equivalent circuit of a conventional delta-connection motor;

Figures 13A and 13B are characteristic line diagrams showing coil currents of an unconnected motor and phase currents and coil currents of a delta-connection motor;

Figure 14 is a characteristic line diagram showing motor characteristics in a case in which a motor constant of an unconnected motor is set to a motor constant of a wye-connection motor;

Figure 15 is a characteristic line diagram showing motor characteristics in a case in which a motor constant of an unconnected motor is set to a motor constant of a delta-connection motor;

Figure 16 is a characteristic line diagram showing motor characteristics in a case in which a motor constant of an unconnected motor is set to the midpoint of motor constants of a wye-connection motor and a delta-connection motor;

Figure 17 is a block diagram showing a second embodiment of the present invention;

Figure 18 is a block diagram showing a concrete configuration of a d-axis command current calculation section of Figure 17;

Figure 19 is a block diagram showing a third embodiment of the present invention;

Figure 20 is a block diagram showing a fourth embodiment of the present invention;

Figure 21 is a circuit diagram showing another example of an inverter circuit;

Figure 22 is a block diagram showing a drive control circuit, which drives an inverter of an unconnected motor, depicting a fifth embodiment of the present invention;

Figure 23 is a circuit diagram showing a drive state of an excitation coil of an unconnected motor applicable to the fifth embodiment;

Figure 24 is a characteristic diagram showing characteristics of terminal voltages and voltages between terminals of an excitation coil applicable to the fifth embodiment;

Figure 25 is a block diagram showing a drive circuit of an unconnected motor which depicts a sixth embodiment of the present invention;

Figures 26A to 26C are block diagrams and a pulse signal waveform diagram showing a concrete configuration of a signal selection circuit applicable to the sixth embodiment;

Figure 27 is a block diagram showing a state equivalent to wye-connection to be used for explaining operations of the sixth embodiment;

Figure 28 is a characteristic line diagram showing characteristics of a voltage developed across each excitation coil in the state shown in Figure 27;

Figure 29 is a block diagram of a drive control circuit depicting a seventh embodiment of the present invention;

Figure 30 is a characteristic line diagram showing a gain calculation map used for gain computation;

Figure 31 is an explanatory diagram used for explaining a terminal voltage and a voltage between terminals of an excitation coil;

Figure 32 is an explanatory diagram showing terminal voltage waveforms and waveforms of voltages between terminals in a case in which a gain K is changed;

Figure 33 is a block diagram showing a variation of the seventh embodiment;

Figure 34 is a system configuration diagram showing an eighth embodiment in a case in which the present invention is applied to an electric power steering device;

Figure 35 is a block diagram showing a drive circuit of an unconnected motor applicable to the eighth embodiment;

Figure 36 is a flowchart showing an example of a steering assist control processing procedure executed by a central processing unit according to the eighth embodiment;

Figure 37 is a characteristic line diagram showing a steering assist command value calculation map;

Figures 38A to 38C are characteristic line diagrams showing a phase current command value calculation map;

Figure 39 is a flowchart showing an example of a current sensing processing procedure executed by a central processing unit of a microcomputer according to the eighth embodiment;

Figure 40 is a time chart used for explaining current sensing processing when duty command value is at 50%;

Figure 41 is a time chart used for explaining current sensing processing when duty command value is over 50%;

Figure 42 is an explanatory diagram showing a current direction in an inverter circuit when duty command value is over 50%;

Figure 43 is a time chart used for explaining current sensing processing when duty command value is under 50%;

Figure 44 is an explanatory diagram showing a current direction in an inverter circuit when duty command value is under 50%;

Figure 45 is an explanatory diagram showing hysteresis characteristics of trigger timings of motor current A/D conversion processing based on duty command value;

Figures 46A to 46C are time charts showing motor current waveforms and back emf waveforms;

Figure 47 is a circuit diagram showing an equivalent circuit of a conventional wye-connection motor;

Figures 48A and 48B are characteristic line diagrams showing terminal voltages of an unconnected motor and terminal voltages of a wye-connection motor;

Figures 49A and 49B are characteristic line diagrams showing voltages developed across coils in an unconnected motor and voltages developed across coils in a wye-connection motor;

Figure 50 is an explanatory diagram showing hysteresis characteristics of trigger timings of motor current A/D conversion processing based on digital motor current;

Figure 51 is a flowchart showing another example of a current sensing processing procedure executed by a central processing unit of a microcomputer according to the eighth embodiment;

Figure 52 is a block diagram showing a conventional example;

Figure 53 is a block diagram showing a drive circuit of an unconnected motor applicable to a ninth embodiment of the present invention;

Figure 54 is a block diagram showing an abnormality detecting circuit of an unconnected motor applicable to the ninth embodiment of the present invention;

Figure 55 is a time chart used for explaining operations of the abnormality detecting circuit when an inverter circuit is in a normal state according to the ninth embodiment;

Figure 56 is a time chart used for explaining operations of the abnormality detecting circuit when the inverter circuit is in an on-abnormality state according to the ninth embodiment;

Figure 57 is a flowchart showing an example of a steering assist control processing procedure executed by a microcomputer according to the ninth embodiment;

Figure 58 is a flowchart showing an example of an abnormality detection processing procedure executed by a microcomputer according to the ninth embodiment;

Figures 59A and 59B are time charts showing phase currents and torques at a low-speed steering region according to the ninth embodiment;

Figures 60A and 60B are time charts showing phase currents and torques at a high-speed steering region according to the ninth embodiment;

Figure 61 is a circuit diagram showing another example of an inverter circuit;

Figure 62 is a block diagram showing a tenth embodiment of the present invention; and

Figure 63 is a block diagram showing an eleventh embodiment of the present invention.


Best Mode for Carrying Out the Invention

Embodiments of the present invention will now be described with reference to the drawings.

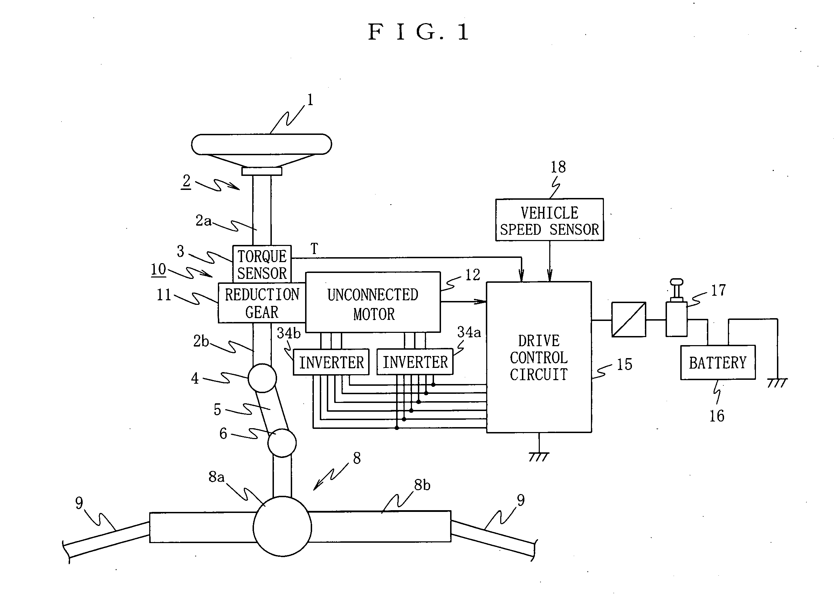

Figure 1 is an overall configuration diagram showing an embodiment in a case in which the present invention is applied to an electric power steering device, wherein reference numeral 1 denotes a steering wheel. Steering force affected by a driver to the steering wheel 1 is transferred to a steering shaft 2 having an input axis 2a and an output axis 2b. One end of the input axis 2a of the steering shaft 2 is connected to a steering wheel 1, while the other end is connected to one end of the output axis 2b via a steering torque sensor 3 which is steering torque detection means.

Steering force transferred to the output axis 2b is transferred to a lower shaft 5 via a universal joint 4, and is further transferred to a pinion shaft 7 via a universal joint 6. Steering force transferred to the pinion shaft 7 is transferred to a tie rod 9 via a steering gear 8 to turn a steering tire, not shown. The steering gear 8 has a rack and pinion configuration having a pinion 8a connected to the pinion shaft 7 and a rack 8b which meshes with the pinion 8b, and converts rotational movement transferred to the pinion 8a into linear movement by the rack 8b.

A steering assist mechanism 10 which transfers steering assist force to the output axis 2b of the steering shaft 2 is connected to the output axis 2b. The steering assist mechanism 10 comprises a reduction gear 11 connected to the output axis 2b, and an unconnected motor 12, connected to the reduction gear 10 as an electrical motor which generates steering assist force.

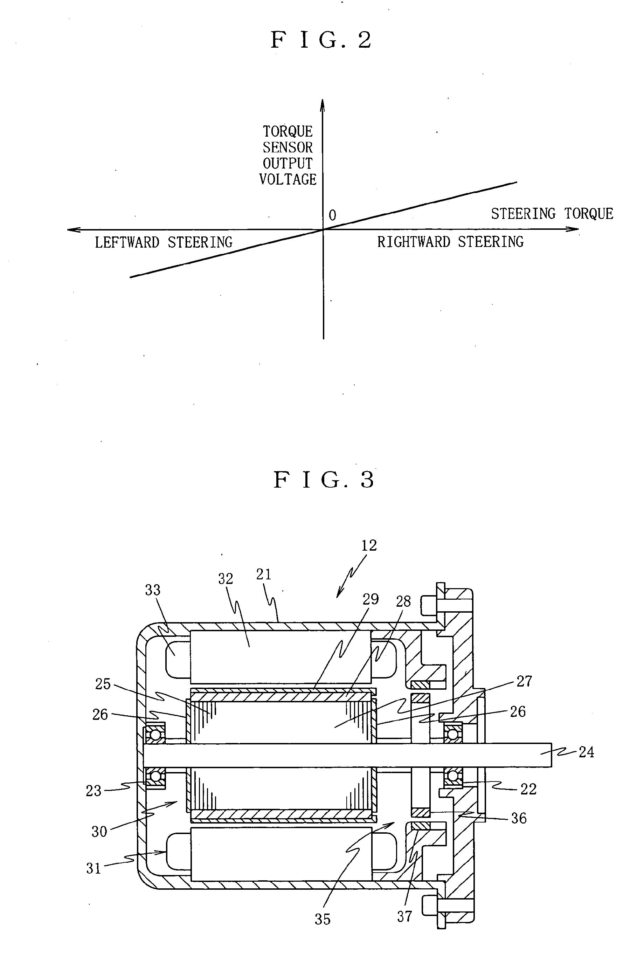

The steering torque sensor 3 senses steering torque applied to the steering wheel 1 and transferred to the input axis 2a, and is configured, for instance, so as to convert steering torque to deflection angle displacement of a torsion bar, not shown, inserted between the input axis 2a and the output axis 2b, and to detect the deflection angle displacement using a potentiometer. As shown in Figure 2, the steering torque sensor 3 is configured to output a torque sensed value T which takes a value of: a predetermined neutral voltage $V_0$ when the inputted steering torque is zero; a voltage which increases from the neutral voltage $V_0$ according to the increase in steering torque when a right turn is made from this state; and a voltage which decreases from the neutral voltage $V_0$ according to the increase in steering torque when a left turn is made from the zero state.

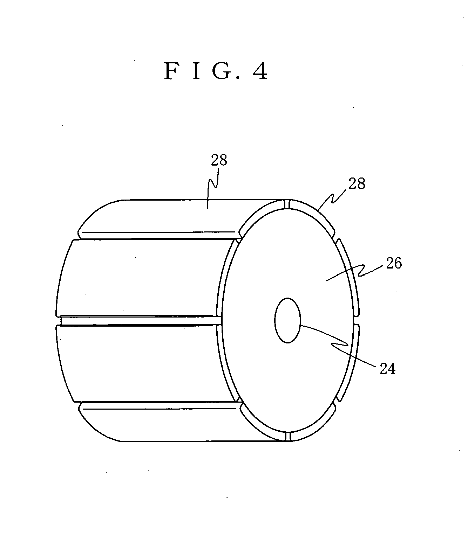

In addition, as shown in Figure 3, a rotary shaft 24 of the unconnected motor 12 is rotatably supported by a housing 21 via a pair of bearings 22 and 23. A rotor core 27, formed by laminating a plurality of disk-shaped magnetic steel sheets 25 and 26, is mounted around the rotary shaft 24 between the pair of bearings 22 and 23. A rotor magnet 28 is fixed on an outer circumferential surface of the rotor core 27. For the rotor magnet 28, a segment magnet is used as a permanent magnet for generating a magnetic field. Additionally, as shown in Figure 4, a cylindrical magnet cover 29, which has a flange section 29a formed at one end thereof which contacts an edge face of the rotor magnet 28, is provided on the outside of the rotor magnet 18 for preventing scattering and misalignment of the rotor magnet 28. The rotary shaft 24, the rotor core 27, the rotor magnet 28 and the magnet cover 29 configure a rotor 20.

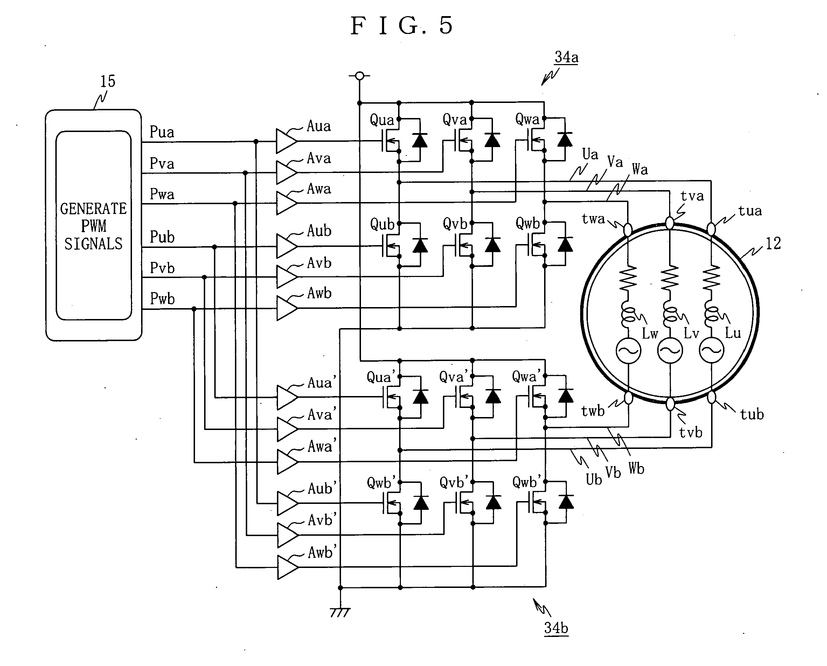

A stator 31 is allocated inside the housing 21 so as to oppose the rotor 20 in a radial direction. The stator 31 comprises a toroidal stator core 32 fixed to an inner circumferential surface of the housing 21, and an excitation coil 33 wound around the stator core 32 as an armature winding. As shown in Figure 5, the excitation coil 33 is composed of, for instance, three phase excitation coils Lu, Lv and Lw which are independently wound without mutual interconnection and are arranged in an unconnected-type (open type) brushless motor wiring. A pair of inverter circuits 34a and 34b is connected between both ends of each excitation coil Lu, Lv and Lw, and drive currents Iu, Iv and Iw are individually supplied thereto.

As shown in Figure 5, the inverter circuit 34a is configured so that switching elements Qua, Qub, Qva, Qvb, and Qwa, Qwb, composed of N-channel MOSFETs serially connected so as to correspond to the excitation coils Lu, Lv and Lw, are connected in parallel. Connection points of the switching elements Qua, Qub, connection points of the switching elements Qva, Qvb, and the connection points of the switching elements Qwa and Qwb are respectively connected to one of the terminals tua, tva and twa of the exciting windings Lu, Lv and Lw.

As is the case with the inverter circuit 34a, the inverter circuit 34b is configured so that switching elements Qua', Qub', Qva', Qvb', and Qwa', Qwb', composed of N-channel MOSFETs serially connected so as to correspond to the excitation coils Lu, Lv and Lw, are connected in parallel. Connection points of the switching elements Qua', Qub', connection points of the switching elements Qva', Qvb', and the connection points of the switching elements Qwa' and Qwb' are respectively connected to the other terminals tub, tvb and twb of the exciting windings Lu, Lv and Lw.

PWM (pulse width modulation) signals Pua, Pva and Pwa, outputted from a drive control circuit 15 to be described later, are supplied to gates of switching elements Qua, Qva, and Qwa which compose an upper arm of the inverter circuit 34a via amplifying circuits Aua, Ava and Awa, while PWM (pulse width modulation) signals Pub, Pvb and Pwb, outputted from the drive control circuit 15, to be described later, are supplied to gates of switching elements Qub, Qvb, and Qwb which compose an lower arm of the inverter circuit 34a via amplifying circuits Aub, Avb and Awb.

In a similar manner, PWM (pulse width modulation) signals Pub, Pvb and Pwb, outputted from the drive control circuit 15 to be described later, are supplied to gates of switching elements Qua', Qva', and Qwa' which compose an upper arm of the inverter circuit 34b via amplifying circuits Aua', Ava' and Awa', while PWM (pulse width modulation) signals Pua, Pva and Pwa, outputted from the drive control circuit 15 to be described later, are supplied to gates of switching elements Qub', Qvb', and Qwb' which compose an lower arm of the inverter circuit 34b via amplifying circuits Aub', Avb' and Awb'.

In summary, a pair of inverter circuits 34a and 34b is driven by PWM signals Pua to Pwa and Pub to Pwb, which number twice as many as the N-number phase of excitation coils, outputted from the drive control circuit 15, and as a result, the inverter circuits 34a and 34b are driven in antiphase.

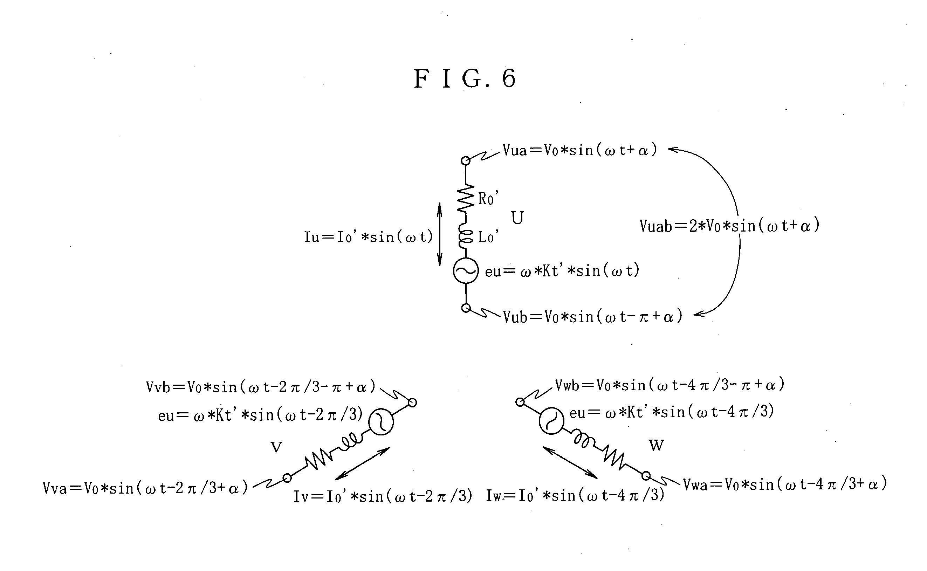

As for the equivalent circuit of each excitation coil Lu, Lv and Lw, as shown in Figure 6, the equivalent circuit of the excitation coil Lu is configured so that a resistor $R_0'$, an inductance $L_0'$, and a back emf eu (= $\omega \times Kt' \times \sin(\omega t)$) are serially arranged between terminals tua and tub, wherein the terminal voltage Vua of terminal tua is expressed as Vua = $V_0 \times \sin(\omega t + \alpha)$, the terminal voltage Vub of terminal tub is expressed as Vub = $V_0 \times \sin(\omega t - \pi + \alpha)$, the voltage between the terminals Vuab is expressed as Vuab = $2 \times V_0 \times \sin(\omega t + \alpha)$, and the phase current Iu is expressed as Iu = $I_0' \times \sin(\omega t)$.

In a similar manner, the equivalent circuit of the excitation coil Lv is configured so that a resistor $R_0'$, an inductance $L_0'$, and a back emf eu (= $\omega \times Kt' \times \sin(\omega t - 2\pi/3)$) are serially arranged between terminals tva and tvb, wherein the terminal voltage Vva of terminal tva is expressed as Vva = $V_0 \times \sin(\omega t - 2\pi/3 + \alpha)$, the terminal voltage Vvb of terminal tub is expressed as Vvb = $V_0 \times \sin(\omega t - 2\pi/3 - \pi + \alpha)$, the voltage between the terminals Vvab is expressed as Vvab = $2 \times V_0 \times \sin(\omega t - 2\pi/3 + \alpha)$, and the phase current Iv is expressed as Iv = $I_0' \times \sin(\omega t - 2\pi/3)$.

In a similar manner, the equivalent circuit of the excitation coil Lw is configured so that a resistor $R_0'$, an inductance $L_0'$, and a back emf eu (= $\omega \times Kt' \times \sin(\omega t - 4\pi/3)$) are serially arranged between terminals twa and twb, wherein the terminal voltage Vwa of terminal twa is expressed as Vwa = $V_0 \times \sin(\omega t - 4\pi/3 + \alpha)$, the terminal voltage Vwb of terminal tub is expressed as Vwb = $V_0 \times \sin(\omega t - 4\pi/3 - \pi + \alpha)$, the voltage between the terminals Vwab is expressed as Vwab = $2 \times V_0 \times \sin(\omega t - 4\pi/3 + \alpha)$, and the phase current Iw is expressed as Iw = $I_0' \times \sin(\omega t - 4\pi/3)$.

The unconnected three-phase brushless motor is configured so that a motor constant is set to any of a motor constant of a conventional wye-connection motor, a motor constant of a conventional delta-connection motor, or a unique motor constant capable of fulfilling performance requirements. Magnetization of the magnet of the rotor 20 and the winding method of the winding of the stator 31 are set so that the induced voltage waveform of the unconnected motor 12 assumes a pseudo rectangular wave formed by superimposing on a sinusoidal wave its third and fifth harmonic wave as described later.

In addition, a phase sensing section 35 of the rotor 20 is positioned in the vicinity of one of the bearings 22. The phase sensing section 35 comprises a toroidal phase sensing permanent magnet 36 attached to the rotary shaft 24, and a phase sensing element 37 which opposes the permanent magnet 36 and is fixed to a housing 21 side. Since the motor 12 is a brushless motor which does not include mechanical commutators (brush and commutator), the phase sensing section 35 senses a phase of the rotor 20, and energizes the excitation coil 33 according to phase under the control of the drive circuit 15. Furthermore, a resolver or an encoder and the like may also be used as the phase sensing section.

A torque sensed value T outputted from the steering torque sensor 3 is input to the drive control circuit 15, as shown in Figure 1. In addition to the torque sensed value T, a vehicle speed sensed value V sensed by the vehicle speed sensor 16, drive currents Iu to Iw, which flow through each excitation coil Lu to Lw of the unconnected motor 12, sensed by motor current sensing sections 51u to 51w, and a phase sensing signal of the rotor 20 sensed by the phase sensing section 34 are inputted to the drive control circuit 15.

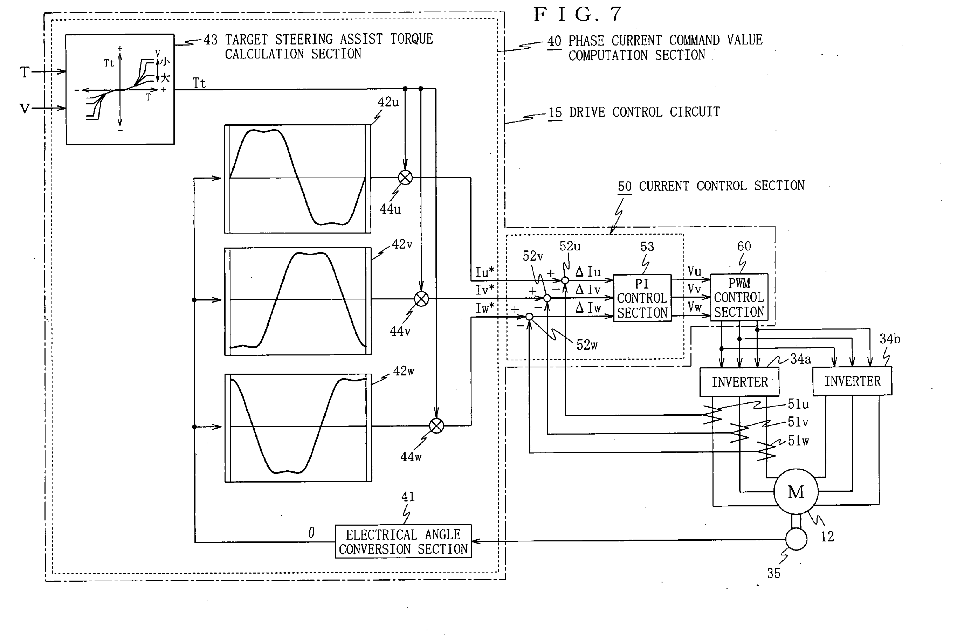

As shown in Figure 7, the drive control circuit 15 comprises: a phase current command value computing section 40 which computes phase current command values Iu*, Iv* and Iw* for each armature winding of the unconnected motor 12; a current control section 50 which performs current feedback control based on each of the phase current command values Iu*, Iv* and Iw* from the phase current command value computing section 40 and motor phase currents Iu, Iv and Iw from the current sensing circuits 51u, 51v and 51w; and a PWM control section 60 which outputs PWM signals for driving the inverters 34a and 34b based on each phase command voltage Vu, Vv and Vw outputted from the current control section 50.

The phase current command value computing section 40 comprises: an electrical angle conversion section 41 which converts a phase of the rotor 20 sensed by the phase sensing section 35 into an electrical angle θ; phase current target value calculation sections 42u, 42v and 42w which calculate phase current target values Iut, Ivt and Iwt which correspond to each armature winding Lu, Lv and Lw of the unconnected motor 12 based on the electrical angle θ outputted from the electrical angle conversion section 41; a target assist steering torque calculation section 43 which calculates a target assist steering torque Tt based on a steering torque T sensed by the steering torque sensor 3 and a vehicle speed sensed value V sensed by the vehicle speed sensor 18; and multipliers 44u, 44v and 44w which multiply phase current target values Iut, Ivt and Iwt outputted from the phase current target value calculation sections 42u, 42v and 42w by the target assist steering torque Tt calculated by the target assist steering torque calculation section 43.

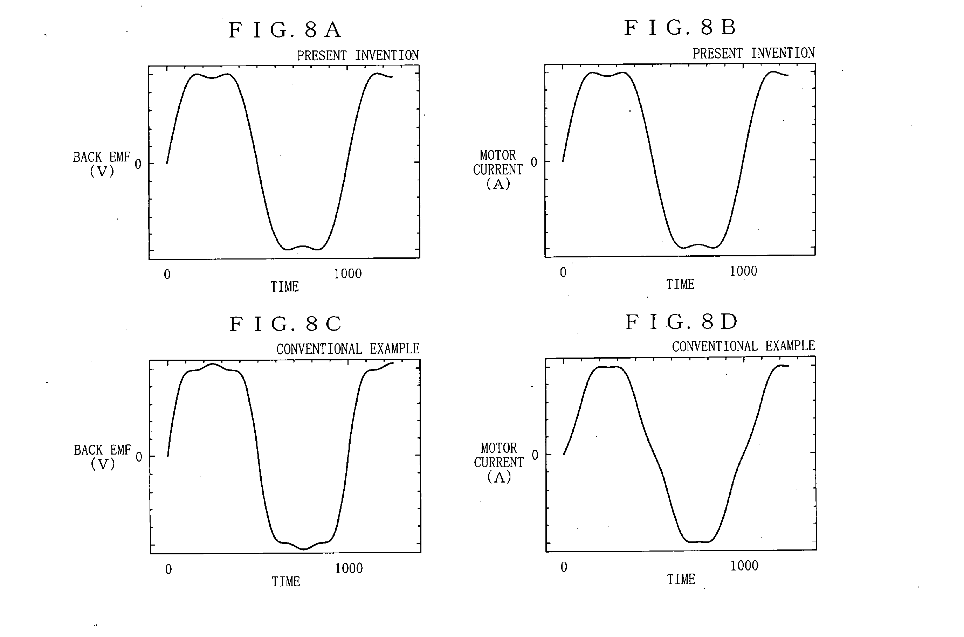

The phase current target value calculation section 42u has a phase current target value calculation storage table which stores a phase current target value, shown in Figure 8B, which is given the same waveform as the induced voltage waveform of the armature windings Lu to Lw of the unconnected motor 12, which is formed as a trapezoidal wave-like pseudo rectangular wave with rounded corners by superimposing on a sinusoidal wave shown in Figure 8A third and fifth harmonic waves, together with the electrical angle θ. The phase current target value calculation section 42u calculates a relevant phase current target value Iut based on the electrical angle θ inputted from the electrical angle conversion section 41 by referencing the storage table, and outputs the calculated value to the multiplier 44u.

In a similar manner, the phase current target value calculation sections 42v and 42w each have storage tables which respectively store phase current target value waveforms that are 120 and 240 degrees out of phase in relation to the waveform stored in the storage table of the phase current target value calculation section 42u, together with the electrical angle θ, and calculate relevant phase current target values Ivt and Iwt based on the electrical angle θ inputted from the electrical angle conversion section 41 by referencing the storage tables, and respectively output the calculated values to the multipliers 44v and 44w.

Additionally, the target assist steering torque calculation section 43 has a target assist steering torque calculation storage table which stores characteristic line diagrams, which uses steering torque T as its horizontal axis and target assist steering torque Tt as its vertical axis, and uses vehicle speed sensed value V as a parameter, as shown in Figure 7. The target assist steering torque calculation section 43 calculates a target assist steering torque Tt based on a steering torque T inputted from the steering torque sensor 3 and a vehicle speed sensed value V inputted from the vehicle speed sensor 1 by referencing the target assist steering torque calculation storage table, and supplies the calculated target assist steering torque Tt to the multipliers 44u to 44w.

For calculating the phase current target values Iut to Iwt in which sinusoidal waves are superimposed by its third and fifth harmonic waves, a target assist steering torque Tt and an electrical angle θ of the unconnected motor 12 are used as input. Phase current target values Iut to Iwt are computed by internal arithmetic based on these inputted values so as to satisfy an output equation of (output = torque × rotational velocity = current × voltage).

While it is necessary to superimpose a third harmonic wave onto a sinusoidal wave in order to maximize the performance of an unconnected motor, a three-phase motor is incapable of applying a current of a 3n-order component under conventional vector control. Similarly, a conventional vector control having two-phase to three-phase transformation is incapable of computing a current command value of a 3n-phase order component.

In this light, since an output of a motor may be expressed as: torque × rotational velocity = current × voltage, a pseudo rectangular wave formed by superimposing a sinusoidal wave of a back emf waveform and a current waveform with a third harmonic wave and a fifth harmonic wave may be expressed as follows.

```
Eu = E1 * sin(θ) + E3 * sin(3 * θ) + E5 * sin(5 * θ)
```

$$Ev = E1 * \sin(\theta - 2/3 * PI) + E3 * \sin(3 * (\theta - 2/3*PI)) + E5 * \sin(5 * (\theta - 2/3 * PI))$$

$$Ew = E1 * \sin(\theta + 2/3 * PI) + E3 * \sin(3 * (\theta + 2/3 * PI)) + E5 * \sin(5 * (\theta + 2/3 * PI))$$

$$Iu = I1 * \sin(\theta) + I3 * \sin(3 * \theta) + I5 * \sin(5 * \theta)$$

$$Iv = I1 * \sin(\theta - 2/3 * PI) + I3 * \sin(3 * (\theta - 2/3 * PI)) + I5 * \sin(5 * (\theta - 2/3 * PI))$$

$$Iw = I1 * \sin(\theta + 2/3 * PI) + I3 * \sin(3 * (\theta + 2/3 * PI)) + I5 * \sin(5 * (\theta + 2/3 * PI))$$

On the other hand, the output of the motor may be expressed as:

[Formula 1]

$$T\omega = Eu*Iu + Ev*Iv + Ew*Iw$$

$$= \frac{3*E1*I1}{2} + \frac{3*E3*I3}{2} + \frac{3*E5*I5}{2} - \frac{3*E1*I5*\cos(6\theta)}{2} - \frac{3*E3*I3*\cos(6\theta)}{2} - \frac{3*E5*I1*\cos(6\theta)}{2}$$

A constant output value signifies no torque ripples. In other words, if the term containing $\cos(6\theta)$ takes a value of "0", a constant output free of torque ripples may be obtained.
Since a back emf waveform is determined when the motor is designed, first, third and fifth order components E1, E3 and E5 of the back emf are known.
Therefore, a phase current target value without torque ripples may be calculated by determining first, third and fifth order components I1, I3 and I5 of a current so that the term containing $\cos(\theta)$ takes a value of "0" .
While amplitudes of the first, third and fifth order components I1, I3 and I5 of the phase current target value are determined by the target steering torque Tt, a ratio thereof expressed as I1 : I3 : I5 may be obtained in advance according to the condition in that the first, third and fifth order components E1, E3 and E5 of the back emf and the term containing $\cos(6\theta)$ take values of "0".
A concrete example is shown in Figures 8A and 8B, in which a current waveform (b) free of torque ripples has been obtained in advance for a back emf waveform (a).
More specifically, a phase current target value which satisfies E1·E3 + E3·I3 + E5·I1 = 0, which is a condition for making the term containing $\cos(6\theta)$ take the value of "0", is underspecified.
Therefore, a binding condition is applied in that the current waveform and the back emf waveform is the same.
In other words, when I1 = aE1, I3 = aE3, I5 = aE5, aE1·E5 + aE3·E3 + aE5·E1 = 0

$$E3^2 = -2E1 \cdot E5$$

A phase current target value free of torque ripples may be obtained by designing a back emf waveform of a motor to satisfy the above relational expressions and outputting a same current waveform.

Since back emfs E1 to E5 are proportional to a motor rotational velocity ω, an equation of motor output may be expressed as follows:

$$T = K1 \cdot I1 + K3 \cdot I3 + K5 \cdot I5,$$

where K1 to K5 are constants obtained in advance through the above-mentioned procedure. The amplitude of a phase current command value is determined by a target steering torque Tt.

Therefore, a phase current command value of each phase may be calculated by the current command value computing section 40 shown in Figure 7 using a target steering torque Tt and an electrical angle θ as input.

In addition, the current control section 50 comprises: subtracters 52u, 52v and 50w for obtaining each phase current deviation ΔIu, ΔIv and ΔIw by subtracting motor phase currents Iu, Iv and Iw flowing through each excitation coil Lu, Lv and Lw sensed by current sensing circuits 51u, 51v and 51w from current command values Iu*, Iv* and Iw* supplied from the vector control phase command value calculation section 40; and a PI control section 53 which performs proportional-plus-integral control on each obtained phase current deviation ΔIu, ΔIv and ΔIw to calculate command voltages Vu, Vv and Vw.

Furthermore, command voltages Vu, Vv and Vw outputted by the above-mentioned PI control section 53 are inputted to the PWM control section 60 which forms PWM signals Pua, Pva and Pwb with duty ratios corresponding to the command voltages Vu, Vv and Vw, as well as their on/off inverted PWM signals Pub, Pvb and Pwb. By supplying these PWM signals to the inverter circuits 34a and 34b, each phase command current is individually supplied to each excitation coil Lu, Lv and Lw of the unconnected motor 12 by the inverter circuits 34a and 34b to rotationally drive the unconnected motor 12. This causes the unconnected motor 12 to generate a necessary steering assist force according to the steering torque sensed value T sensed by the steering torque sensor 3.

Next, operations of the above-described first embodiment will be explained.

Assume that a vehicle is presently at rest, the unconnected motor 12 is also suspended, the steering wheel 1 has not been steered and the steering torque T sensed by the steering torque sensor 3 takes a value of "0". In this state, since the steering torque T is "0", the target assist steering torque Tt calculated by the target assist steering torque calculation section 43 also takes a value of zero, which is the value supplied to the multipliers 44u to 44w.

At this point, if it is assumed that a phase of the rotor 20 sensed by the phase sensing section 35 of the unconnected motor 12 and supplied to the electrical angle conversion section 41 results in an electrical angle θ of 0 degrees, a phase current target value Iut outputted from the phase current target value calculation section 42u will take a value of "0", a phase current target value Ivt outputted from the phase current target value calculation section 42v lags behind the phase current target value Iut by 120 degrees and therefore will take a value of -Imax, while a phase current target value Iwt outputted from the phase current target value calculation section 42w leads the phase current target value Iut by 120 degrees and therefore will take a value of +Imax.

Next, while the phase current target values Iut, Ivt and Iwt will be supplied to the multipliers 44u, 44v and 44w, since a target assist steering torque Tt of "0" has already been inputted to the multipliers 44u, 44v and 44w as described above, phase current command values Iu*, Iv* and Iw* outputted from the multipliers 44u, 44v and 44w will also take values of "0", which will then be supplied to the current control section 50.

Although phase current sensed value Iu, Iv and Iw of the unconnected motor 12 sensed by the current sensors 51u, 51v and 51w have been inputted to the current control section 50, since the unconnected motor 12 is suspended, the phase current sensed value Iu, Iv and Iw also take values of "0" which will then be supplied to the subtracters 52u, 52v and 52w of the current control section 50.

Therefore, current deviations △Iu, △Iv and ΔIw outputted from the subtracters 52u, 52v and 52w will also take values of "0", the command voltages Vu, Vv and Vw outputted from the PI control section 53 will also take values of "0", the duty ratios of the PWM signals outputted from the PWM control section 60 will take values of 50%, and supply of drive current to the unconnected motor 12 will be suspended, resulting in the unconnected motor 12 retaining its suspended state.

From such a suspended state of the unconnected motor 12 in a stationary state of the vehicle, when the driver performs so-called static steering and steers the steering wheel 1, for instance, to the right, a steering torque T corresponding to the steering torque from the driver is outputted accordingly from the steering torque sensor 3 and supplied to the target assist steering torque calculation section 43. As a result, a relatively large target assist steering torque Tt is outputted from the target steering torque calculation section 43 to the multipliers 44u, 44v and 44w.

At this point, in accordance with the electrical angle θ of the unconnected motor 12, phase current target values Iut, Ivt and Iwt, which are 120 degrees out of phase with each other and are trapezoidal wave-like pseudo rectangular wave with rounded corners, formed by having sinusoidal waves superimposed with third and fifth harmonic waves, are outputted from the phase current target value calculation sections 42u, 42v and 42w to the multipliers 44u, 44v and 44w.

Therefore, the phase current target values Iut, Ivt and Iwt are multiplied by the target assist steering torque Tt at the multipliers 44u, 44v and 44w to calculate phase current command values Iu*, Iv* and Iw* having the target assist steering torque Tt as their amplitudes, which are then supplied to the subtracters 52u, 52v and 52w of the current control section 50.

At this point, since the unconnected motor 12 is suspended, and the phase currents Iu, Iv and Iw outputted from the current sensors 51u, 51v and 51w maintain values of "0", phase current command values Iu*, Iv* and Iw* are outputted from the subtracters 52u, 52v and 52w as current deviations ΔIu, ΔIv and ΔIw to the PI control section 53. Proportional-plus-integral computation is performed at the PI control section 53 to calculate command voltages Vu, Vv and Vw, which are then outputted to the PWM control section 60.

Therefore, phase currents Iu, Iv and Iw, having pseudo phase current waveforms formed by superimposing on a sinusoidal wave its third and fifth harmonic wave, that is equal to an pseudo rectangular wave-like induced voltage waveform created by superimposing on a sinusoidal wave its third and fifth harmonic wave, are supplied from the PWM control section 60 to each armature winding Lu, Lv and Lw. As a result, assist steering force corresponding to the target assist steering torque Tt based on the steering torque T may be generated by the unconnected motor 12, and the assist steering force may be transferred to the steering shaft 2 via the reduction gear 11, enabling the driver to perform light steering.

Since the motor is not a motor in which one end or both ends of excitation coils are mutually connected, as is the case with conventional wye-connection motors or delta-connection motors, but instead is an unconnected motor 12 in which each excitation coil Lu to Lw which form a three-phase brushless motor are independently wound without mutual interconnection, individual conduction control may be performed at each excitation coil Lu to Lw, allowing pseudo rectangular wave currents including third and fifth harmonic waves to be applied without any restrictions. Therefore, as shown in Figure 8B the motor current waveform is able to assume a pseudo rectangular wave with rounded corners that is wide in relation to a sinusoidal wave similar to a back emf waveform.

For this reason, since the output of the unconnected motor 12 may be expressed as: output = current × voltage = torque × rotational velocity, effective value may be significantly increased compared to a case in which a back emf and a drive current of a sinusoidal wave are used, which makes it possible to obtain high-level output as well as a constant output that is free of torque ripples.

In contrast, in the above-described conventional example, although the back emf waveform may be arranged to assume a pseudo rectangular wave approximately similar to that of the present embodiment as shown in Figure 8C, since a third harmonic component cannot be applied to an excitation coil of the motor, the current waveform assumes a narrow pseudo rectangular wave as shown in Figure 8D. The reduced area indicates that the effective value will be reduced compared to that of the present embodiment, which in turn signifies that output will be reduced accordingly.

As seen, according to the first embodiment, both the back emf waveform and the drive current waveform of the excitation coils Lu to Lw of the unconnected motor 20 may be shaped as a pseudo rectangular wave including a third harmonic wave, and the effective value may be increased and a higher output may be obtained. In other words, since the size of a coefficient of a third harmonic wave when performing Fourier series expansion of a pseudo rectangular wave is second only to that of a primary component, maximum efficiency for increasing effective values may be achieved by superimposing a sinusoidal wave with its third harmonic wave, and a high-level output may be obtained.

Additionally, by using the unconnected motor 12, respectively connecting inverter circuits 34a and 34b to both ends of each excitation coil, and reverse-phase-driving the inverter circuits 34a and 34b, the voltage between terminals Vuab, Vvab and Vwab of each excitation coil may be respectively expressed by the formulas (1) to (3) below, as described earlier.

$$Vun = 2 \times V_0 \times \sin(\omega t + \alpha) \qquad \ldots\ldots (1)$$

$$Vvn = 2 \times V_0 \times \sin(\omega t - 2\pi/3 + \alpha) \qquad \ldots\ldots (2)$$

$$Vwn = 2 \times V_0 \times \sin(\omega t - 2\pi/3 + \alpha) \qquad \ldots\ldots (3)$$

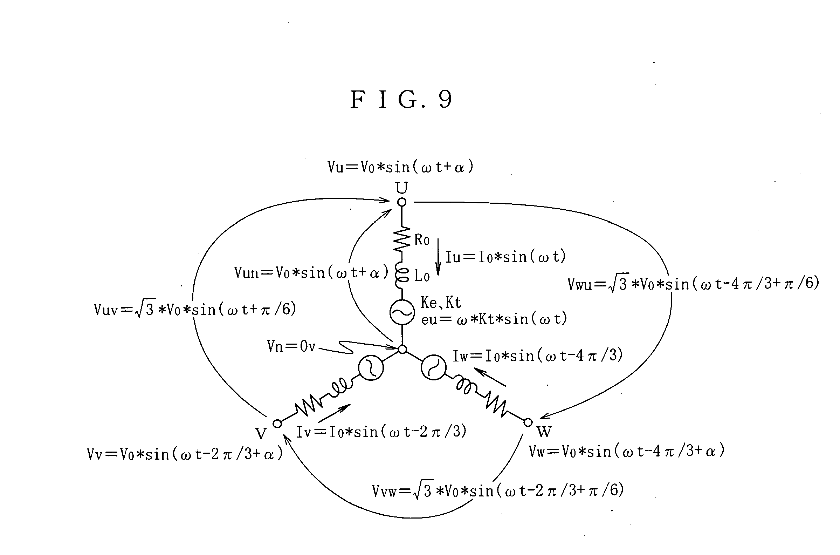

On the other hand, in the case of an equivalent circuit of a similarly configured wye-connection motor, as shown in Figure 9, since a voltage Vn of a neutral point, at which one of the ends of each excitation coil Lu, Lv and Lw are mutually connected, may be expressed as Vn = 0 (V), a voltage between terminals Vun, Vvn and Vwn of each excitation coil Lu, Lv and Lw may be expressed by the following formulas (4) to (6).

$$\text{Vun} = V_0 \times \sin(\omega t + \alpha) \qquad \ldots\ldots \text{(4)}$$

$$\text{Vvn} = V_0 \times \sin(\omega t - 2\pi/3 + \alpha) \qquad \ldots\ldots \text{(5)}$$

$$\text{Vwn} = V_0 \times \sin(\omega t - 2\pi/3 + \alpha) \qquad \ldots\ldots \text{(6)}$$

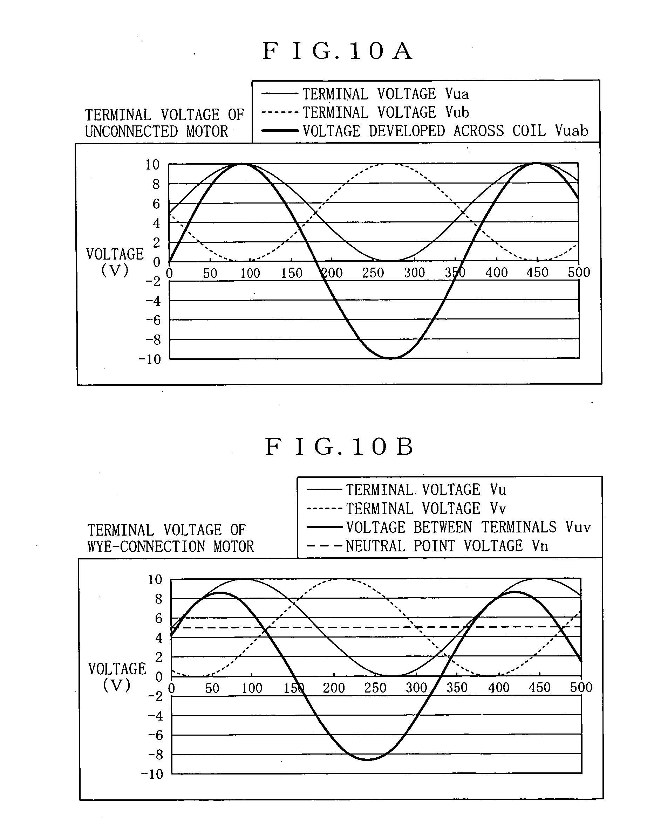

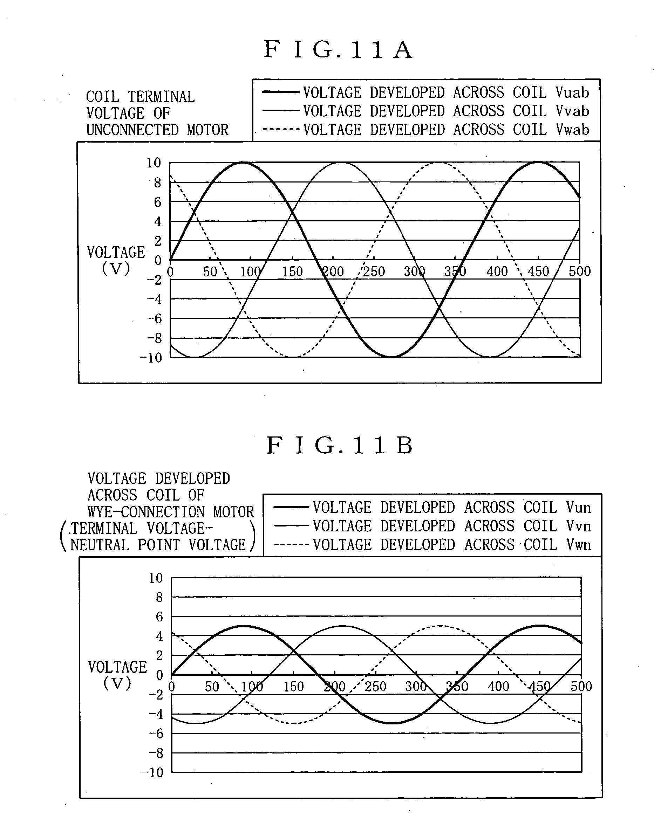

Therefore, taking the example of the excitation coil Lu, terminal voltages Vua, Vub and a voltage between terminals Vuab of the unconnected motor 12 according to the present invention are as shown in Figure 10A, while a terminal voltage Vu, terminal voltage Vv, a voltage between terminals Vuv and a neutral point voltage Vn in the case of a conventional wye-connection motor will be as shown in Figure 10B. On the other hand, voltages between terminals Vuab, Vvab and Vwab of the unconnected motor 12 according to the present invention will be as shown in Figure 11A, while voltages developed across coils Vun, Vvn and Vwn in the case of a conventional wye-connection motor will be as shown in Figure 11B.

As is apparent from Figures 10A and 10B, and 11A and 11B, when comparing voltage magnitudes applicable to both ends of an excitation coil, the unconnected motor 12 is capable of achieving the same effect as in a case in which a wye-connection motor is driven at double the power supply voltage. Therefore, in the event that the battery voltage Vb is the same, since an unconnected motor is capable of improving drive voltage of the excitation coils Lu to Lw, smooth steering may be achieved when abrupt steering is performed on the steering wheel 1 without creating power shortages by generating optimum steering assist force.

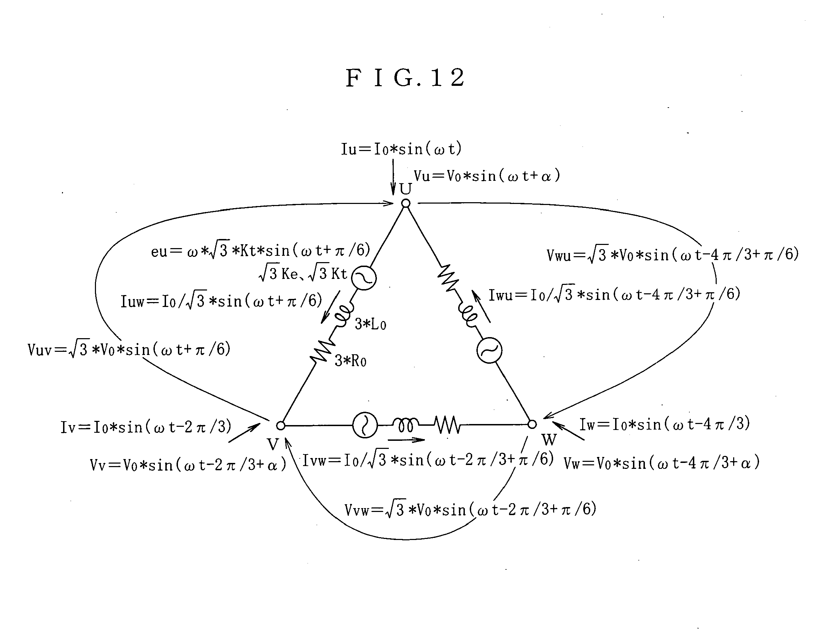

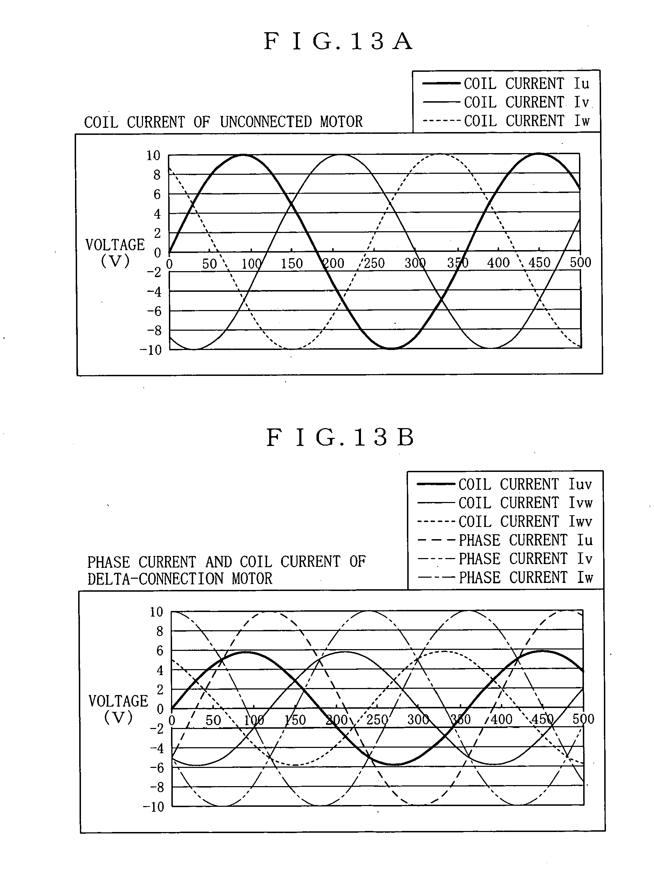

Similarly, in a case of a conventional delta-connection motor, an equivalent circuit thereof will be as shown in Figure 12, wherein voltages between terminals Vuv, Vvw and Vwu are √3 times that of a wye-connection motor, while currents between terminals are reduced to 1/√3. While the coil currents of the excitation coils Lu to Lw of the unconnected motor 12 according to the present invention is able to effectively use a specified current as shown in Figure 13A, the coil currents Iuv, Ivw and Iwu and phase currents Iu, Iv and Iw of the delta-connection motor will be as shown in Figure 13B, wherein each phase current Iu, Iv and Iw is reduced to 1/√3 of the specified current. Therefore, the unconnected motor 12 is capable of achieving the same effects as a case in which a motor current that is √3 times as large is applied to the delta-connection motor. As a result, an unconnected motor is capable of improving coil currents of excitation coils and achieving a higher level of torque.

Therefore, an equivalent exchange of a wye-connection motor and a delta-connection motor may be expressed by a relational expression shown in Table 1 below.

[Table 1]

|  | Torque constant | Coil resistance | Coil inductance |
|---|---|---|---|
| Wye-connection motor | Kt | R | L |
| Δ-connection motor | √3·Kt | 3·R | 3·L |

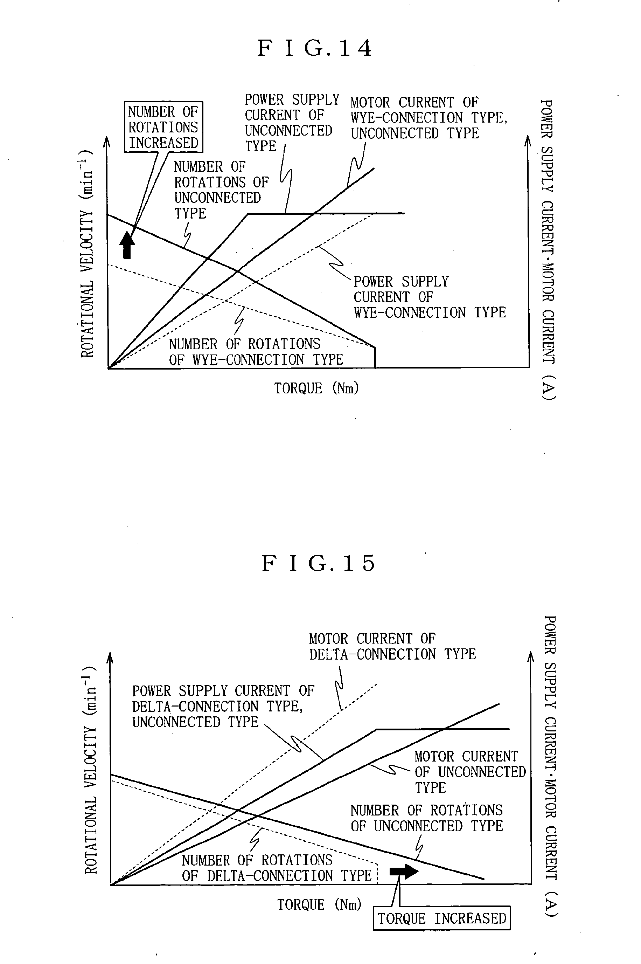

Using this relational expression, motor output and current characteristics in a case where equivalent-exchanged wye-connection and delta-connection motors are changed to an unconnected motor using the motor constant of the wye-connection motor are as shown in Figure 14. As for motor output characteristics, in comparison to the rotational velocity of the wye-connection motor which is indicated by a dotted line, the increment in rotational velocity of the unconnected motor, which is indicated by a full line, increases as torque decreases from a maximum torque regulated by a maximum current, enabling rotational velocity to be improved.

In addition, motor output characteristics in a case where a change is made to an unconnected motor using the motor constant of the delta-connection motor is as shown in Figure 15, wherein the increment in torque in the unconnected motor increases as rotational velocity decreases from a maximum number of rotations in comparison to the torque characteristics of the delta-connection motor which is indicated by a dotted line. Thus, torque may be improved accordingly.

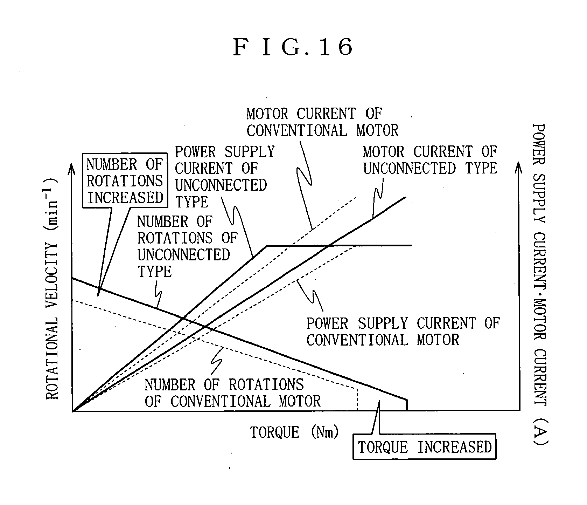

Furthermore, motor output characteristics in a case where a change is made to an unconnected motor using an intermediate motor constant of the wye-connection and delta-connection motors is as shown in Figure 16, wherein both rotational velocity and torque may be improved with the unconnected motor, as indicated by full lines, in comparison with the rotational velocity characteristics of a conventional motor which is indicated by a dotted line.

Therefore, in the event that the unconnected motor 12 is applied to an electric power steering device, required arbitrary motor output characteristics may be obtained by setting a motor constant according to required characteristics.

In addition, as with the case of the first embodiment, by respectively supplying PWM signals Pua to Pwa outputted from the PWM control section 60 to the upper arm section of the inverter circuit 34a and the lower arm section of the inverter circuit 34b, and respectively supplying the remaining PWM signals Pub to Pwb to the lower arm section of the inverter circuit 34a and the upper arm section of the inverter circuit 34b, two inverter circuits 34a and 34b may be driven at mutually reverse polarities by a single drive control circuit 15. This enables simplification and down-sizing of the entire circuit configuration, and allows simplification of components, such as a microcomputer, a digital signal processing device, a digital IC and the like, of the drive control circuit 15.

As described above, with a motor and a drive control device thereof according to the present invention, terminal voltages of the motor will not be saturated even during high-speed rotation of the motor, and control for minimizing torque ripples may be achieved. Therefore, in the event that the present invention is applied to an electric power steering device, abrupt handle steering may be performed in a smooth manner, and a significant advantage may be gained in that a driver will not experience discomfort such as handle vibration and the like.

While the above-mentioned first embodiment described a case in which an induced voltage waveform and a drive current waveform of an unconnected motor assumes the same pseudo rectangular waveform, the present invention is by no means restricted to this case. The same effects may be achieved with an arrangement in which the phase and shape of the induced voltage waveform or the drive current waveform is unchanged and only the amplitude is changed.

In addition, while the above-mentioned first embodiment described a case in which a pseudo rectangular wave is formed by superimposing a sinusoidal wave with its third and fifth harmonic waves, the present invention is not limited to this case, and high harmonic waves of the seventh and higher orders may be superimposed, or any one or a plurality of high harmonic waves among those of a third-order, fifth-order, seventh-order and so on may be combined to be superimposed on a sinusoidal wave.

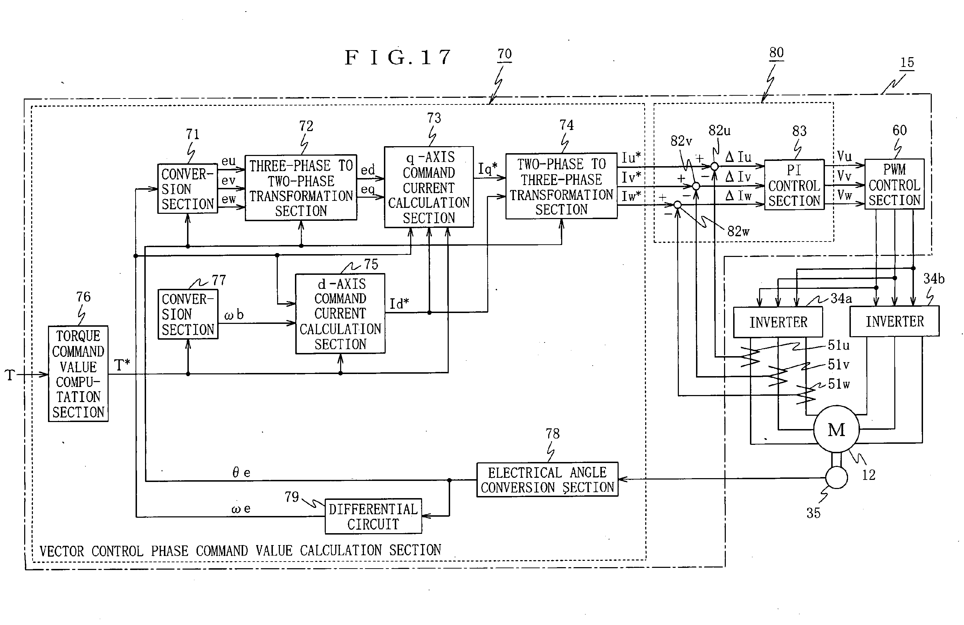

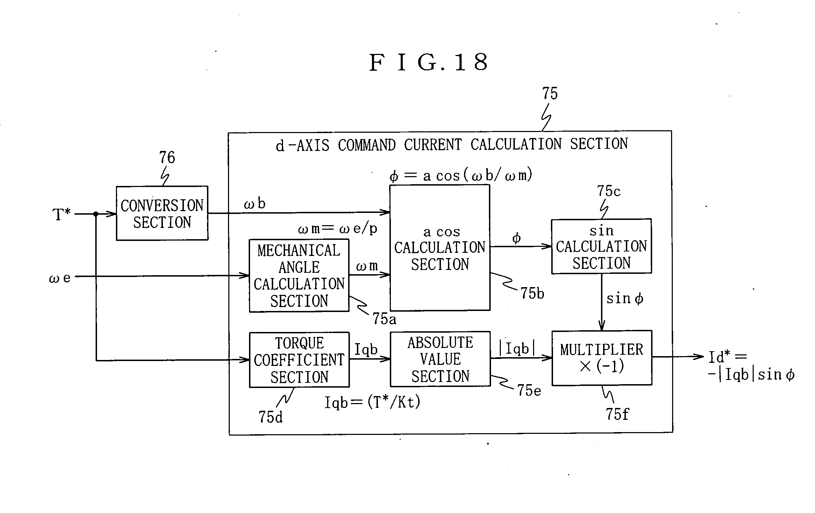

A second embodiment of the present invention will now be described with reference to Figures 17 and 18.

The second embodiment is arranged so that the drive control circuit 15 is controlled through application of pseudo vector control.

More specifically, as shown in Figure 17, the second embodiment is arranged so that the drive control circuit 15 determines current command values of vector control d and q components at a vector control phase command value calculation circuit 70 using the excellent properties of vector control, subsequently converts the current command values into each phase current command value corresponding to each excitation coil Lu to Lw, and closes everything using phase control instead of d and q control at a current control section 80. Therefore, since the theory of vector control is utilized at the stage of calculating current command values, the present control method will be referred to as pseudo vector control (hereinafter abbreviated as "PVC control").

The vector control phase command value calculation circuit 70 comprises: a conversion section 41 as respective phase back emf calculation sections for each excitation coil Lu to Lw; a three-phase to two-phase transformation section 72 as d axis and q axis voltage calculation sections; a q axis command current calculation section 73 which calculates a current command value Iq* of the q axis; a two-phase to three-phase transformation section 44 as respective phase current command value calculation sections; a d axis command current calculation section 75 which calculates a current command value Id* of the d axis; a torque command value computation section 76 which calculates a steering torque command value T* necessary for performing assist steering from a steering torque sensed value T and a vehicle speed sensed value V; and a conversion section 77 which converts a base angular velocity $\omega$b of the unconnected motor 12 based on the steering torque command value T*.

The vector control phase current command value calculation section 70 converts a phase of the rotor 20 sensed by the phase sensing section 35 into an electrical angle $\theta$e at an electrical angle conversion section 78, and differentiates the electrical angle $\theta$e by a differential circuit 79 to calculate an electrical angular velocity $\omega$e. A rotor position sensed signal comprised of the electrical angle $\theta$e and the electrical angular velocity $\omega$e, as well as a steering torque command value T* computed by the torque command value computing section 76, which corresponds to the target assist steering torque calculation section 43 of the above-described first embodiment, are inputted to calculate a phase command value signal through vector control.

More specifically, the electrical angle $\theta$e and the electrical angular velocity $\omega$e of the rotor 20 are inputted to the conversion section 71, wherein respective back emfs eu, ev and ew of each phase are calculated based on a conversion table stored in the conversion section 41. Back emfs eu, ev and ew are trapezoidal wave-like pseudo rectangular waves with rounded corners as shown in Figure 8A, formed by superimposing third and fifth harmonic waves on a sinusoidal wave. The frequency of each Nth (where N = 3, 5) order harmonic wave may be obtained by multiplying the motor electrical angular velocity ωe by N.

When an actual velocity of the motor is ω and the number of magnetic poles is P, the electrical angular velocity of the motor may be expressed as P/2 × ω. Next, back emfs eu, ev and ew are converted into voltages ed and eq of the d axis and q component based on the following formulas (7) and (8) at the three-phase to two-phase transformation section 42, which functions as a d-q voltage calculation section.

[Formula 2]

$$\begin{bmatrix} e\,d \\ e\,q \end{bmatrix} = C\,1 \begin{bmatrix} e\,a \\ e\,b \\ e\,c \end{bmatrix} \quad \cdots\cdots (7)$$

[Formula 3]

$$C\,1 = \frac{2}{3} \begin{bmatrix} -\cos(\theta\,e) & -\cos(\theta\,e - 2\,\pi\diagup 3) & -\cos(\theta\,e + 2\,\pi\diagup 3) \\ \sin(\theta\,e) & \sin(\theta\,e - 2\,\pi\diagup 3) & \sin(\theta\,e + 2\,\pi\diagup 3) \end{bmatrix}$$

$$\cdots\cdots (8)$$

On the other hand, a current command value Id$^*$ of the d axis is calculated at the d axis command current calculation section 75 according to the following formula (9), using base angular velocity ωb from the conversion section 77, electrical angular velocity ωe from the differential circuit 78, and steering torque command value T$^*$ from the torque command value computing section 76 as input. In the formula, Kt denotes a torque coefficient and ωb denotes a base angular velocity of the motor, wherein base angular velocity ωb has been obtained by the conversion section 77 using steering torque sensed value T as input.

$$\mathrm{Id}^* = -|\mathrm{T/Kt}| \cdot \sin(\mathrm{acos}(\omega b/\omega m) \qquad \cdots\cdots (9)$$

In regards to the acos(ωb/ωm) term in the above formula (9), when the rotational velocity of the motor is not high, or in other words, when the mechanical angular velocity ωm of the unconnected motor 12 is lower than the base angular velocity ωb, since ωm < ωb, it follows that acos(ωb/ωm) = 0, hence Id* = 0. However, during high-speed rotation, or in other words, when the mechanical angular velocity ωm becomes greater than the base angular velocity ωb, a value of the current command value Id* appears, and field weakening control is commenced. As expressed by formula (9) described above, since the current command value Id* varies according to the rotational velocity of the unconnected motor 12, an excellent advantage may be gained in that control during high-speed rotation may be performed in a seamless and smooth manner.

Another advantage may be gained regarding the issue of motor terminal voltage saturation. In general, a phase voltage V of a motor may be expressed as:

$$\mathrm{V} = \mathrm{E} + \mathrm{R} \cdot \mathrm{I} + \mathrm{L}(\mathrm{di/dt}) \qquad \cdots\cdots (10)$$

where E denotes back emf, R denotes fixed resistance and L denotes inductance. Back emf E increases as the rotational velocity of the motor increases, and since power supply voltage such as battery voltage is fixed, the voltage range usable for motor control becomes smaller. Base angular velocity ωb is then the angular velocity at which voltage saturation is reached. When voltage saturation occurs, PWM control duty ratio reaches 100%. Follow-up of current command values may no longer be performed beyond this point, and as a result, torque ripple increases.

However, the current command value Id* expressed by the above-described formula (3) has a negative polarity, and the induced voltage component of the current command value Id$^*$ regarding L(di/dt) of the above-described formula (10) will have a polarity that is opposite of back emf E. Therefore, an effect is indicated in which back emf E, which increases as rotational velocity increases, will be reduced by voltage induced by the current command value Id*. As a result, a voltage range in which the motor may be controlled will be expanded due to the effect of the current command value Id* even when the unconnected motor 12 is at high-speed rotation. In other words, field weakening control due to control of the current command value Id* prevents saturation of the motor control voltage, expands controllable range, and prevents torque ripples from increasing even when the motor is at high-speed rotation.

Figure 18 is a block configuration of a circuit system regarding calculation of the above-mentioned current command value Id*. In Figure 18, steering torque command value T* is inputted from the torque command value computing section 76 to the conversion section 77 and a torque coefficient section 75d, while electrical angular velocity ωe of the motor 12 is inputted to a mechanical angle calculation section 45a. The mechanical angle calculation circuit 75a calculates a mechanical angular velocity ωm (= ωe/P) from the electrical angular velocity ωe of the motor, and inputs the same to an acos calculation section 75b. In addition, the conversion section 77 converts the steering torque command value T* to a base angular velocity ωb and inputs the same to the acos calculation section 75b, while the torque coefficient section 75d converts the steering torque command value T* to a coefficient Iqb (=T* / Kt) and inputs the same to an absolute value section 75e. Based on the inputted mechanical angular velocity ωm and base angular velocity ωb, the acos calculation section 75b calculates an advance angle $\Phi$ = acos (ωb/ωm) and inputs the same to a sine calculation section 75c. The sine calculation section 75c calculates sin$\Phi$ from the inputted advance angle $\Phi$ and inputs the same to a multiplier 75f which performs multiplication by a factor of -1. The multiplier 75f multiplies the advance angle $\Phi$ from the sine calculation section 75c by an absolute value |Iqb| from the absolute value section 75e, and multiplies the result by -1 to arrive at a current command value Id*. The current command value Id* is obtained by the following formula (11), which then becomes an output of the d axis command current calculation section 75.

$$\text{Id}^* = -|\text{Iqb}| \times \sin(\text{acos}(\omega b/\omega m)) \qquad \ldots\ldots (11)$$

The current command value Id* calculated according to the above formula (11) is inputted to the q-axis command current calculation section 73 and the two-phase to three-phase transformation section 74.

On the other hand, a current command value Iq* of the q-axis is calculated at the q-axis command current calculation section 73 based on two phase voltages ed and eq, the electrical angular velocity ωe (=ωm × P), and the current command value Id* of the d-axis, using a motor output equation indicated by the formulas (12) and (13) shown below. The motor output equation may be expressed as:

$$\text{T} \times \omega m = 3/2(\text{ed} \times \text{Id} + \text{eq} \times \text{Iq}) \qquad \ldots\ldots (12)$$

Therefore, by substituting Id with Id* and Iq with Iq*, to the formula (12)

$$\text{Iq}^* = 2/3(\text{T} \times \omega m - \text{ed} \times \text{Id}^*)/\text{eq} \qquad (13)$$

is obtained. In addition, the current command value Id* should be substituted by the value calculated by the above-described equation (11).

As expressed by the equation (13) above, since the current command value Iq* is derived from the motor output equation which indicates that motor output is equivalent to power, current command value Iq* may be computed in a simple manner. In addition, an optimum current command value Iq* that is well-balanced in relation to an optimum current command value Id* for achieving the necessary steering torque command value T may be calculated. Therefore, control may be achieved in which saturation of motor terminal voltage may be prevented and torque ripples may be minimized even when the motor is at high-speed rotation.

As described above, the present invention uses current command values Id* and Iq* as input to calculate current command values Iu*, Iv* and Iw* at the two-phase to three-phase transformation section 74, and supplies the calculated current command values Iu*, Iv* and Iw* to the current control section 80.

The current control section 80 comprises:

subtracters 82u, 82v and 82w for obtaining each phase current deviation ΔIu, ΔIv and ΔIw by subtracting motor phase currents Iu, Iv and Iw flowing through each excitation coil Lu, Lv and Lw sensed by current sensing circuits 51u, 51v and 51w from current command values Iu*, Iv* and Iw* supplied from the vector control phase command value calculation section 70; and a PI control section 83 which performs proportional-plus-integral control on each obtained phase current deviation $\Delta Iu$, $\Delta Iv$ and $\Delta Iw$ to calculate command voltages Vu, Vv and Vw.

Furthermore, command voltages Vu, Vv and Vw outputted by the PI control section 83 are supplied to the PWM control section 60 in the same manner as in the first embodiment. The PWM control section 60 forms PWM signals Pua, Pva and Pwb with duty ratios corresponding to the command voltages Vu, Vv and Vw, as well as their on/off inverted PWM signals Pub, Pvb and Pwb, and by supplying these PWM signals to the inverter circuits 34a and 34b, each phase command current is respectively supplied to each excitation coil Lu, Lv and Lw of the unconnected motor 12 by the inverter circuits 34a and 34b to rotationally drive the unconnected motor 12. This causes the unconnected motor 12 to generate a necessary steering assist force according to the steering torque sensed value T sensed by the steering torque sensor 3.

At this point, in regards of each phase current command value Iu, Iv and Iw outputted from the two-phase to three-phase transformation section 74 of the vector control phase command value calculation section 70, while the back emfs eu, ev and ewb of the unconnected motor 12 calculated by the conversion section 71 have trapezoid-shaped pseudo rectangular waves with rounded corners as shown in Figure 8A, formed by superimposing third and fifth harmonic waves on a sinusoidal wave, as described earlier, the presence of the two-phase to three-phase transformation section 74 means that third harmonic components may not be calculated for each phase current command values Iu*, Iv* and Iw* which are formed based on the back emfs eu, ev and ewb. Thus, the phase current command values Iu*, Iv* and Iw* will assume pseudo rectangular waves formed by superimposing a fifth harmonic wave and not a third harmonic wave to a sinusoidal wave, as shown in Figure 8D.

Therefore, compared to the first embodiment described earlier, although the width of the drive current waveform applied to the excitation coils Lu, Lv and Lw of the unconnected motor 12 becomes narrower and the effective value will slightly decrease, sufficient effective value may be secured to drive the unconnected motor 12. Thus, in the same manner as the above-described first embodiment, the unconnected motor 12 may be rotationally driven at double the power supply voltage of a conventional wye-connection motor by adapting the armature windings of the unconnected motor to wye-connection or delta-connection in order to enable smooth steering without creating power shortages by generating optimum steering assist force when abrupt steering is performed. Alternatively, higher torque may be achieved by applying a motor current that is $\sqrt{3}$ times as large as a conventional delta-connection motor, or both rotational velocity and torque may be improved by changing to an unconnected motor using an intermediate motor constant of the wye-connection and delta-connection motor.

Therefore, in the event that the unconnected motor 12 is applied to an electric power steering device, required arbitrary motor output characteristics may be obtained by setting a motor constant according to required characteristics.

In addition, the second embodiment completely differs from feedback control through d and q control of the conventional art in that feedback control is executed solely by respective phase control. As a result, while problems exist in the conventional art in that nonlinear elements occurring in a U-phase are distributed to the V-phase and W-phase during the process of executing feedback control through conventional d and q control and thereby present accurate control, since the present embodiment performs feedback control on U-phase nonlinear elements only within the U-phase, such elements are not distributed to the V-phase and W-phase and accurate correction control may be achieved.

The use of such PVC control enables control of a motor in a state in which nonlinear elements included in the control are separated into each phase, resulting in motor control with low torque ripple and low noise. Therefore, when applied to an electric power steering device, smooth handle operations with low noise and minimal vibration may be achieved even when the vehicle is parked or during emergency steering.

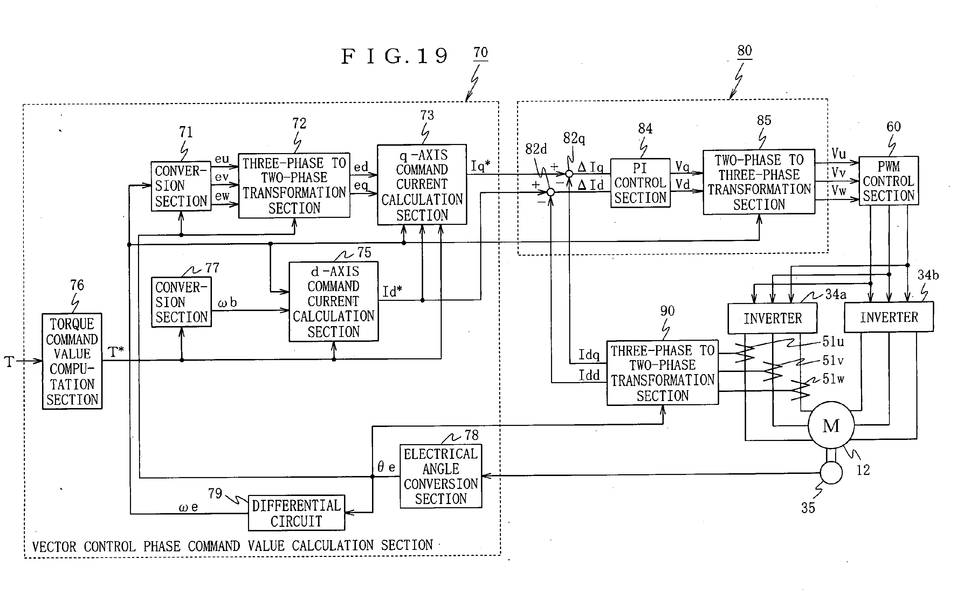

A third embodiment of the present invention will now be described with reference to Figure 19.

The third embodiment has been arranged so that the configuration of the drive control circuit 15 is now entirely performed via vector control.

More specifically, as shown in Figure 19, with the exception of the omission of the two-phase to three-phase transformation section 74 of the vector control phase current command value calculation section 70 of the aforementioned second embodiment, as well as the provision of a three-phase to two-phase transformation section 90 which transforms inputted motor currents Iu, Iv and Iw sensed by current sensors 51u, 51v and 51w, to q-axis and d-axis sensed currents Idq and Idd, and changes made to the current control section 80 as described below, the third embodiment has the same configuration as that shown in Figure 17. Thus, portions corresponding to those shown in Figure 17 are assigned like reference characters and detailed descriptions thereof will be omitted.

The current control section 80 comprises:

subtracters 82q and 82d which calculate current deviations $\Delta Iq$ and $\Delta Id$ between a q-axis command current Iq* outputted from the q-axis command current calculation section 73 of the vector control phase command value calculation section 70 and a d-axis command current Id* outputted from the d-axis command current calculation section 75 which are inputted to one input-side thereof, and sensed currents Idq and Idd outputted from the three-phase to two-phase transformation section 90 which are supplied to the other input-side thereof; a PI control section 84 which performs proportional-plus-integral control on the current deviations ΔIq and ΔId outputted from the subtracters 82q and 82d to calculate command voltages Vq and Vd; and a two-phase to three-phase transformation section 85 which transforms the command voltages Vq and Vd outputted from the PI control section 84 into three-phase command voltages Vu, Vv and Vw. The three-phase command voltages Vu, Vv and Vw outputted from the two-phase to three-phase transformation section 85 are supplied to the PWM control section 60.

According to the third embodiment, in the same manner as in the above-described second embodiment, the vector control phase command value calculation section 70 calculates back emfs eu, ev and ew by superimposing third, fifth and seventh harmonic waves on a sinusoidal wave calculated by the conversion section 71, transforms the back emfs eu, ev and ew at the three-phase to two-phase transformation section 72 into command voltages ed and eq, calculates a q-axis command current Iq* corresponding to a steering torque command value T* at the q-axis command current calculation section 73, and calculates a d-axis command current Id* corresponding to the steering torque command value T* at the d-axis command current calculation section 75.

The q-axis command current Iq* and the d-axis command current Id* are then outputted to the current control section 80. At this current control section 80, a q-axis command current Iq* and a d-axis command current Id* inputted from the vector control phase current command value calculation section 70, and sensed currents Idq and Idd obtained by transforming current sensed values Iu, Iv and Iw sensed by the current sensors 51u, 51v and 51w at the three-phase to two-phase transformation section 90 are supplied to the subtracters 82q and 82u. In turn, current deviations ΔIq and ΔId are outputted from the subtracters 82q and 82u. The current deviations ΔIq and ΔId are proportionally integrated at the PI control section 84 to calculate command voltages Vq and Vd. The command voltages Vq and Vd are transformed at the two-phase to three-phase transformation section 85 to three-phase voltages Vu, Vv and Vw to be supplied to the PWM control section 60. The PWM control section 60 forms PWM signals Pua, Pva and Pwb with duty ratios corresponding to the command voltages Vu, Vv and Vw, as well as their on/off inverted PWM signals Pub, Pvb and Pwb, and by supplying these signals to the inverter circuits 34a and 34b, each phase command current is individually supplied to each excitation coil Lu, Lv and Lw of the unconnected motor 12 by the inverter circuits 34a and 34b to rotationally drive the unconnected motor 12. This causes the unconnected motor 12 to generate a necessary steering assist force according to the steering torque sensed value T sensed by the steering torque sensor 3.

Therefore, with the above-described third embodiment, waveforms of the back emfs and drive currents of the excitation coils Lu to Lw of the unconnected motor 12 may be arranged to take the form of pseudo rectangular waves in which a fifth and seventh harmonic wave, but not a third harmonic wave, are superimposed on a sinusoidal wave in a similar manner as in the second embodiment described earlier. As a result, the effective value of the unconnected motor 12 may be improved and a high output may be achieved.

A fourth embodiment of the present invention will now be described with reference to Figure 19.

For the fourth embodiment, the vector control phase current calculation section 70 is omitted, while a drive control circuit of a regular electric power steering device has been applied, and superposition of high harmonic waves is arranged to be performed at the current control section 80.

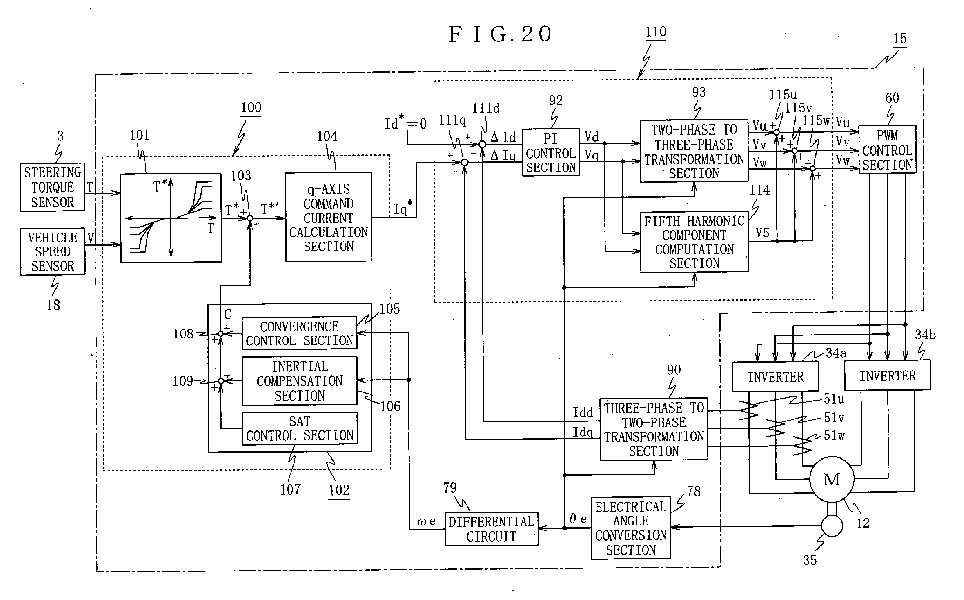

More specifically, the drive control circuit 15 according to the fourth embodiment comprises a current command value computation section 100, a current control section 110, and a PWM control section 60, as shown in Figure 20.

The current command value computation section 100 comprises: a steering assist command value computation section 101 which calculates a steering assist command value T* based on an inputted steering torque sensed value T sensed by the steering torque sensor 3 and an inputted vehicle speed sensed value V sensed by the vehicle speed sensor 18, and using the vehicle speed sensed value V as a parameter by referencing a steering assist command value calculation table composed of characteristic line diagrams indicating a relationship between steering torque sensed value T and steering assist command value T*; a compensation section 102 which calculates various compensation values; an adder 103 which calculates a torque command value T*' by adding to a compensation value C outputted from the compensation section 102 the steering assist command value T* outputted from the steering assist command value computation section 101, and a q-axis command current calculation section 104 which converts the torque command value T*' outputted by the adder 103 into a q-axis current command value Iq*.

In order to improve convergence of yaw of the vehicle, the compensation section 102 comprises at least: a convergence control section 105 which performs control for applying braking to an oscillating movement of the steering wheel 1; an inertial compensation section 106 which removes torque that accelerates/decelerates the motor inertia from the steering torque sensed value T and arranges steering feel to assume an inertial sensation; and an self-aligning torque (SAT) control section 107 which estimates an SAT based on a motor angular velocity ωe and the steering torque sensed value T and performs control for removing influences due to road surface information and disturbance. A control value of the convergence control section 105, a compensation value of the inertial compensation section 106, and a control value of the SAT control section 107 are respectively added by the adders 108 and 109 to be supplied as a compensation value to the adder 103.

The current control section 110 comprises: a subtracter 111d which calculates a current deviation ΔId between an inputted d-axis command current Id[*] set to "0" and an inputted d-axis sensed current Idd from the three-phase to two-phase transformation section 90 which transforms current sensed values Iu to Iw sensed by the current sensors 51u to 51w into d-axis and q-axis current sensed values; a subtracter 111q which calculates a current deviation ΔIq between an inputted q-axis command current Iq* calculated at the q-axis current command value calculation section 104 and an inputted q-axis sensed current Idq from the three-phase to two-phase transformation section 90; a PI control section 112 which performs proportional-plus-integral computation on the current deviations ΔId and ΔIq outputted from the subtracters 111d and 111q to calculate command voltages Vd and Vq; a two-phase to three-phase transformation section 113 which transforms command voltages Vd and Vq outputted from the PI control section 112 into three-phase command voltages Vu, Vv and Vw; a fifth harmonic component computation section 114 which computes a fifth harmonic component V5 based on the command voltages Vd and Vq outputted from the PI control section 112; and adders 115u, 115 and 115w which add the fifth harmonic component V5 computed by the fifth harmonic component computation section 54 to the three-phase command voltages Vu, Vv and Vw outputted from the two-phase to three-phase transformation section 113. Three-phase command voltages Vu', Vv' and Vw', superimposed with the fifth harmonic component V5, are outputted from the adders 115u, 115v and 115w and are supplied to the PWM control section 60.

The fifth harmonic component V5 is calculated using the following formula (14) at the fifth harmonic component computation section 114 based on the inputted command voltages Vd and Vq.

$$V5 = \sqrt{(2/3)}\sqrt{\{Vd^2 + (-Vq)^2\}}\sin 5(\theta + \phi) \quad \ldots\ldots (14)$$

where when Vq ≠ 0, $\phi = \tan^{-1}\{Vd/(-Vq)\}$, and when Vq = 0, $\phi = 1\pi/2$.

According to the fourth embodiment, by superimposing a fifth harmonic component of a sinusoidal wave onto three-phase command voltages Vu, Vv and Vw calculated by the current control section 110 to calculate three-phase command voltages Vu', Vv' and Vw' which are then supplied to the PWM control section 60, a drive current superimposed by the fifth harmonic wave above described, shown in Figure 8D may be applied to each excitation coil Lu to Lw of the unconnected motor 12, thereby improving effective value to obtain high output.

For the above-described fourth embodiment, while a case in which a fifth harmonic wave is superimposed at the current control section 110 has been provided, the present invention is not limited to this case, and a fifth harmonic component may be superimposed instead at a current command value computation section 100 side.

In addition, for the above-described fourth embodiment, while a case has been provided in which a fifth harmonic component V5 is computed at the fifth harmonic component computation section 114, the present invention is not limited to this case, and seventh, ninth, harmonic components and the like may also be computed and superimposed.

Furthermore, for the above-described first to fourth embodiments, while a case has been explained in which the drive control circuit 15 and the inverter circuits 34a and 34b are connected as shown in Figure 5, the present invention is not limited to this case. Instead, drive control circuits 15 may be provided individually for the inverter circuits 34a and 34b, and the inverter circuits 34a and 34b may be individually controlled at opposing phases.

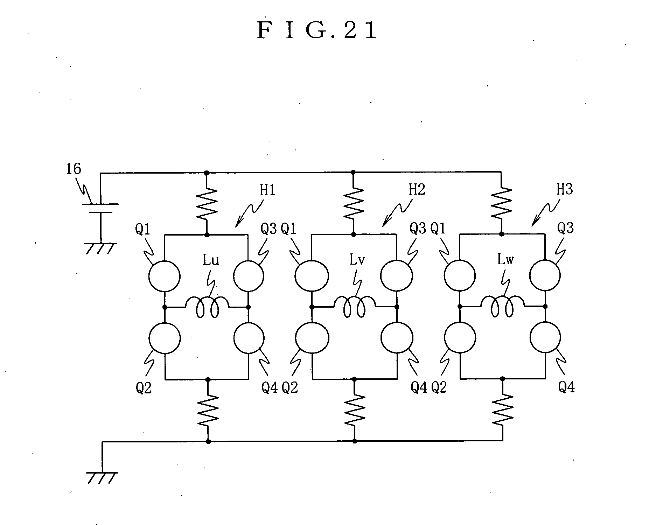

Moreover, for the above-described first to fourth embodiments, while a case has been explained in which the inverter circuits 34a and 34b respectively comprise six switching elements, the present invention is not limited to this case. Instead, as shown in Figure 21, effects similar to those of the above-described first to fourth embodiments may be achieved by respectively configuring H bridge circuits Hu, Hv and Hw provided with four switching elements Q1 to Q4 for each excitation coil Lu, Lv and Lw, and drive-controlling the switching elements Q1 to Q4 of each H bridge circuit Hu, Hv and Hw by the PWM control section 60.

Additionally, for the above-described first to fourth embodiments, while a case has been explained in which the present invention has been applied to an unconnected three-phase brushless motor, the present invention is not limited to this case. Instead, the present invention may be applied to a brushless motor or other motors with a plurality N (number, where N is an integer greater than or equal to 3) of phases.

Furthermore, for the above-described first to fourth embodiments, while a case in which the present invention has been applied to an electric power steering device has been explained, the present invention is not limited to this case. Instead, the present invention may be applied to an arbitrary device having other drive motors.

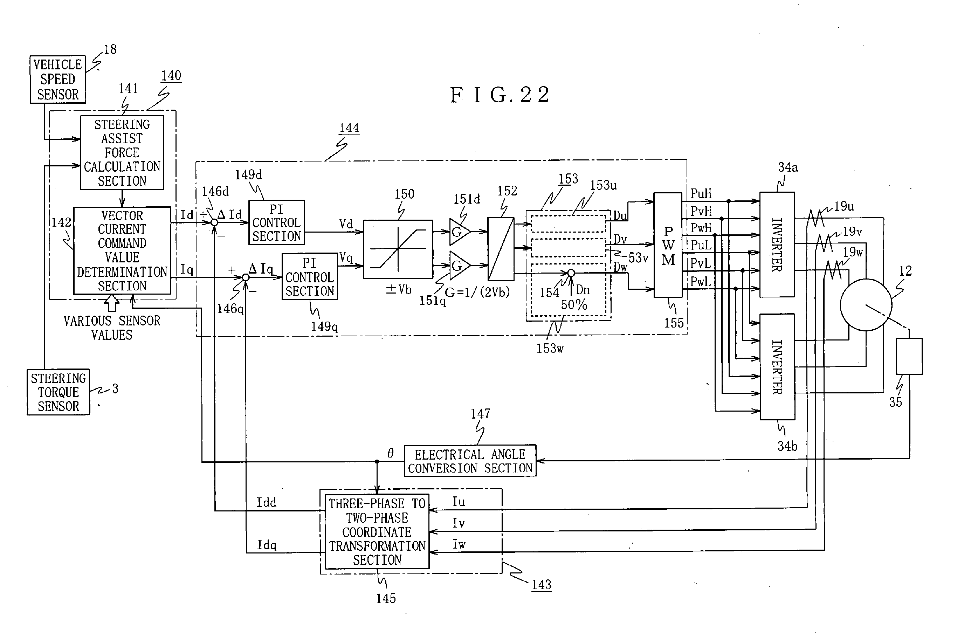

A fifth embodiment of the present invention will now be described with reference to Figures 22 to 24.

The fifth embodiment is arranged to provide a drive control device of an unconnected motor capable of eliminating power shortage and increasing motor output without using a boost circuit, and an electric power steering device using the unconnected motor.

In other words, for the fifth embodiment, the unconnected motor 12 according to the above-described first embodiment is applied, and the drive control circuit 15 is configured as shown in Figure 22.

As shown in Figure 22, the drive circuit 15 comprises: a vector control phase command value calculation section 140 to which a steering torque sensed value T sensed by the steering torque sensor 3 and a vehicle speed sensed value V sensed by the vehicle speed sensor 18 are inputted, and which performs vector control computation based on the inputted values to output command current command values Iq and Id; a motor current sensing circuit 143 which senses phase currents Idq and Idd of each excitation coil Lu to Lw; and a current control section 144 which forms a PWM drive control current for a pair of inverters 34a and 34b based on the phase current command values Iq and Id outputted from the vector control phase command value computation section 40 and the phase currents sensed values Idq and Idd sensed by the motor current sensing circuit 143.

The vector control phase command value calculation section 140 comprises: a steering assist force calculation section 141 to which a steering torque sensed value T sensed by the steering torque sensor 3 and a vehicle speed sensed value V sensed by the vehicle speed sensor 18 are inputted, and based on the inputted values, calculates a steering assist force command value using the vehicle speed sensed value V as a parameter by referencing a steering assist force command value calculation table which shows a relationship between the steering torque sensed value T and a steering assist force command value T*; and a vector current command value determination section 142 to which the steering assist force command value T* calculated by the basic steering assist force calculation section 141 is inputted, and based on the inputted value, determines and outputs phase current command values Iq and Id on a d-q axis for the unconnected motor 12.

The motor current sensing circuit 143 comprises a three-phase to two-phase coordinate transformation section 145 which performs three-phase to two-phase coordinate transformation on drive currents Iu to Iw inputted from the motor current sensing sections 119u to 119w, and outputs motor sensed currents Idq and Idd on the d-q axis. A rotor phase sensed value sensed by the phase sensing section 35 is converted into an electrical angle $\theta$ at the electrical angle conversion section 147. The electrical angle $\theta$ is supplied to the vector current command value determination section 142 and the three-phase to two-phase coordinate transformation section 145.

In addition, the current control section 144 subtracts phase current sensed values Idq and Idd outputted from the three-phase to two-phase coordinate transformation section 145 of the motor current sensing circuit 143 from the phase current command values Iq and Id outputted from the vector current command value determination section 142 of the vector control phase command value calculation section 140 by the subtracters 46q and 46d to calculate deviations $\Delta$Iq and $\Delta$Id, which are then individually supplied to PI control sections 149q and 149d.

Therefore, the PI control sections 149q and 149d calculate voltage command values Vq and Vd using the following formulas (15) and (16).

$$\mathrm{Vq} = \mathrm{Kp} \times \Delta\mathrm{Iq} + \mathrm{Ki} \times \int\Delta\mathrm{Iq/dt} \ \ldots\ldots \ (15)$$

$$\mathrm{Vd} = \mathrm{Kp} \times \Delta\mathrm{Id} + \mathrm{Ki} \times \int\Delta\mathrm{Id/dt} \ \ldots\ldots \ (16)$$

where Kp denotes proportional gain and Ki denotes integral gain. The subtracters 146q, 146d and the PI control sections 149q, 149d configure a computation control section.

Voltage command values Vq and Vd outputted from the PI control sections 149q and 149d are supplied to a limiter 150 as a voltage limiting section which limits the power supply voltages Vq and Vd to a range of positive/negative power supply voltage (battery voltage $\pm$ Vb). The limited voltage command values $\mathrm{Vq_{LIM}}$ and $\mathrm{Vd_{LIM}}$ are supplied to multipliers 151q and 151d as duty command value calculation sections.

The multipliers 151q and 151d perform division by multiplying the limited voltage command values $\mathrm{Vq_{LIM}}$ and $\mathrm{Vd_{LIM}}$ by 1/2Vb (Vb denotes battery voltage) to calculate duty command values Dq and Dd. Based on the duty command values Dq and Dd, respective U-phase, V-phase and W-phase duty command values Dtu, Dtv and Dtw are calculated at the two-phase to three-phase coordinate transformation section 52 as a phase transformation section.

Each phase duty command value Dtu, Dtv and Dtw outputted from the two-phase to three-phase coordinate transformation section 152 are then supplied to a drive control signal formation section 153 which forms a PWM drive control signal for the pair of inverters 34a and 34b.

The drive control signal formation section 153 comprises: duty command value conversion sections 153j which supply inputted positive/negative phase duty command values Dtj (j = u, v, w) to an adder 154 which adds the supplied values to a 50% intermediate duty command value Dn inputted therein to convert into a 0% to 100% phase duty command value Dj for the excitation coil Lj; and a PWM pulse generator 155 as a PWM circuit to which the phase duty command values Dj outputted from the duty command value conversion sections 153j are inputted, which forms PWM drive control signals PuH to PwH consisting of pulse signals with a duty ratio corresponding to the phase duty command values Dj, and PWM drive control signals PuL to PwL obtained by on/off inverting the PWM drive control signals PuH to PwH.

The PWM drive control signals PuH to PwH and PuL to PwL outputted from the PWM pulse generator 155 are outputted to the inverter circuits 34a and 34b, as shown in the aforementioned Figure 5. As seen, since the inverter circuits 34a and 34b are driven at mutually opposite phases by a single PWM generator 155, the six prior PWM signals may be used as-is as PWM signals.

Next, operations of the above-described fifth embodiment will be explained.

When the ignition key 17 is in an off-state, power from the battery 16 is not supplied to the drive control circuit 15 and the inverter circuits 34a and 34b, the respective switching elements Qua to Qwb and Qua' to Qwb' of the inverter circuits 34a and 34b maintain their off-states, and the unconnected motor 12 is in a suspended state since power is not applied to each excitation coil Lu to Lw of the unconnected motor 12.

When the ignition key 17 is switched to an on-state during this rest-state of the vehicle, the power of the battery 16 is supplied to the drive control circuit 15 and inverter circuits 34a and 34b to switch these components to an operational state.

In this state, when the steering wheel 1 has not been steered, the steering torque sensed value T sensed by the steering torque sensor 3 assumes a value of zero, and since the vehicle is at a rest-state, vehicle speed sensed value V sensed by the vehicle speed sensor 18 is also zero. Thus, a steering assist force command value T* which takes a value of zero is calculated by the steering assist force calculation section 141, which is then supplied to the vector current command value determination section 142 to cause the same to output command currents Iq and Id which both assume values of zero.

On the other hand, since the unconnected motor 12 is in a suspended state, motor currents Iu to Iw sensed by the current sensors 19u to 19w also take values of zero, which are then supplied to the three-phase to two-phase coordinate transformation section 145. Thus, d-q axis sensed currents Idq and Idd outputted from the three-phase to two-phase coordinate transformation section 145 also take values of zero, and the deviations ΔIq and ΔId outputted from the adders 146q and 146d also take values of zero.

Therefore, voltage command values Vq and Vd outputted from the PI control section 149q and 149d also take values of zero. These voltage command values Vq and Vd are supplied to the multipliers 151q and 151d via a limiter 150 to be divided by a double battery voltage Vb in order to calculate duty command values Dq and Dd which take positive and negative values. These duty command values Dq and Dd also take values of zero, which will then be supplied to the two-phase to three-phase coordinate transformation section 52 to calculate respective U-phase, V-phase and W-phase duty command values Dtu, Dtv and Dtw. In this case, since the respective phase duty command values Dtu, Dtv and Dtw also take values of zero which are then supplied to the duty command value conversion sections 153u, 153v and 153w, 50% phase duty command values Du, Dv and Dw will be supplied from the duty command value conversion sections 153u, 153v and 153w to the PWM pulse generator 55. As a result, PWM drive control signals PuH to PwH with duty ratios of approximately 50%, and their on/off inverted PWM drive control signals PuL to PwL are outputted from the PWM pulse generator 155 to the inverter circuits 34a and 34b.

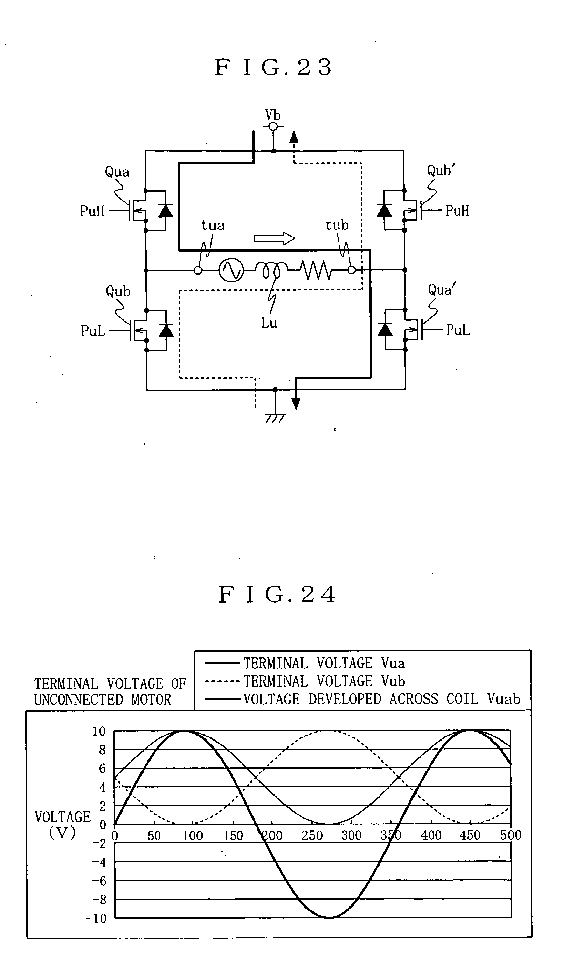

Therefore, when considering, for instance as shown in Figure 23, the excitation coil Lu of the unconnected motor 12, a series circuit of the switching elements Qua and Qub and a series circuit of the switching elements Qub' and Qua' of the inverter circuits 34a and 34b are parallel-connected between the battery voltage Vb and ground, and a so-called H bridge circuit is configured in which one of the terminals tua and the other terminal tub of the excitation coil Lu are respectively connected to a connecting point of the switching elements Qua and Qub and a connecting point of the switching elements Qub' and Qua' of both series circuits.

At this point, since the PWM signal PuH supplied to the switching elements Qua and Qub' and the WM signal PuL supplied to the switching elements Qub and Qua' both have duty ratios of approximately 50% and are on/off inverted, and have a dead time set therebetween, current will not flow through the excitation coil Lu nor through the excitation coils Lv and Lw, and the suspended state of the unconnected motor 12 will be continued.

From this suspended state of the unconnected motor 12, when the steering wheel 12 is steered, for instance, to the right, and changes to a static-steering state, a steering torque sensed value T having a large positive value is outputted from the steering torque sensor 3 and the vehicle speed sensed value V takes a value of "0". As a result, a steering assist force command value T* having a large positive value is outputted from the steering assist force calculation section 141, and is then supplied to the vector current command value determination section 142 to determine phase current command values Iq and Id. At this point, since current is not applied to the excitation coils Lu to Lw, and the phase current sensed values Idq and Idd outputted from the three-phase to two-phase coordinate transformation section 145 retain values of zero, deviations ΔIq and ΔId corresponding to the command currents Iq and Id are outputted from the subtracters 146q and 146d to the PI control sections 149q and 149d.

The PI control sections 149q and 149d perform the PI computations of the above-described formulas (1) and (2) to calculate relatively large voltage command values Vq and Vd, and outputs the values to the limiter 150.

The limiter 150 limits the voltage command values Vq and Vd to battery voltages +Vb and -Vb. The limited voltage command values are divided at the multipliers 151q and 151d by a voltage 2Vb that is double the battery voltage to output positive duty command values Dq and Dd with a duty ratio of, for instance, approximately 50%, which are then supplied to the two-phase to three-phase coordinate transformation section 152 to calculate respective U-phase, V-phase and W-phase duty command values Dtu, Dtv and Dtw, which are 120 degrees out of phase.

The respective phase duty command values Dtu, Dtv and Dtw are supplied to the phase duty command value conversion sections 153u, 153v and 153w which in turn output phase duty command values Du, Dv and Dw having duty ratios of almost 100%. These phase duty command values are supplied to the PWM generator 155, which in turn supplies PWM drive control signals PuH, PvH to PwH which drive the unconnected motor 12 in normal rotation, and their on/off inverted PWM drive control signals PuL, PvL and PwL to the inverter circuits 34a and 34b so that the PWM drive control signals PuH, PvH to PwH and the PWM drive control signals PuL, PvL and PwL are in opposite phases.

Therefore, when considering the excitation coil Lu, if the duty ratio of the PWM drive control signal PuH is greater than the duty ratio of the PWM drive control signal PuL, drive current from the battery 17 flows in sequence through the switching element Qua, the excitation coil Lu and the switching element Qua', as indicated by the solid arrow in Figure 23, causing the unconnected motor 12 to be, for instance, driven in normal rotation so as to assist the rightward steering of the steering wheel 1. The unconnected motor 12 generates a large steering assist force to enable static steering of the steering wheel 1 to be performed with a light steering force. The voltage waveform of the excitation coil Lu at this point is as shown in Figure 24, wherein a terminal voltage Va of one of the terminals tua of the excitation coil Lu assumes a sinusoidal wave with a range of, for instance, 0 to 10 volts, as indicated by the thin solid line, while a terminal voltage Vb of the other terminal tub assumes a sinusoidal wave with a 180 degree-phase difference from the terminal voltage Va, as indicated by the dotted line. Therefore, voltage Vab developed across the excitation coil Lu assumes a sinusoidal wave with a range of the battery voltage, +10 to -10 volts, as indicated by the bold solid line, enabling effective utilization up to approximately double the battery voltage Vb without providing a boost circuit, as was the case with conventional examples, and achieving high output drive.

As a result, maximum rotational velocity may be increased while retaining maximum output with the electric power steering device, allowing shortage of motor rotational velocity to be resolved during abrupt steering.

Furthermore, the above effect may be driven by six PWM signals outputted by the drive control circuit 15 to the pair of inverter circuits 34a and 34b, in a manner similar to a case in which a single inverter circuit is applied for driving a connection motor in which conventional excitation coils are wye-connected or delta-connected. This approach enables improvements in cost reduction and freedom of choice regarding a microcomputer, digital signal processing device, motor driven IC and the like in comparison to a case in which a pair of inverter circuits 34a and 34b is driven by individual drive control circuits.

Moreover, when a change is made to a static steering state in which the steering wheel 1 is steered to the left, the unconnected motor 12 is driven in reverse rotation so as to generate a steering assist torque according to the steering torque sensed value T at that point to enable light steering. In addition, when the vehicle changes from a rest state to a driven state, the steering assist torque command value T* in relation to the steering torque sensed value T becomes smaller as the vehicle speed sensed value V increases, and steering assist force generated by the unconnected motor 12 may also be suppressed at a low level.

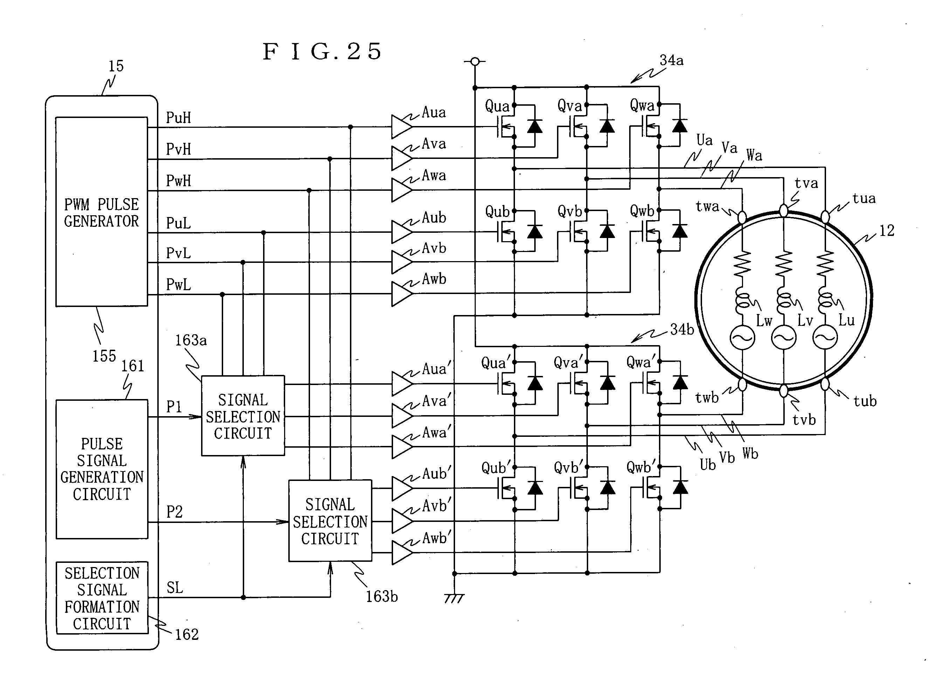

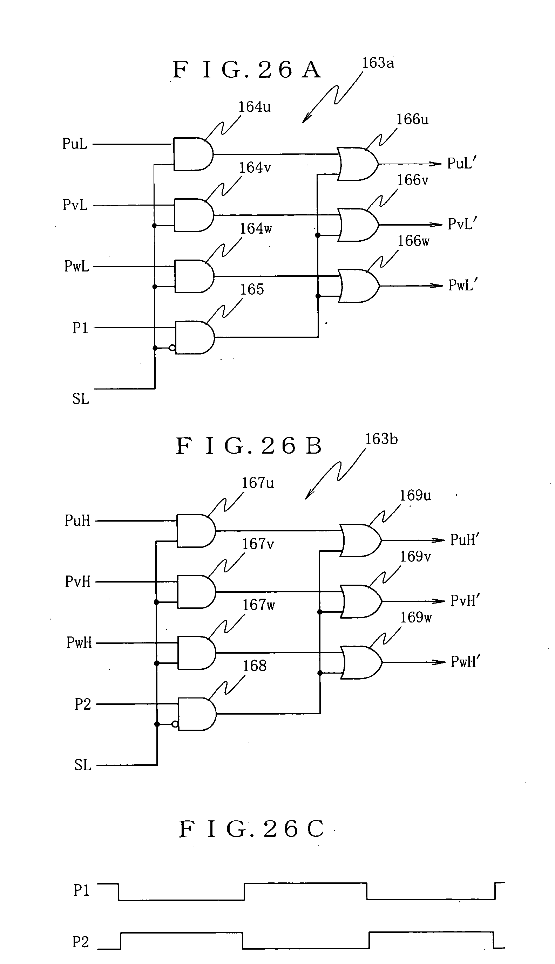

A sixth embodiment of the present invention will now be described with reference to Figures 25 and 26A to 26C.

The sixth embodiment is arranged so that the high output drive of the unconnected motor 12 and a delicate current control drive of a minute current control region influenced by the resolution of the duty ratio of the PWM drive control signal are compatible.

More specifically, as shown in Figure 25, the second embodiment has the same configuration as that of the first embodiment shown in Figure 5, with the exception of: a pulse signal generation circuit 161 which forms pulse signals P1 and P2 with duty ratios of 50% and mutually inverted on/off states, as shown in Figure 26C; a selection signal formation circuit 162 which forms selection signals of a low level when, for instance, motor angular velocity ω is smaller than or equal to a set threshold ωs, and output selection signals SL of a high level when motor angular velocity ω is greater than the set threshold ωs; and signal selection circuits 163a and 163b which select PWM drive control signals Pub to Pwb and Pua to Pwa outputted from the drive control circuit 15 and pulse signals P1 and P2 for the input side of amplifiers Aua' to Awa' and Aub' to Awb' of the inverter circuit 34b being provided. Thus, portions corresponding to those shown in Figure 5 are assigned like reference characters and detailed descriptions thereof will be omitted.

As shown in Figure 26A, the signal selection circuit 163a comprises: AND gates 164u, 164v and 164w with PWM drive control signals PuL, PvL and PwL inputted to one non-inverted input side thereof and a selection signal SL inputted to the other non-inverted input side thereof; an AND gate 165 with a pulse signal P1 inputted to one non-inverted input side thereof and a selection signal SL inputted to the other non-inverted input side; and OR circuits 166u, 166v and 166w with output signals of the AND gates 164u, 164v and 164w individually inputted to one of the input sides thereof, and an output signal of the AND gate 165 inputted to the other input sides thereof. In addition, PWM drive control signals PuL, PvL and PwL outputted from the drive control circuit 15 in the event that the selection signal SL is at a low level, and a pulse signal P1 outputted from the pulse signal generation circuit 161 of the drive control circuit 15 in the event that the selection signal SL is at a high level, are respectively outputted as PWM drive control signals PuL', PvL'

and PwL' to the switching elements Qua', Qva' and Qwa' which compose an upper arm of the inverter circuit 34b.

Furthermore, as shown in Figure 26B, the signal selection circuit 163b comprises: AND gates 167u, 167v and 167w with PWM drive control signals PuH, PvH and PwH inputted to one non-inverted input side thereof and a selection signal SL inputted to the other non-inverted input side thereof; an AND gate 168 with a pulse signal P2 inputted to one non-inverted input side thereof and a selection signal SL inputted to the other non-inverted input side thereof; and OR circuits 169u, 169v and 169w with output signals of the AND gates 167u, 167v and 167w individually inputted to one of the input sides thereof, and an output signal of the AND gate 168 inputted to the other input sides thereof. Additionally, PWM signals PuH, PvH and PwH outputted from the drive control circuit 15 in the event that the selection signal SL is at a low level, and a pulse signal P2 outputted from the pulse signal generation circuit 161 of the drive control circuit 15 in the event that the selection signal SL is at a high level, are respectively outputted as PWM signals PuH', PvH' and PwH' to the switching elements Qub', Qvb' and Qwb' which compose an lower arm of the inverter circuit 34b.

According to the sixth embodiment, by setting the selection signal SL at a high level at the selection signal formation circuit 62 in the event that an abrupt steering of the steering wheel 1 causes the motor angular velocity $\omega$ to exceed a set threshold $\omega$s, AND gates 164u to 164w and 167u to 167w are respectively opened at each signal selection circuit 163a and 163b, and PWM signals PuL to PwL and PuH to PwH are selected and supplied to the inverter circuit 34b, thereby enabling the unconnected motor 12 to be driven at high output and high speed rotation at a voltage that is double the battery voltage Vb, in a manner similar to the aforementioned first embodiment.

However, in the event that the steering wheel 1 is steered relatively slowly and the motor angular velocity $\omega$ remains lower than or equal to the set threshold $\omega$s, the selection signal SL is controlled at a low level at the selection signal formation circuit 162. Therefore, pulse signals P1 and P2 with duty ratios of 50% and mutually inverted on/off states generated at the pulse signal generation circuit 61 are selected at the signal selection circuits 163a and 163b, and are then supplied to the inverter circuit 34b.

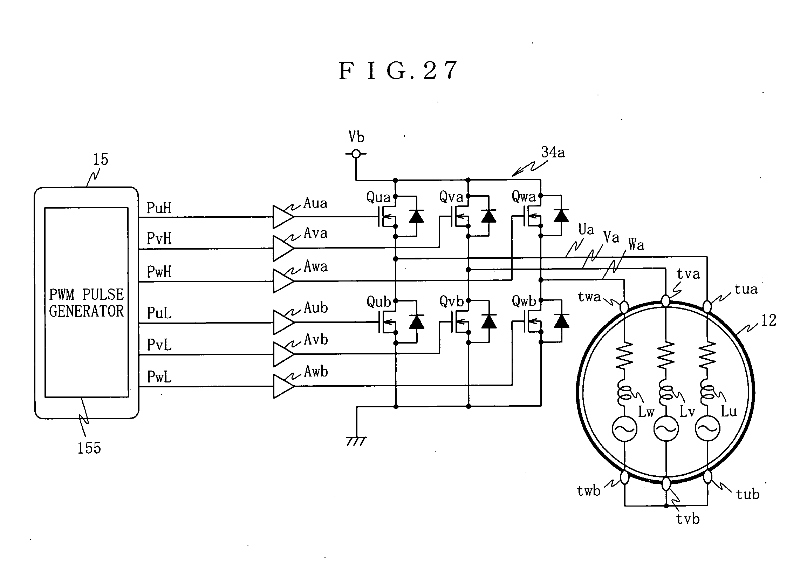

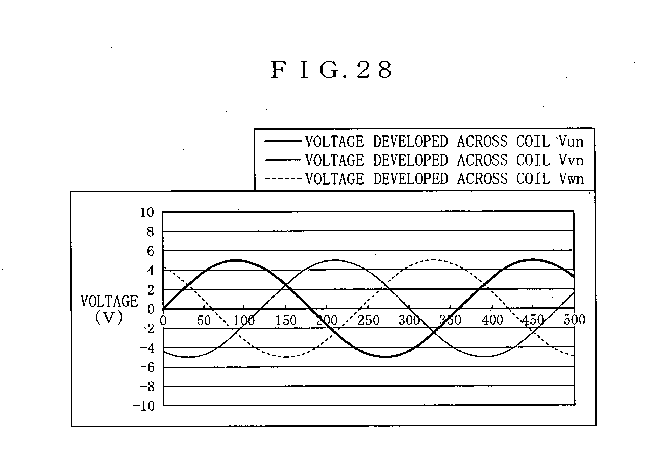

As a result, when one of the switching elements composing a series circuit of the inverter circuit 34b is in an on-state, the other switching element changes to an off-state and virtually acts as a power supply circuit which fixes and outputs half of the motor drive voltage, and a configuration that is equivalent to a conventional wye-connection motor is realized in which the terminal tub of the excitation coil Lu, the terminal tvb of the excitation coil Lv and the terminal twb of the excitation coil Lw are connected to each other, as shown in Figure 27. Therefore, the voltages Vu to Vw developed across the excitation coils Lu to Lw assume sinusoidal waves having a range of +1/2Vb to -1/2Vb, which is half of the battery voltage Vb, as shown in Figure 28, causing the resolutions of duty ratios of the PWM drive control signals PuH to PwH and PuL to PwL to become more apparent, thereby enabling improvement of the controllability of a minute current region.

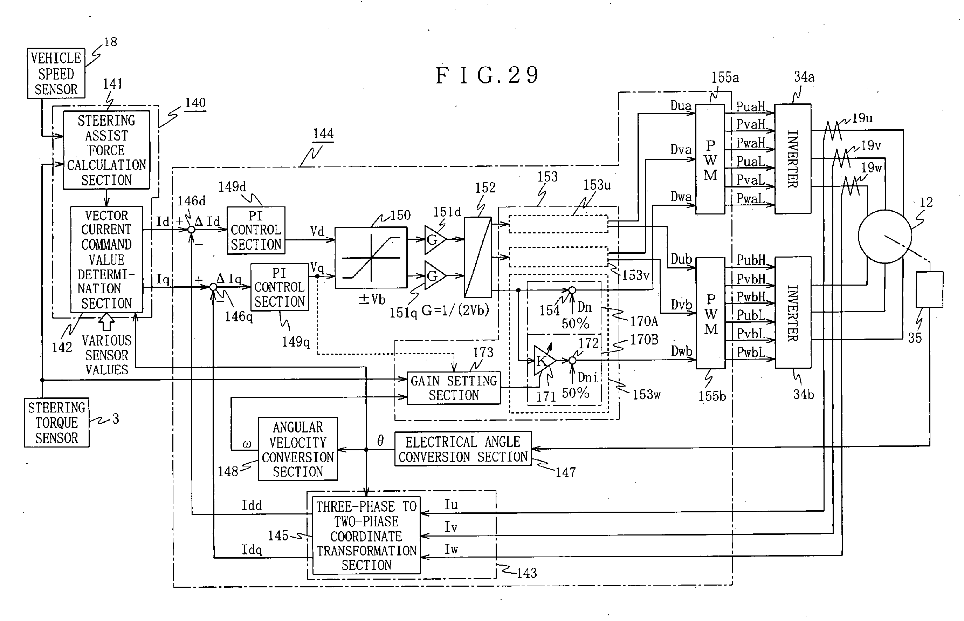

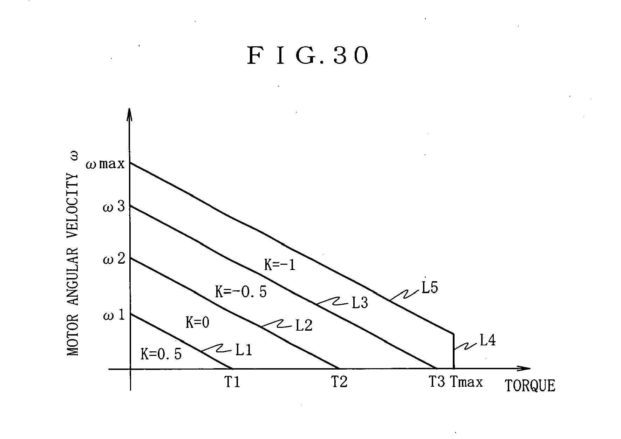

A seventh embodiment of the present invention will now be described with reference to Figures 29 and 30.

The seventh embodiment is arranged so that the voltages between terminals of the excitation coils Lu to Lw of the unconnected motor 12 are changeable to predetermined stages.

More specifically, the seventh embodiment has the same configuration as that of the above-described first embodiment, with the exception of the phase duty conversion sections 153u to 153w of the drive control circuit 15 of the above-described fifth embodiment now configured by a first computation section 170A comprising the aforementioned adder 154, and a second computation section 170B provided in parallel to the first computation section 170A, as shown in Figure 29, wherein a phase duty command value DQja calculated at the first computation section 170A is supplied to the PWM pulse generator 155a which drive-controls the inverter circuit 34a, while a phase duty command value Djb calculated at the second computation section 170B is supplied to the PWM pulse generator 155b which drive-controls the inverter circuit 34b. Thus, portions corresponding to those shown in Figure 22 are assigned like reference characters and detailed descriptions thereof will be omitted.

The second computation section 170B is configured by a series circuit comprising a variable gain amplifier 171 which multiplies the phase duty command value Dtj (j = u, v, w) by a gain K, and an adder 172 which adds a 50% duty command value to an output from the variable gain amplifier 171. The gain K of the variable gain amplifier 171 is set at a gain setter 173 based on a steering torque sensed value T, and a motor angular velocity $\omega$ obtained by converting an electrical angle $\theta$ outputted from the electrical angle conversion section 147 at the angular velocity conversion section 148.

The gain setting unit 173 calculates gain K based on an inputted steering torque sensed value T and a motor angular velocity $\omega$ by referencing a gain calculation map shown in Figure 30. The gain calculation map is configured so that steering torque sensed value T is used as its horizontal axis and motor angular velocity $\omega$ is used as its vertical axis, as shown in Figure 30. Gain K is set to "0.5" when gain K is in a region enclosed by a line L1 connecting a predetermined value T1 having a motor angular velocity $\omega$ of zero and a steering torque sensed value T of around 1/3 of a maximum torque Tmax, and a motor angular velocity $\omega$1 having a steering torque sensed value T of zero and a motor angular velocity $\omega$ of about 1/5 of a maximum angular velocity $\omega$max, and the horizontal and vertical axes. In addition, gain K is set to "0" when gain K is in a region enclosed by a line L2 that is parallel to line L1, connecting a predetermined value T2, having a motor angular velocity $\omega$ of zero and a steering torque sensed value T of around 2/3 of the maximum torque Tmax, and a predetermined value $\omega$2 having a steering torque sensed value T of zero and a motor angular velocity $\omega$

31

of about 1/2 of the maximum angular velocity ωmax, the line L1, and the horizontal and vertical axes. Furthermore, gain K is set to "-0.5" when gain K is in a region enclosed by a line L3 that is parallel to line L2, connecting a predetermined value T3, having a motor angular velocity ω of zero and a steering torque sensed value T that is close to the maximum torque Tmax, and a predetermined value ω3 having a steering torque sensed value T of zero and a motor angular velocity ω of about 4/5 of the maximum angular velocity ωmax, the line L2, and the horizontal and vertical axes. Moreover, gain K is set to "-1" when gain K is in a region enclosed by a line L4 on which steering torque sensed value T maintains maximum torque Tmax when motor angular velocity ω is between zero and ω0 that is smaller than ω1, a line L5 that is parallel to line L3, connecting an upper end of the line L4 and a point at which steering torque sensed value T is zero and motor angular velocity ω is the maximum angular velocity ωmax, the line L3, and the horizontal and vertical axes.

Next, operations of the above-described seventh embodiment will be explained.

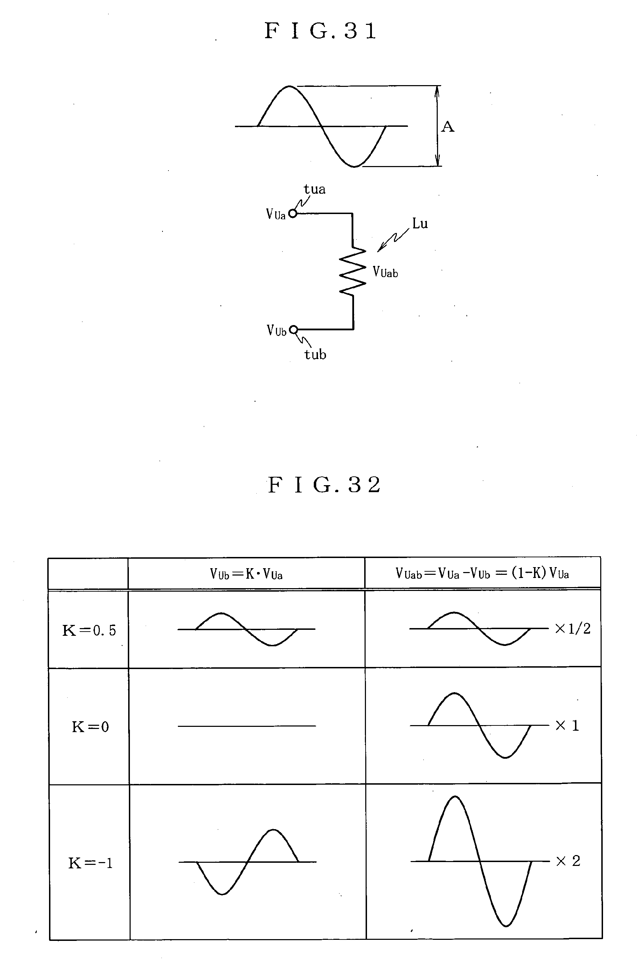

In the event that the steering wheel 1 is steered slowly in a state in which the vehicle is traveling at a relatively high speed, the steering torque sensed value t sensed by the steering torque sensor 3 is small and the motor angular velocity ω is low. If gain K =0.5 is selected by the gain setting unit 73 when referencing the gain calculation map shown in Figure 30, when considering the excitation coil Lu as an example and denoting the terminal voltage of a terminal tua of the excitation coil Lu as Vua, the terminal voltage of the other terminal tub as Vub, and the voltage between the terminals of the excitation coil Lu as Vuab, and when the terminal voltage Vua is a sinusoidal wave with a predetermined amplitude A as shown in Figure 31, the other terminal voltage Vub takes a value Vub = K·Vua = 0.5 Vua, obtained by multiplying terminal voltage by gain K, resulting in a sinusoidal wave with an amplitude of half of that of the terminal voltage Vua, as shown in Figure 32. Therefore, since the voltage between the terminals Vuab of the excitation coil Lu may be expressed by the following equation (17), the voltage between terminals Vuab also assumes a sinusoidal wave with an amplitude of half of that of the terminal voltage Vua.

$$\mathtt{Vuab = Vua - Vub = (1 - K)Vua} \qquad \ldots \ldots (17)$$

Therefore, resolution may be improved in comparison to that of a conventional wye-connection motor.

When steering torque applied to the steering wheel 1 and/or steering speed is increased from this slow-steering state and gain K calculated by the gain setting unit 173 is set to "0", a voltage between terminals Vuab having the same amplitude as terminal voltage Vua, similar to a conventional wye-connection motor may be obtained in the same manner as in a case where the selection signal SL of the above-described second embodiment is set at a low level as shown in Figure 32, and a normal resolution may be obtained.

From this state, when steering torque applied to the steering wheel 1 and/or steering speed is further increased and gain K calculated by the gain setting unit 173 is set to "-0.5", the voltage between the terminals Vuab of the excitation coil Lu takes a value of 1.5 times the terminal voltage Vua, thereby allowing a voltage between the terminals that is 1.5 times the battery voltage Vb to be applied to the excitation coil Lu.

Furthermore, by increasing steering torque applied to the steering wheel 1 and/or steering speed and setting gain K calculated by the gain setting unit 173 to "-1", a voltage between the terminals Vuab that is double the terminal voltage Vua may be applied to the excitation coil Lu in the same manner as in the above-described fifth and sixth embodiments, and the unconnected motor 12 may be driven at a larger output characteristics and a high speed rotation.

As seen, according to the above-described seventh embodiment, by setting gain K based on steering torque sensed value T and motor angular velocity ω, voltages between the terminals of the excitation coils Lu to Lw of the unconnected motor 12 may be changed to 0.5 times, 1 times, 1.5 times and 2 times the terminal voltages Vua to Vwa, and optimum output performance and rotational velocity according to a steering state of the steering wheel 1 may be exercised.

For the seventh embodiment described above, while a case has been explained in which gain K is set by referencing a gain calculation map shown in Figure 30 by a gain setting computation unit 13, the present invention is not limited to this example. Instead, gain K may be calculated based on an equation in which gain K is considered a function of steering torque sensed value T and motor angular velocity ω as shown in formula (18) below.

$$\mathtt{K = f(T,\omega) = aT + b\omega + c} \qquad \ldots \ldots (18)$$

where a, b and c denote constants.

In addition, for the aforementioned seventh embodiment, while a case has been explained in which gain K is set by a gain setting unit 173 based on steering torque sensed value T and motor angular velocity ω, the present invention is not limited to this example. Instead, a voltage command value Vq outputted from the PI control section 145q may be supplied to the gain setting unit 173, as indicated by a dotted line in Figure 29, to set gain K based on the voltage command value Vq.

Furthermore, for the aforementioned seventh embodiment, while a case has been explained in which two PWM pulse generators 155a and 155b are drive-controlled by the drive control circuit 15, the present invention is not limited to this example. Alternatively, the PWM pulse generators 155a and 155b may be individually drive-controlled by two drive control circuits, in which the second computation section 170B is omitted from one drive control circuit and the first computation section 170A is omitted from the other, or the PWM pulse generators 155a and 155b may be individually driven by two microcomputers having programs corresponding to the functions of the drive control circuits, or the PWM pulse generators 155a and 155b may be drive-controlled by a microcomputer capable of individually controlling the two motors.

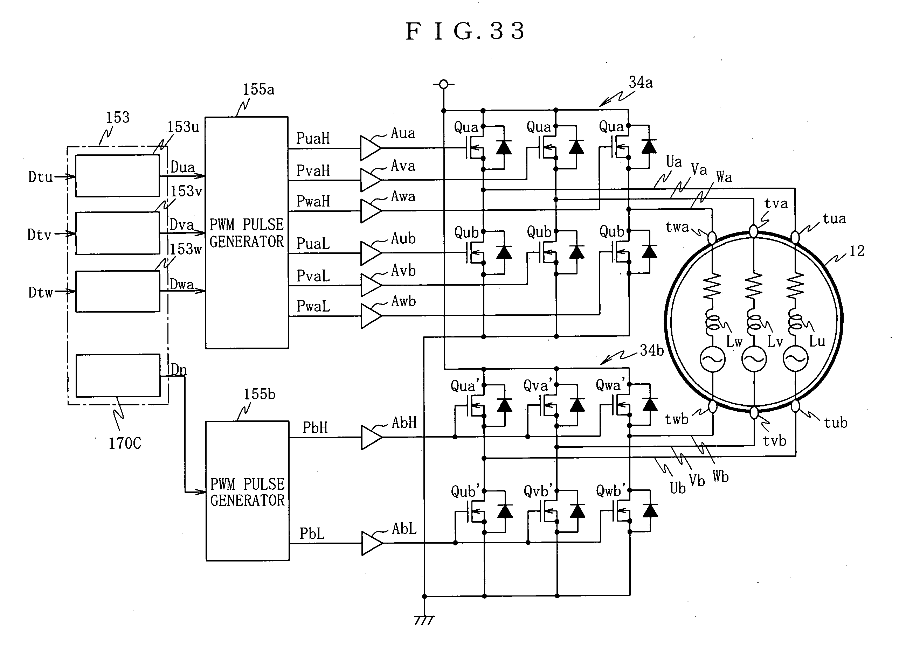

Moreover, for the aforementioned seventh embodiment, while a configuration including a second computation section 170B, a variable gain amplifier 171 and an adder 172 has been explained, the present invention is not limited to this example. Alternatively, as shown in Figure 33, the same drive control as a conventional wye-connection motor may be performed in the same manner as in the sixth embodiment by configuring each of the phase duty conversion sections 153u to 153w in the same manner as the first embodiment by omitting the second computation section 170B and substituting the same with a common second computation section 170C which outputs a duty command value Dn that fixes duty ratio at 50%, supplying the duty command value Dn to the PWM pulse generator 155b, and individually supplying a PWM drive control signal PbH having a duty ratio of 50% and its on/off inverted PWM drive control signal PbL from the PWM pulse generator 155b to switching elements Qua', Qva' and Qwa' which configure the upper arm of the inverter circuit 34b and switching elements Qub', Qvb' and Qwb' which configure the lower arm of the inverter circuit 34b via amplifiers AbH and AbL.

In addition, for the aforementioned fifth to seventh embodiments, while PWM signals PuH to PwH and PuL to PwL, and pulse signals P1 and P2 have been explained as inversion signals in which on/off states have been completely inverted for the sake of simplicity, in practice, a dead time is arranged to be provided between the moment one signal changes from an on-state to an off-state and the moment the other signal changes from an off-state to an on-state in order to prevent occurrences of short-circuiting of the series circuits at the inverter circuits 34a and 34b.

Furthermore, for the aforementioned fifth to seventh embodiments, while a case has been explained in which vector control is performed at the drive control circuit 15, the present invention is not limited to this example. Alternatively, current command values Iq and Id outputted from the vector current command value determination section 142 of the vector current command value computation section 140 may be transformed into three-phase current command values Iu*, Iv* and Iw* at the two-phase to three-phase coordinate transformation section, and current feedback control may be performed at the current control section 144 based on the three-phase current command values Iu*, Iv*, Iw* and phase currents sensed by current sensors 119u, 119v and 119w which detect each phase current of the unconnected motor 12. Otherwise, respective phase current command values may be calculated by omitting the vector current command value determination section 142, and multiplying steering assist torque command value T* outputted from the steering assist force calculation section 141 by a phase current target value outputted from a phase current target value calculation section which calculates a current command value corresponding to induced voltage of each phase of the unconnected motor 12.

Moreover, for the aforementioned fifth to seventh embodiments, while a case in which the unconnected motor is a three-phase motor has been explained, the present invention is not limited to this example, and the present invention may be applied to polyphase motors with four phases or more. In this case, with the above-described first and second embodiments, the drive control circuit 15 is preferably arranged to output 2N-number of PWM drive control signals to N-phases of the inverter circuits 34a and 34b.

Additionally, for the aforementioned fifth to seventh embodiments, while a case in which the drive control circuit 15 is configured by hardware has been explained, the present invention is not limited to this example. Instead, control may be performed using software by applying the present invention to a microcomputer storing a program having the functions of the drive control circuit 15.

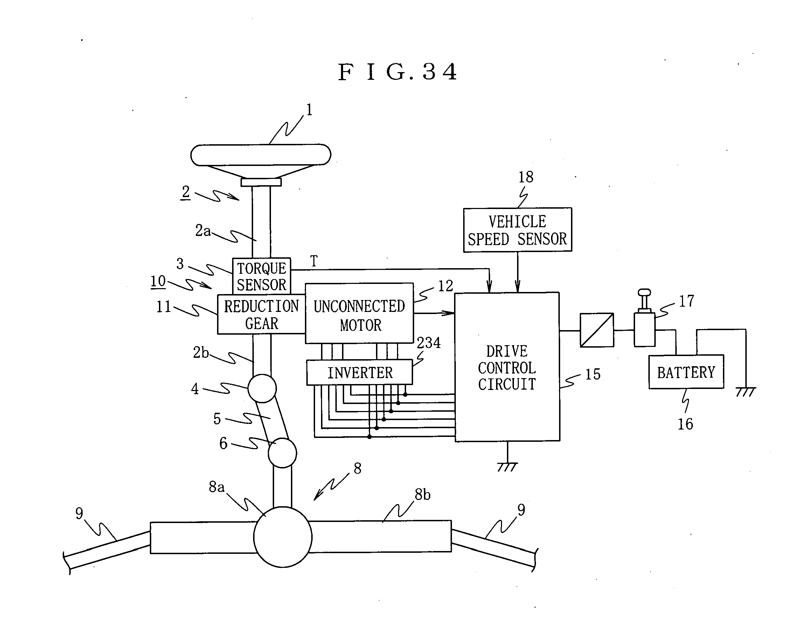

Next, an eighth embodiment in which the present invention is applied to an electric power steering device will be described with reference to Figures 34 to 37, 38A to 38C, 39 and 40.

The eighth embodiment is arranged to enable detection of motor currents at high accuracy using a simple configuration, and allow application of inexpensive microcomputers.

Figure 34 is an overall configuration diagram showing the eighth embodiment in a case in which the present invention is applied to an electric power steering device. With the exception of the omission of the inverter circuits 34a and 34b from the configuration according to the above-described first and second embodiments, shown in Figure 1 and substitution by an inverter circuit 234, the configuration of the eighth embodiment is the same as that shown in Figure 1. Thus, portions corresponding to those in Figure 1 are assigned like reference characters, and detailed descriptions thereof will be omitted.

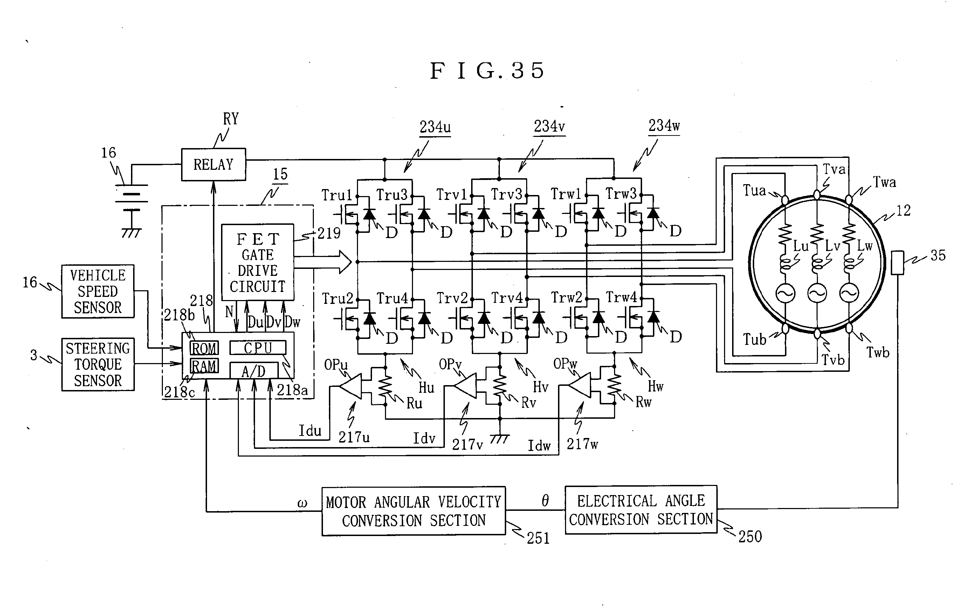

At this point, the unconnected motor 12 is configured as shown in Figures 3 and 4 described earlier, and the excitation coil 33 is composed of, for instance, three phase excitation coils Lu, Lv and Lw which are independently wound without mutual interconnection and are arranged in an unconnected type (open type) brushless motor wiring, as shown in Figure 35. Inverters 234u, 234v and 234w comprising the inverter circuit 234 are connected between both ends of each excitation coil Lu, Lv and Lw, and drive currents Iu, Iv and Iw are individually supplied.

As shown in Figure 35, the inverter 234j (j = u, v, w) has four switching elements Trj1 to Trj4 configured by, for instance, N-channel MOSFETs. An H bridge circuit Hj is configured by parallel-connecting a series circuit in which the switching elements Trj1 and Trj2 are serially connected and a series circuit in which the switching elements Trj3 and Trj4 are serially connected. The connection points of the switching elements Trj1 and Trj3 of the H-bridge circuit Hj are connected to the battery B via a relay RY, the connection points of the switching elements Trj2 and Trj4 are grounded via a current sensing shunt resistor Rj, the connection points of the switching elements Trj1 and Trj2 are connected to a terminal tja of an excitation coil Lj of the unconnected brushless motor 12, and the connection points of the switching elements Trj3 and Trj4 are connected to the other terminal tjb of the excitation coil Lj. A fly wheel diode D is connected in a forward direction between the source and the drain of each switching element Trj1 to Trj4.

A PWM (pulse width modulation) signal Pj1 outputted from the drive control circuit 15 is supplied to the switching elements Trj1 and Trj4 of each inverter 234j, while a PWM (pulse width modulation) signal Pj2 that is in opposite phase to the PWM (pulse width modulation) signal Pj1, or in other words, that is on/off inverted, is supplied to the switching elements Trj2 and Trj3 from the drive control circuit 15.

As for the equivalent circuit of each excitation coil Lu, Lv and Lw, the equivalent circuit of the excitation coil Lu is configured as shown in the above-described Figure 6 so that a resistor $R_0'$, an inductance $L_0'$, and a back emf eu (= $\omega \times Kt' \times \sin(\omega t)$) are serially arranged between terminals tua and tub, wherein the terminal voltage Vua of the terminal tua may be expressed as Vua = $V_0 \times \sin(\omega t + \alpha)$, a terminal voltage Vub of the terminal tub may be expressed as Vub = $V_0 \times \sin(\omega t - \pi + \alpha)$, the voltage between terminals Vuab may be expressed as Vuab = $2 \times V_0 \times \sin(\omega t + \alpha)$, and the phase current Iu may be expressed as Iu = $I_0' \times \sin(\omega t)$.

In a similar manner, the equivalent circuit of the excitation coil Lv is configured so that a resistor $R_0'$, an inductance $L_0'$, and a back emf eu (= $\omega \times Kt' \times \sin(\omega t - 2\pi/3)$) are serially arranged between terminals tva and tvb, wherein the terminal voltage Vva of the terminal tva may be expressed as Vva = $V_0 \times \sin(\omega t - 2\pi/3 + \alpha)$, a terminal voltage Vvb of the terminal tvb may be expressed as Vvb = $V_0 \times \sin(\omega t - 2\pi/3 - \pi + \alpha)$, the voltage between the terminals Vvab may be expressed as Vvab = $2 \times V_0 \times \sin(\omega t - 2\pi/3 + \alpha)$, and the phase current Iu may be expressed as Iu = $I_0' \times \sin(\omega t - 2\pi/3)$.

Similarly, the equivalent circuit of the excitation coil Lw is configured so that a resistor $R_0'$, an inductance $L_0'$, and a back emf eu (= $\omega \times Kt' \times \sin(\omega t - 4\pi/3)$) are serially arranged between terminals twa and twb, wherein the terminal voltage Vwa of the terminal twa may be expressed as Vwa = $V_0 \times \sin(\omega t - 4\pi/3 + \alpha)$, a terminal voltage Vwb of the terminal tub may be expressed as Vwb = $V_0 \times \sin(\omega t - 4\pi/3 - \pi + \alpha)$, the voltage between the terminals Vwab may be expressed as Vwab = $2 \times V_0 \times \sin(\omega t - 4\pi/3 + \alpha)$, and the phase current Iw may be expressed as Iw = $I_0' \times \sin(\omega t - 4\pi/3)$.

In addition, the unconnected three-phase brushless motor is configured so that a motor constant is set to any of a motor constant of a conventional wye-connection motor, a motor constant of a conventional delta-connection motor, or a unique motor constant capable of fulfilling performance requirements.

Magnetization of the magnet of the rotor 20 and the winding method of the winding of the stator 31 are set so that the induced voltage waveform of the unconnected motor 12 assumes a pseudo rectangular wave formed by superimposing on a sinusoidal wave its third and fifth harmonic wave.

Steering torque sensed value T outputted from the steering torque sensor 3 is input to the drive control circuit 15, to which power is supplied from the battery 16 via an ignition key 17 as shown in Figure 34.

In addition to the torque sensed value T, a vehicle speed sensed value V sensed by the vehicle speed sensor 18, motor currents Iau to Iaw flowing through each excitation coil Lu to Lw of the unconnected brushless motor 12 and sensed by motor current sensing sections 217u to 217w, and a phase sensing signal of the rotor 20 sensed by the phase sensing section 35 are inputted to the drive control circuit 15.

As shown in Figure 35, the motor current sensing sections 217u, 217v and 217w are respectively configured by: shunt resistors Ru, Rv and Rw respectively inserted as current sensing resistors between connection points of the switching elements Tru2 and Tru4, Trv2 and Trv4, and Trw2 and Trw4 of the inverters 234u, 234v and 234w, and ground; and operational amplifiers OPu, OPv and OPw which detect voltages between terminals. The operational amplifiers OPu to OPw output voltages developed across the shunt resistors Ru to Rw as amplitudes which reference a reference voltage Vref, or in other words, motor currents Iau to Iaw which assume values of Vref when motor current assumes a value of "0".

As shown in Figure 35, the drive control circuit 15 is comprised of a microcomputer 218 having an A/D conversion input terminal which performs A/D conversion on inputted signals, and an FET gate drive circuit 219, to which PWM duty command values Du, Dv and Dw outputted from the microcomputer 218 is inputted, which outputs PWM signals Pu1, Pv1 and Pw1 having duty ratios appropriate for the PWM duty command values Du, Dv and Dw corresponding to the switching elements Tru1 to Tru4 of each inverter 234u, 234v and 234w, as well as PWM signals Pu2, Pv2 and Pw2 obtained through on/off inversion of the PWM signals Pu1, Pv1 and Pw1. The FET gate drive circuit 219 has an up/down counter for PWM pulse generation configured by an internally provided software counter, and forms PWM signals Pu1 to Pw1 and Pu2 to Pw2 based on triangular waves formed by the count values of the counter and the duty command values Du to Dw.

Motor currents Iau to Iaw sensed by the motor current sensing sections 217u to 217w, as well as steering torque sensed value T outputted from the steering torque sensor 3, are inputted to the A/D conversion input terminal of the microcomputer 218. In addition, a vehicle speed sensed value V sensed by the vehicle speed sensor 18, a phase sensed signal sensed by the phase sensing section 35 and converted into an electrical angle $\theta$ at an electrical angle conversion section 250, and a motor angular velocity $\omega$ calculated by differentiating the electrical angle $\theta$ at the motor angular velocity conversion section 251 as a rotational velocity sensing section are inputted to the other input terminal of the microcomputer 218.

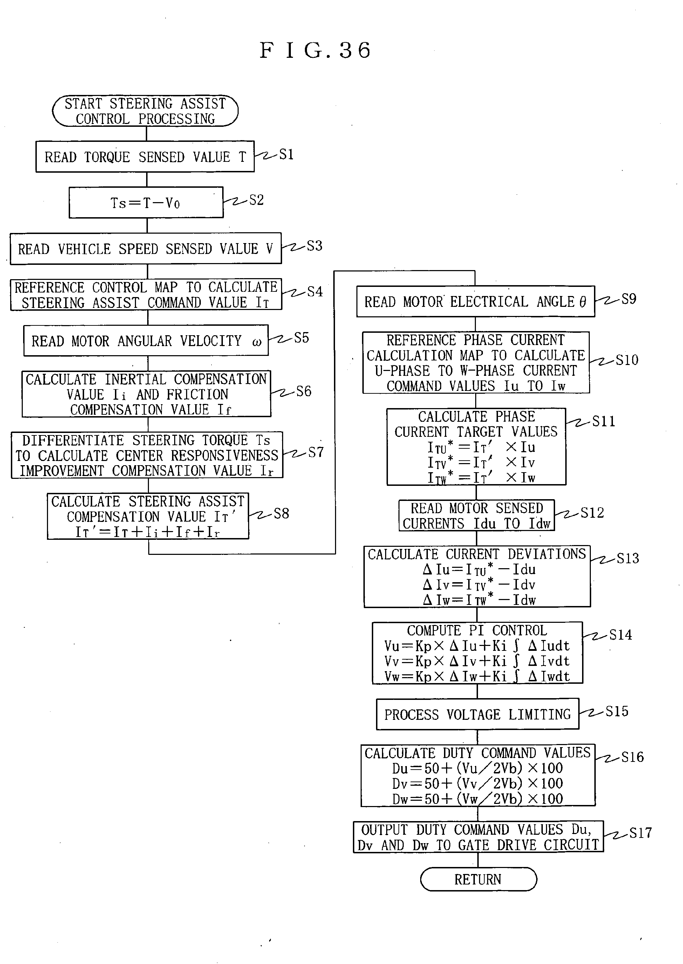

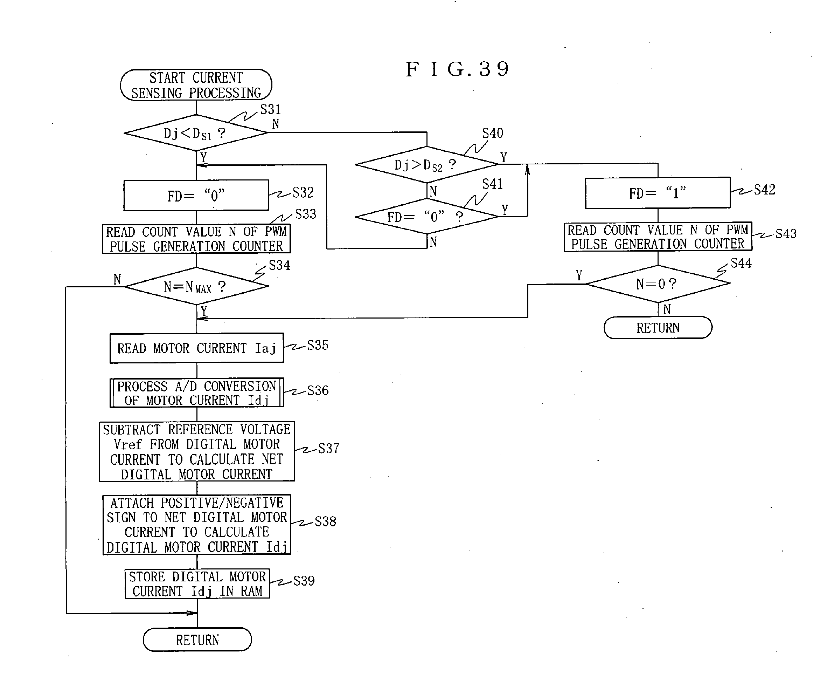

Furthermore, the microcomputer 218 comprises at least a central processing unit (CPU) 218a which executes arithmetic processing, a ROM 218b which stores processing programs of arithmetic processing executed by the central processing unit 218a, and a RAM 218c which stores values necessary in the processing procedure of the central processing unit 218a and processing results therefrom. Using the central processing unit 218a, the microcomputer 218 executes steering assist control processing shown in Figure 36 as well as current detection processing shown in Figure 39.

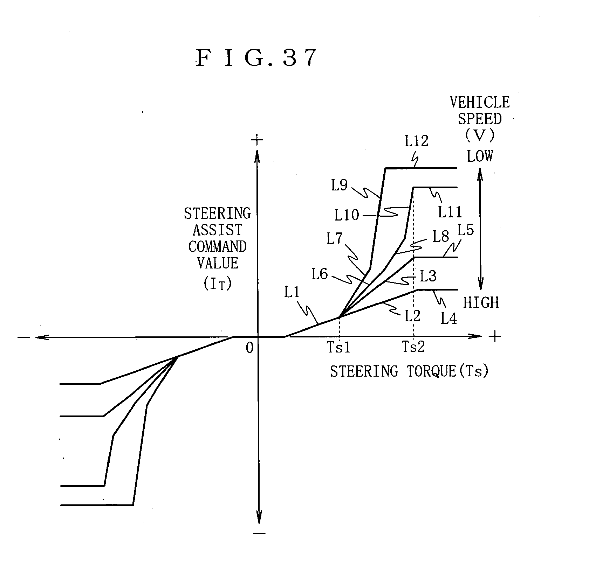

In the steering assist control processing shown in Figure 36, a torque sensed value T sensed by the steering torque sensor 3 is first read in step S1. The process then proceeds to step S2 to subtract a neutral voltage $V_0$ from the torque sensed value T to calculate a steering torque Ts (= T - $V_0$). The process then proceeds to step S3 to read a vehicle speed sensed value V sensed by the vehicle speed sensor 18, and proceeds to step S4 to calculate a steering assist command value IT which will be a motor current command value by referencing a steering assist command value calculation map shown in Figure 37, based on the steering torque Ts and the vehicle speed sensed value V.

As shown in Figure 37, the steering assist command value calculation map is composed of character line diagrams which take steering torque sensed value T as a horizontal axis and steering assist command value IT as a vertical axis, and use vehicle speed sensed value V as a parameter. Four characteristic lines are formed on the map, the lines comprising: a straight portion L1 which extends at a relatively gentle gradient regardless of vehicle speed sensed value V as steering torque Ta increases in a positive direction from "0" to a first set value Ts1; straight portions L2 and L3 which extend at relatively gentle gradients as steering torque Ta increases from the first set value Ts1 when vehicle speed sensed value V is relatively fast; straight portions L4 and L5 in which steering torque sensed value Ts becomes parallel to the horizontal axis in the vicinity of a second set value Ts2 which is greater than the first set value Ts1; straight portions L6 and L7 having relatively moderate gradients when vehicle speed sensed value V is slow; straight portions L8 and L9 having gradients which are steeper than the straight portions L6 and L7; a straight portion L10 with a gradient which is steeper than the straight portion L8; and straight portions L11 and L12 which respectively extend parallel to the horizontal axis from the ends of the straight portions L9 and L10. In a similar manner, when the steering torque Ts increases in a negative direction, the steering assist command value calculation map will be configured so that four characteristic lines will be formed which are symmetrical with respect to the point of origin to the above-described character lines.

The process then proceeds to step S5 to read motor acceleration $\omega$ calculated by the motor angular velocity conversion section 251, and proceeds to step S6 to multiply motor angular velocity $\omega$ by inertia gain $K_i$ and remove torques which cause motor inertia to increase or decrease from the steering torque Ts to calculate an inertial compensation value $I_i$ (= $K_i \cdot \omega$) for inertial compensation control in order to achieve a steering feel that does not accompany an inertial sensation, and to multiply the absolute value of the steering assist command value IT with friction coefficient gain $K_f$ to calculate a friction compensation value If (= $K_f \cdot |I_T|$) for friction compensation control in order to prevent friction of a power transmission section or the electric motor from influencing steering force. The sign of the friction compensation value If is determined based on the sign of the steering torque Ts and a steering direction signal which judges forward/reverse steering based on the steering torque Ts.

Next, the process proceeds to step S7 to perform differential operations on the steering torque Ts to calculate a center responsiveness improvement command value Ir which secures stability in assist characteristic blind sectors and performs static friction compensation. The process then proceeds to step S8 to add the calculated inertial compensation value $I_i$, friction compensation value $I_f$ and center responsiveness improvement command value Ir to calculate steering assist compensation value $I_T$' (= $I_T$ + $I_i$ + If + Ir), and subsequently proceeds to step S9.

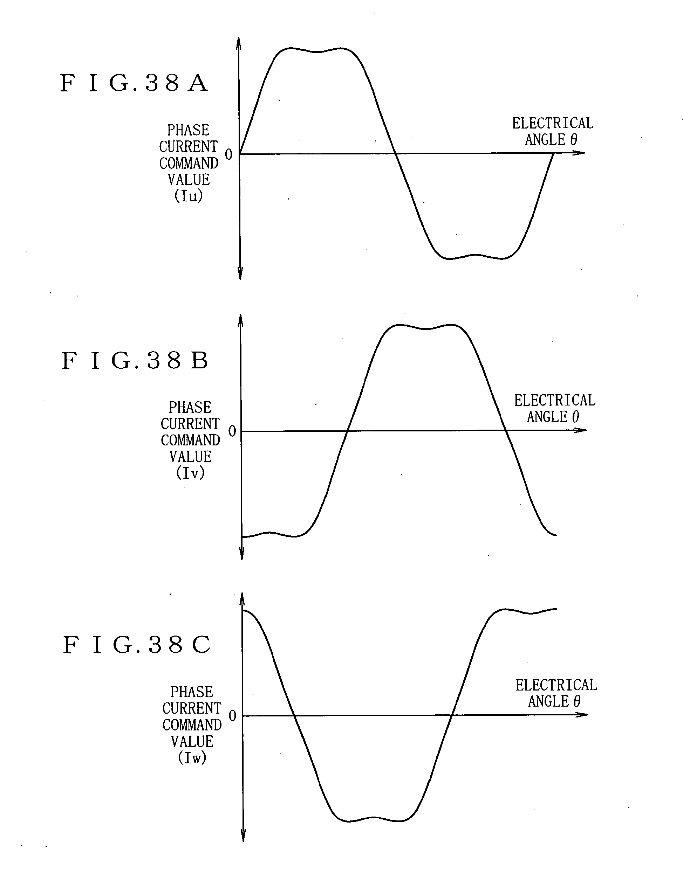

In step S9, the motor electrical angle $\theta$ converted by the electrical angle conversion section 250 is read, and after proceeding to step S10, U-phase to W-phase current command values Iu to Iw are calculated based on the motor electrical angle $\theta$ by referencing the U-phase to W-phase current calculation map shown in Figures 38A to 38C.

As shown in Figures 38A to 38C, the phase current calculation map represents a relationship between phase current command values Iu to Iw, which will assume the same waveforms as the induced voltage waveforms of the armature windings Lu to Lw of the unconnected brushless motor 12 which are formed in trapezoidal wave-like pseudo rectangular waves with rounded edges, formed by superimposing third and fifth harmonic waves on a sinusoidal wave, and the electrical angle θ. Each phase current command value Iu to Iw is 120 degrees out of phase from each other.

The process then proceeds to step S11 to multiply steering assist compensation value IT' by phase current command values Iu to Iw to calculate phase current target values $I_{TU}^*$ to $I_{TW}^*$. Next, in step S12, digital motor currents Idu to Idw obtained by performing A/D conversion on motor currents Iau to Iaw read from the motor current sensing sections 217u to 217w stored in the RAM through current sensing processing to be described later. The process subsequently proceeds to step S13.

In step S13, motor currents Idu to Idw are subtracted from the phase current target values $I_{TU}^*$ to $I_{TW}^*$ to calculate current deviations ΔIu to ΔIw, and proceeds to step S14 to perform PI computing described in the following formulas (19) to (21) to calculate voltage command values Vv to Vw.

$$Vu = Kp \times \Delta Iu + Ki\int\Delta Iudt \qquad \ldots\ldots (19)$$

$$Vv = Kp \times \Delta Iv + Ki\int\Delta Ivdt \qquad \ldots\ldots (20)$$

$$Vw = Kp \times \Delta Iw + Ki\int\Delta Iwdt \qquad \ldots\ldots (21)$$

where Kp denotes proportional gain and Ki denotes integral gain.

Next, the process proceeds to step S15 to perform voltage limiting processing in which voltage command values Vv to Vw calculated in step S14 are respectively limited by positive and negative battery voltages ±Vb, and subsequently proceeds to step S16.

In step S16, computation of the following formulas (22) to (24) is performed based on the voltage-limited voltage command values Vu to Vw to calculate duty command values Du to Dw of U to W phases.

$$Du = 50 + (Vu/2Vb) \times 100 \qquad \ldots\ldots (22)$$

$$Dv = 50 + (Vv/2Vb) \times 100 \qquad \ldots\ldots (23)$$

$$Dw = 50 + (Vw/2Vb) \times 100 \qquad \ldots\ldots (24)$$

The process then proceeds to step S17 to output duty command values Du to Dw calculated in the previous step S16 to the gate drive circuit 219, and returns to the aforementioned step S1.

The processing of Figure 7 corresponds to the drive control section.

In addition, the microcomputer 218 executes current sensing processing shown in Figure 39, in which motor currents Iau to Iaw, consisting of voltage values sensed by the motor current sensing section 217u to 217w, are calculated as digital values.

The current sensing processing is executed as timer interrupt processing of a predetermined time period, such as 250 usec, as shown in Figure 39. First, in step S31, the duty command value Dj (j = u, v, w) calculated in the above-described steering assist control processing is read, and determination is made on whether the duty command value Dj is below a preset hysteresis lower threshold $D_{S1}$ with a duty ratio of around and less then 50%. When Dj < $D_{S1}$, the process proceeds to step S32 to reset a location flag FD, which indicates that the duty ratio exists either below a hysteresis lower threshold $D_{S1}$ or above a hysteresis upper threshold $D_{S2}$, to "0" to indicate that the duty ratio exists below a hysteresis lower threshold $D_{S1}$, and subsequently proceeds to step S33.

In step S33, a count value N of an up/down counter for PWM pulse generation, composed of software counters provided in the gate drive circuit 219, which forms a triangular wave for performing pulse width modulation (PWM). The process then proceeds to step S34 to determine whether the count value N has reached a maximum value $N_{MAX}$ indicating an upper summit of the triangular wave, and when N < $N_{MAX}$, the process returns to the previous step S33, while when N = $N_{MAX}$, the process proceeds to step S35.

In step S35, a motor current Iaj inputted from the motor current sensing section 217j is read. The process then proceeds to step S36 to execute A/D conversion processing which converts the motor current Iaj into a digital value, and proceeds to step S37 to subtract a reference voltage Vref of an operational amplifier OPj of the motor current sensing section 217j from the digital motor current calculated in the A/D conversion processing to calculate a net digital motor current. The process subsequently proceeds to step S38 to calculate a digital motor current Idj by applying a negative sign to the calculated net digital motor current when the location flag FD is at "0" while applying a positive sign when the location flag FD is at "1", then proceeds to step S39 to store the calculated digital motor current Idj to the RAM 218c, and subsequently terminate the timer interrupt processing to return to a given main program.

In addition, when it is determined in the previous step S31 that $Dj \geq D_{S1}$, the process proceeds to step S40 to determine whether the duty command value Dj is above a preset hysteresis upper threshold $D_{S2}$ with a duty ratio of around and greater than 50%. When $Dj > D_{S2}$, the process proceeds to step S42, while when $Dj \leq D_{S2}$, the process proceeds to step S41 to determine whether the location flag FD has been reset to "0", and when the location flag FD is set to "1", the process proceeds to the aforementioned step S33, while when the location flag FD is reset to "0", the process proceeds to step S43.

In step S42, the location flag FD is set to "1", indicating that the duty ratio exists on the 100%-side of the hysteresis upper threshold $D_{S2}$, and the process proceeds to step S43.

In step S43, the above-described count value N of the up/down counter for PWM pulse generation is read. Next, in step S44, determination is made on whether the count value N has reached a minimum value 0 indicating an lower summit of the triangular wave, and when N > 0, the process returns to the aforementioned step S43, while when N = 0, the process proceeds to the aforementioned step S35.

The processing shown in Figure 39 and the motor current sensing sections 217u to 217w correspond to the current sensing means.

Next, operations of the above-described eighth embodiment will be explained.

It is assumed that a vehicle is in a rest state with its ignition switch turned off, no power is supplied to the drive control circuit 15, and no current is supplied to the respective armature windings Lu to Lw of the unconnected motor 12 which is in suspension.

In this state, by switching the ignition key 17 to an on-state, power from the battery 16 is applied to the drive control circuit 15 and activates the microcomputer 218 of the drive control circuit 15, and by switching the relay RY to an on-state, power from the battery B is supplied to the inverters 234u to 234 w while the steering torque sensor 3, the vehicle speed sensor 18 and the position sensing section 35 are respectively activated.

As a result, execution of the processing shown in Figures 36 and 39 are commenced by the central processing device 218a of the microcomputer 218 after performing predetermined initialization processing, while a PWM pulse generation counter composed of software counters is activated at the FET gate drive circuit 219.

At this point, the current sensing processing of Figure 39 performs initialization to store "0" as initial values of the digital motor currents Idu to Idw in the RAM 218c and to reset the location flag FD to "0".

In this state, it is assumed that the steering wheel 1 has not been steered, the steering torque sensed value T sensed by the steering torque sensor 3 is at voltage $V_0$, the vehicle is in a rest state and the vehicle speed V sensed by the vehicle speed sensor 18 also takes a value of "0".

In this state, when the steering assist control processing shown in Figure 36 is performed by the central processing unit 218a of the microcomputer 218, since the steering torque sensed value T is at voltage $V_0$, the steering torque Ts calculated in step S2 takes a value of "0", and since the vehicle is in a rest state and the vehicle speed sensed value V also takes a value of "0", the steering assist command value IT calculated by referencing the control map shown on Figure 37 takes a value of "0", and the respective compensation values $I_i$, If and Ir also take values of "0", and therefore the steering assist compensation value IT' also takes a value of "0".

At this point, when a phase of a rotor 20, sensed by the phase sensing section 35 of the unconnected motor 12, is supplied to the electrical angle conversion section 250 and the electrical angle θ is, for instance, at 0 degrees, a U-phase current command value Iu calculated by referencing the phase current command value calculation map shown in Figures 38A to 38C takes a value of "0", while a V-phase current command value Iv has a phase lag of 120 degrees in relation to the phase current command value Iu and therefore takes a value of -Imax, and a W-phase current command value Iw has a phase lead of 120 degrees in relation to the phase current command value Iu and therefore takes a value of +Imax.

The phase current command values Iu, Iv and Iw are multiplied by the steering assist command value IT to calculate phase current target values $I_{TU}{}^*$, $I_{TV}{}^*$ and $I_{TW}{}^*$, which all take values of "0" (step S11).

In addition, since the digital motor currents Idu, Idv and Idw stored in the RAM 218c also take initial values of "0", current deviations ΔIu, ΔIv and ΔIw also take values of "0" and voltage command values Vu, Vv and Vw calculated based thereon also take values of "0", and all duty command values Du, Dv and Dw will take values of 50%. Thus, duty command values Du, Dv and Dw of 50% will be outputted to the FET gate drive circuit 219.

Therefore, on/off ratios of the PWM signals Pu1, Pv1, Pw1 and the PWM signals Pu2, Pv2, Pw2 outputted from the FET gate drive circuit 219 become approximately equal to each other, and in the case of, for instance, the inverter 234u, since the duration of an on-state of the switching elements Tru1 and Tru4 will be equal to the duration of an on-state of the switching elements Tru2 and Tru3 and since such on-states will occur alternately, an average current will not flow through the armature winding Lu. Similarly, at the other inverters 234v and 234w, an average current will not flow through the armature windings Lv and Lw, and as a result, the unconnected brushless motor 12 retains its suspended state.

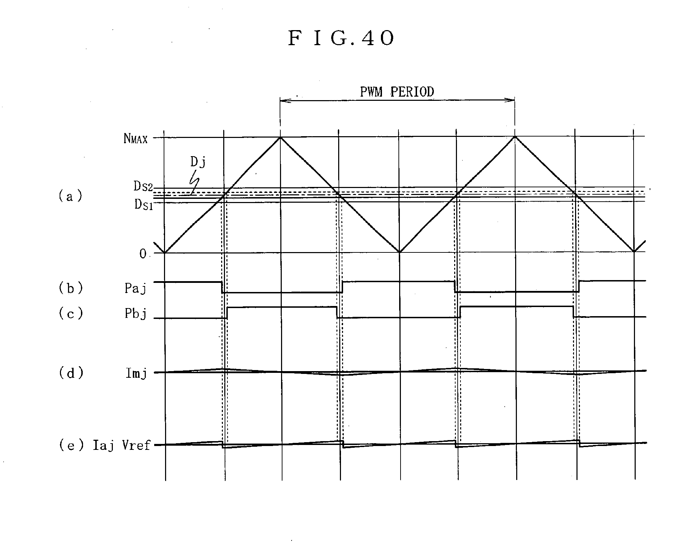

At this suspended state of the unconnected brushless motor 12, as shown in (a) of Figure 40, the count value N of the up/down counter for PWM pulse generation of the FET gate drive circuit 219 repetitively performs an up-count from "0" to $N_{MAX}$ and a down-count from $N_{MAX}$ to "0" at a regular PWM frequency. PWM signals Paj and Pbj, outputted from the gate drive circuit 219 based on the 50% duty command value Dj, are synchronized to the PWM frequency of the up/down counter for PWM pulse generation and have become pulses of opposite phases with equal on/off ratios, as shown in (b) and (c) of Figure 40.

Therefore, the actual motor current Imj which flows through the armature winding Lj of the unconnected brushless motor 12 repeats a condition of a slight increase from negative to positive and a condition of a slight decrease from positive to negative across "0", as shown in (d) of Figure 40.

At this point, motor current Iaj outputted from the operational amplifier OPj of the motor current sensing section 217j repeats a state of an increase from negative to positive in the vicinity of the reference voltage Vref, as shown in (e) of Figure 40.

Therefore, since the duty command value Dj is 50% and is greater than the hysteresis lower threshold $D_{S1}$ but lower than the hysteresis lower threshold $D_{S2}$ upon execution of the current sensing processing shown in Figure 39, the process proceeds from step S31 to step S41 via step S40 and the location flag FD is reset to "0". The process then proceeds to step S43 to read a count value N of the PWM pulse generation counter, reads the motor current Iaj outputted from the operational amplifier OPj when the count value N takes a value of "0" (step S35), performs A/D conversion processing on the read motor current Iaj to calculate a digital motor current (step S36), subtracts reference voltage Vref from the digital current to calculate a net motor current (step S37), attaches a negative sign to the net motor current based on the location flag FD value to calculate a digital motor current Idj (step S38), and stores the same in the RAM 218c (step S39). As a result, the calculated digital motor current Idj also retains a value of approximately "0".

In this rest state of the vehicle, when the driver performs static steering by, for instance, steering the steering wheel 1 to the right from a suspended state of the unconnected brushless motor 12, a steering torque sensed value T, corresponding to the steering torque of the driver, sensed by the steering torque sensor 3 increases accordingly to a level greater than voltage $V_0$, and the steering torque Ts takes a large positive value.

Therefore, the steering assist command value IT calculated by referencing the steering assist command value calculation map of Figure 3722 will take a relatively large value, and a steering assist compensation value IT' is calculated by adding compensation values $I_i$, If and Ir to the steering assist command value IT (step S8), to which positive phase current command values Iu, Iv and Iw calculated by referencing the phase current calculation maps shown in Figures 38A to 38C are multiplied in order to calculate phase current target values $I_{TU}{}^*$, $I_{TV}{}^*$ and $I_{TW}{}^*$ having the steering assist command value IT as amplitudes thereof (step S11).

At this point, since the A/D converted digital motor currents Idu, Idv and Idw maintain values of "0", phase current target values $I_{TU}{}^*$, $I_{TV}{}^*$ and $I_{TW}{}^*$ will be calculated as-is for the current deviations ΔIu, ΔIv and ΔIw. Relatively large voltage command values Vu, Vv and Vw will be calculated based thereon, and when the voltage command values Vu, Vv and Vw exceed the battery voltage +Vb, such values will be limited to the battery voltage +Vb (step S15).

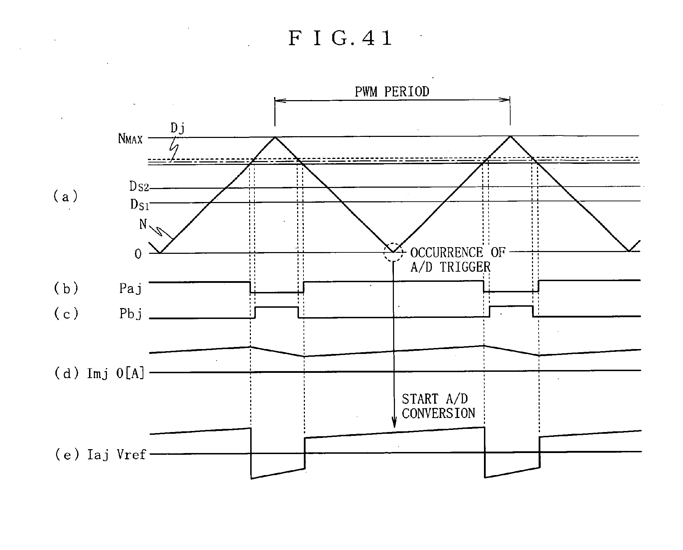

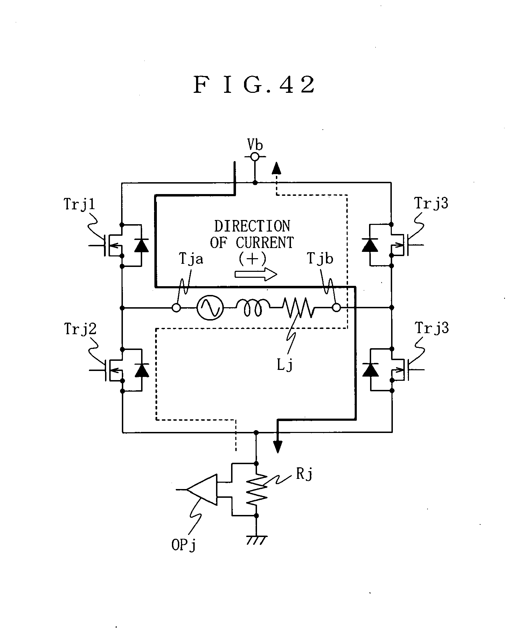

Subsequently, duty command values Du, Dv and Dw are calculated based on the limited voltage command values Vu, Vv and Vw and outputted to the gate drive circuit 219. Therefore, the PWM signal Paj outputted from the gate drive circuit 219 has, for instance, an on-interval that is longer than an off-interval as shown in (b) of Figure 41, while in contrast, the PWM signal Pbj has an off-interval that is longer than an on-interval as shown in Figure 26C. This causes a motor current to flow through the inverter 234j, as shown in Figure 42, from the switching element Trj1 to ground via the terminal tja, the armature winding Lj, the terminal tjb and the switching element Trj4 to rotationally drive the unconnected brushless motor 12 in, for instance, a clockwise direction. As a result, assist steering force according to the target assist steering torque Tt based on the steering torque T may be generated by the unconnected motor 12, and the assist steering force may be transferred to the steering shaft 2 via the reduction gear 11, enabling the driver to perform light steering.

Additionally, in the event that the duty command value Dj exceeds the hysteresis upper threshold $D_{S2}$ and takes a value close to 100% as shown in Figure 41, when a direction of flow from the terminal tja to terminal tjb is assumed to be positive, the motor current Imj flowing through the armature winding Lj repeats increasing at a gentle gradient from a positive predetermined value in an on-interval of the PWM signal Paj and slowly decreasing in an off-interval thereof, as shown in (d) of Figure 41. Therefore, the motor current Iaj outputted from an operational amplifier OPj of the motor current sensing section 117j, as shown in (e) of Figure 41, increases in the on-interval of the PWM signal Paj from a high value corresponding to the motor current Imj in regards to the reference voltage Vref. When the PWM signal Paj inverts from its on-state to its off-state, the motor current Iaj starts increasing from a voltage that is symmetrical to the then voltage with respect to the reference voltage Vref, and when the PWM signal Paj inverts from its off-state to its on-state, the motor current Iaj repeatedly starts increasing from a voltage that is symmetrical to the then voltage with respect to the reference voltage Vref.

In this state, in the current sensing processing of Figure 39, when the counter value N of the PWM pulse generation counter takes a value of "0", since the motor current Iaj is read from the motor current sensing section 217j and A/D conversion processing is performed on the read motor current Iaj prior to subtraction of the reference voltage Vref and sign attachment to calculate a digital motor current Idj, the digital motor current Idj will take a positive value equal to the actual motor current Imj flowing through the armature winding Lj shown in (d) of Figure 41, and will be stored in the RAM 218c.

The duty command values Du, Dv and Dw calculated in step S16 of the steering assist control processing of Figure 36 change according to motor rotation.

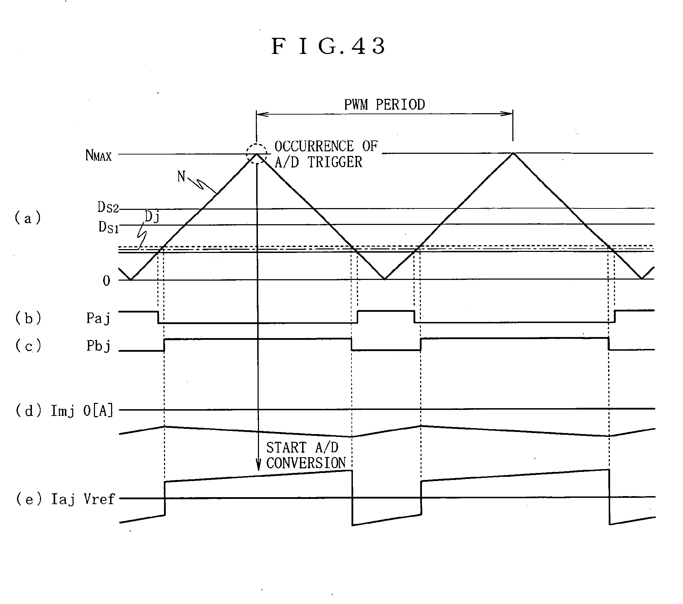

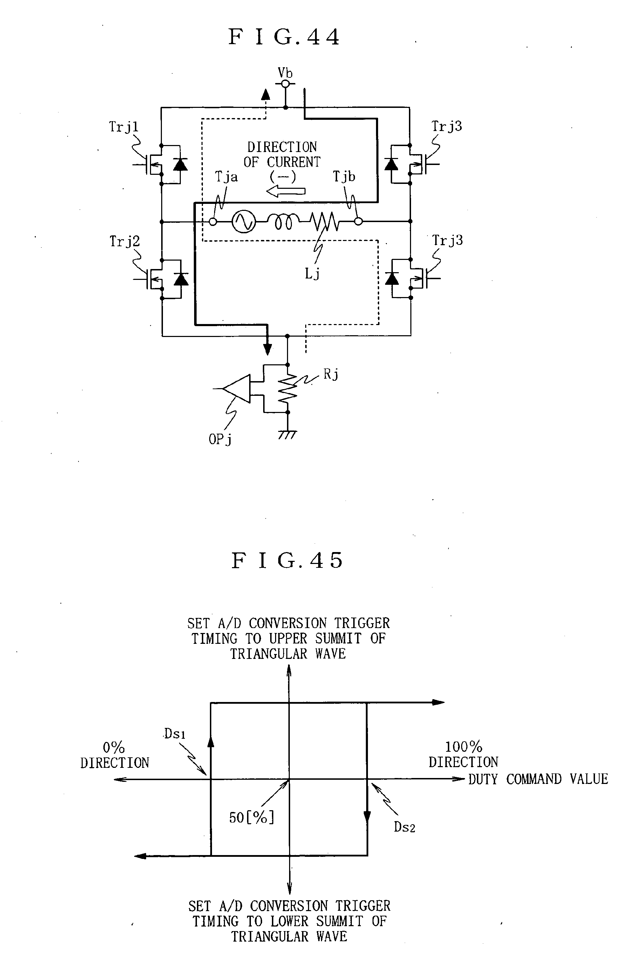

The PWM signal Paj outputted from the FET gate drive circuit 219 has, for instance, an off-interval that is longer than an on-interval as shown in (b) of Figure 43. In contrast, the PWM signal Pbj has an on-interval that is longer than an off-interval as shown in (c) of Figure 28. This causes a motor current to flow through the inverter 234j from the switching element Trj3 to ground as shown in Figure 44, via the terminal tjb, the armature winding Lj, the terminal tja and the switching element Trj2 to rotationally drive the unconnected brushless motor 12. As a result, assist steering force according to the target assist steering torque Tt based on the steering torque T may be generated by the unconnected motor 12, and the assist steering force may be transferred to the steering shaft 2 via the reduction gear 11, enabling the driver to perform light steering.

In the event that the duty command value Dj falls under the hysteresis upper threshold $D_{S1}$ and takes a value close to 0% as shown in Figure 43, since the motor current Imj flowing through the armature winding Lj flows from the terminal tjb to the terminal tja as shown in (d) of Figure 43, the motor current Imj repeats decreasing at a gentle gradient from a negative predetermined value in an on-interval of the PWM signal Pbj and slowly increasing in an off-interval thereof. Therefore, as shown in (e) of Figure 43, the motor current Iaj outputted from an operational amplifier OPj of the motor current sensing section 117j increases in the on-interval of the PWM signal Pbj from a high value corresponding to the absolute value of the motor current Imj in regards to the reference voltage Vref, and when the PWM signal Pbj inverts from its on-state to its off-state, the motor current Ibj starts increasing from a voltage that is symmetrical to the then voltage with respect to the reference voltage Vref, and when the PWM signal Pbj inverts from its off-state to its on-state, the motor current Ibj repeatedly starts increasing from a voltage that is symmetrical to the then voltage with respect to the reference voltage Vref.

In this state, in the current sensing processing of Figure 239, since $Dj < D_{S1}$, the process proceeds from step S31 to step S32 in which the location flag FD is reset to "0", and when the counter value N of the PWM pulse generation counter takes a maximum value of $N_{MAX}$, the motor current Iaj is read from the motor current sensing section 217j, A/D conversion processing is performed on the read motor current Iaj, and a negative sign is attached based on the location flag FD value to calculate a digital motor current Idj. Therefore, the digital motor current Idj will take a negative value equal to the actual motor current Imj flowing through the armature winding Lj shown in (d) of Figure 43, and will be stored in the RAM 218c.

Furthermore, according to motor rotation, there is a case in which the duty command value Dj takes a value that is greater than the hysteresis lower threshold $D_{S1}$ yet smaller than the hysteresis upper threshold $D_{S2}$.

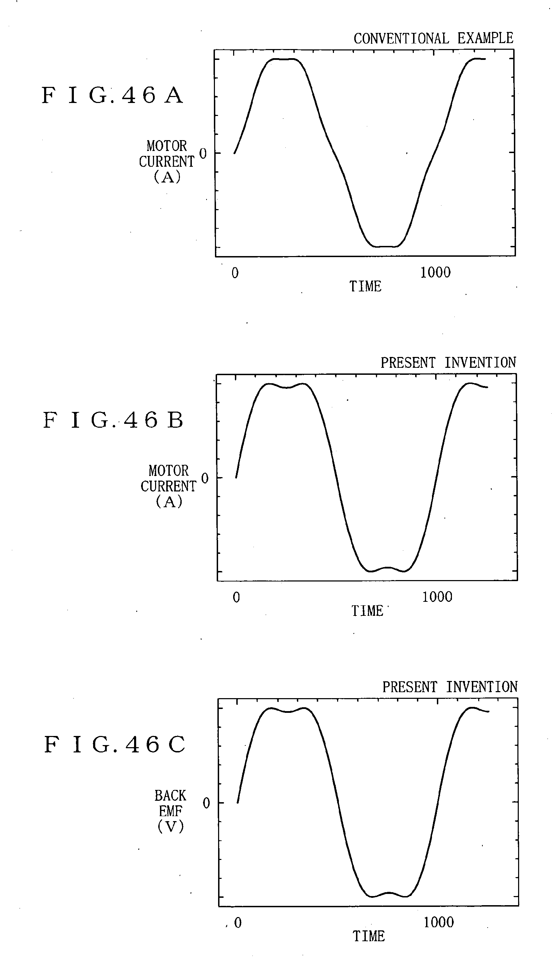

In such a case where a state in which the duty command value Dj exceeds the hysteresis upper threshold $D_{S2}$ changes to a state wherein the duty command value Dj falls below the hysteresis upper threshold $D_{S2}$, in the current sensing processing shown in Figure 39, the location flag FD is set to "1" in a state in which the duty command value dj exceeds the hysteresis upper threshold $D_{S2}$ as shown in Figure 45, and the process proceeds from step S31 to step S41 via step S40 when the duty command value Dj falls below the hysteresis upper threshold $D_{S2}$, as shown in Figure 39. Since the location flag FD is set to "1", the process proceeds to step S33 to change the timing of the trigger for A/D conversion processing, or in other words, to change the sampling timing so that the count value N of the PWM pulse generation counter takes a maximum value of $N_{MAX}$ in preparation of a case in which the motor current Imj assumes a negative direction.

Since the change of the trigger timing is performed prior to the duty command value Dj dropping to 50%, the digital motor current Idj will be calculated by temporarily A/D-converting a value that is smaller than the reference voltage Vref.

However, since the digital motor current Idj at this point has a duty ratio of close to 50%, a timing for reading the motor current Idj may be reliably secured, and since sign attachment is performed based on location flag FD value, a digital motor current Idj that is equivalent to the motor current Imj may be re-calculated.

Similarly, since the location flag FD is reset to "0" when the duty ratio Dj is lower than the hysteresis lower threshold $D_{S1}$, when the duty command ratio Dj exceeds the hysteresis lower threshold $D_{S1}$ from this state, the process proceeds from step S31 to step S41 via step S40 in the processing shown in Figure 39. Since the location flag FD is reset to "0", the process proceeds to step S43 to change the timing of the trigger for A/D conversion processing when the count value N of the PWM pulse generation counter takes a value of "0". Although the digital motor current Idj will be calculated by temporarily A/D-converting a value that is smaller than the reference voltage Vref, since sign attachment is performed based on the location flag FD value, a digital motor current Idj that is equivalent to the actual motor current may be calculated.

As seen, since hysteresis characteristics are provided for a duty command value Dj in the current sensing processing shown in Figure 39, when the vehicle is in translatory movement, the steering force transferred from the driver to the steering wheel 1 is small, and the duty command value Dj is changing slightly in the vicinity of 50%, occurrences of hunting to the trigger timing for A/D conversion may be reliably prevented and a stable steering state may be secured.

In addition, the voltage between terminals of a shunt resistor Rj inserted between a connection point of the switching elements Trj2 and Trj4 and ground is arranged to be amplified by the operational amplifier OPj of the motor current sensing section 217j and to be sensed as a variation in regards to the reference voltage Vref, the motor current Iaj outputted from the operational amplifier OPj does not include information indicating a direction of a current flowing through the armature winding Lj of the unconnected brushless motor 12. Therefore, the output dynamic range of the operational amplifier OPj may be arranged to take a value obtained by adding upper and lower margins to a voltage range from a voltage slightly below the reference voltage Vref when a change is made to the trigger timing of A/D conversion processing of the reference voltage Vref and a maximum voltage corresponding to a motor maximum current. As a result, bit rates, which may be expressed as motor current amount A/bit per 1 bit during A/D conversion processing, may be reduced to improve current sensing accuracy to almost twice as much as conventional examples, and inexpensive microcomputers may be applied.

Therefore, preferable steering assist control may be performed without influencing steering assist control of an electrical power steering device, and drive control circuits may be configured in an inexpensive manner.

Additionally, in the present embodiment, since the motor is not a motor in which one end or both ends of excitation coils are mutually connected, as is the case with conventional wye-connection motors or delta-connection motors, but instead is an unconnected brushless motor 12 in which each excitation coil Lu to Lw which form a three-phase brushless motor are independently wound without mutual interconnection, individual conduction control may be performed at each excitation coil Lu to Lw, allowing pseudo rectangular wave currents which include third and fifth harmonic waves to be applied without any restrictions. Therefore, the motor current waveform is arranged to assume a pseudo rectangular wave with rounded corners that is wide in relation to a sinusoidal wave similar to a back emf waveform.

For this reason, since the output of the unconnected motor 12 may be expressed as output = current × voltage = torque × rotational velocity, effective value may be significantly increased compared to a case in which a back emf and a drive current having a sinusoidal waves are used, making it possible to obtain a high-level output as well as a constant output that is free of torque ripples.

In comparison, while a back emf waveform may be arranged to assume a pseudo rectangular wave approximately similar to that of the present embodiment as shown in Figure 46C with a conventional connection brushless motor, a third harmonic component cannot be applied to an armature winding of the motor. Therefore, current waveform will take the form of a pseudo rectangular wave shown in Figure 46A which is narrower than the pseudo rectangular wave of the present embodiment shown in Figure 46B. The reduced area signifies that the effective value will be greater than a sinusoidal wave but nevertheless lower than that of the present embodiment, and output will be reduced accordingly.

Additionally, by using the unconnected brushless motor 12, respectively connecting inverter 234u, 234v and 234w to both ends of each excitation coil, and reverse-phase-driving each end of the excitation coils Lu, Lv and Lw, the voltage between terminals Vuab, Vvab and Vwab of each excitation coil may be respectively expressed by the formulas (25), (26) and (27) below, as described earlier.

$$Vun = 2 \times V_0 \times \sin(\omega t + \alpha) \qquad \ldots \ldots (25)$$

$$Vvn = 2 \times V_0 \times \sin(\omega t - 2\pi/3 + \alpha) \quad \ldots \ldots (26)$$

$$Vwn = 2 \times V_0 \times \sin(\omega t - 2\pi/3 + \alpha) \quad \ldots \ldots (27)$$

On the other hand, in the case of an equivalent circuit of a similarly configured wye-connection motor, since a voltage Vn of a neutral point at which ends of respective excitation coils Lu, Lv and Lw are connected may be expressed as Vn = 0 (V) as shown in the aforementioned Figure 9, voltage between terminals Vun, Vvn and Vwn of each excitation coil Lu, Lv and Lw may be expressed by the following formulas (28), (29) and (30).

$$Vun = V_0 \times sin(\omega t + \alpha) \qquad \ldots\ldots (28)$$

$$Vvn = V_0 \times sin(\omega t - 2\pi/3 + \alpha) \qquad \ldots\ldots (29)$$

$$Vwn = V_0 \times sin(\omega t - 2\pi/3 + \alpha) \qquad \ldots\ldots (30)$$

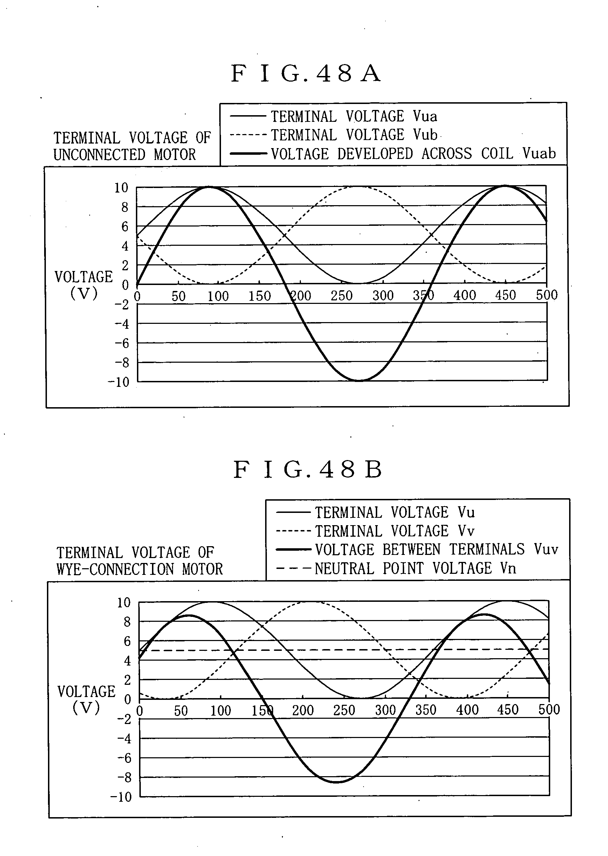

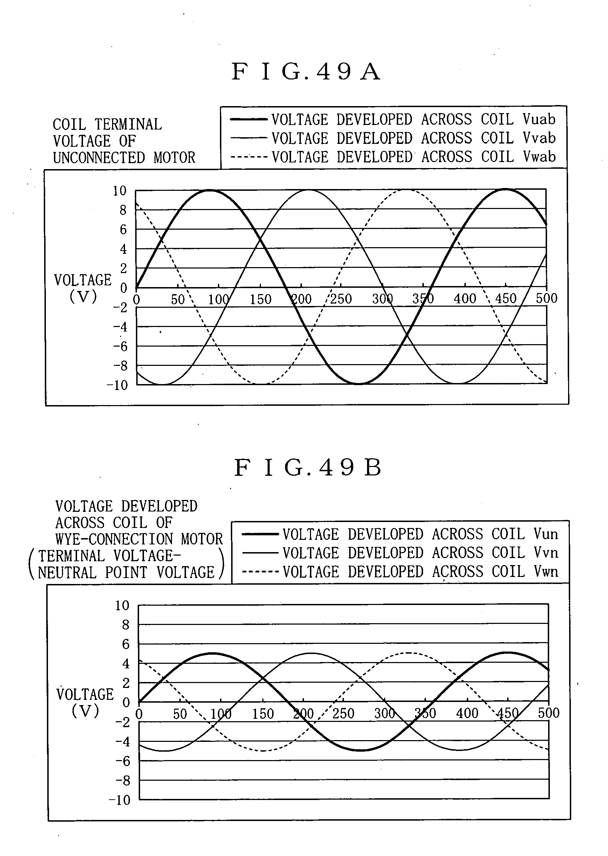

Therefore, taking the example of the excitation coil Lu, terminal voltages Vua, Vub and a voltage between the terminals Vuab of the unconnected motor 12 according to the present invention are as shown in Figure 48A, while a terminal voltage Vu, terminal voltage Vv, voltage between terminals Vuv and a neutral point voltage Vn will be as shown in Figure 48B. In the case of a conventional wye-connection motor, on the other hand, voltages between terminals Vuab, Vvab and Vwab of the unconnected motor 12 according to the present invention will be as shown in Figure 49A, while voltages developed across coils Vun, Vvn and Vwn in the case of a conventional wye-connection motor will be as shown in Figure 49B.

As is apparent from Figures 48A and 48B, and 49A and 49B, when comparing voltage magnitudes applicable across an excitation coil, the unconnected motor 12 is capable of achieving the same effect as in a case in which a wye-connection motor is driven at double the power supply voltage. Therefore, in the event that the battery voltage Vb is the same, since an unconnected motor is capable of improving drive voltage of the excitation coils Lu to Lw, smooth steering may be achieved without creating voltage shortages by generating optimum steering assist force when abrupt steering is performed on the steering wheel 1.

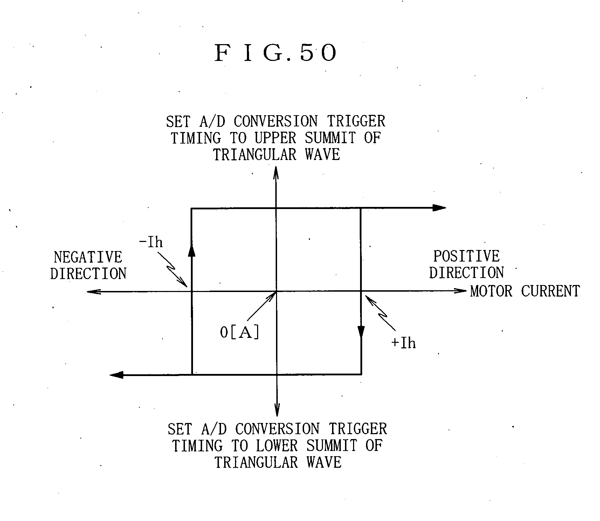

For the above-described eighth embodiment, as shown in Figure 45, while a case has been explained in which hysteresis characteristics which change trigger timings of A/D conversion processing are set based on duty command values Du to Dw, the present invention is not limited to this case. Alternatively, as shown in Figure 50, hysteresis characteristics may be provided based on a hysteresis lower threshold -Ih and a hysteresis upper threshold +Ih set across "0" in regards to digital currents Idu to Idw calculated in the last processing stored in the RAM 218c.

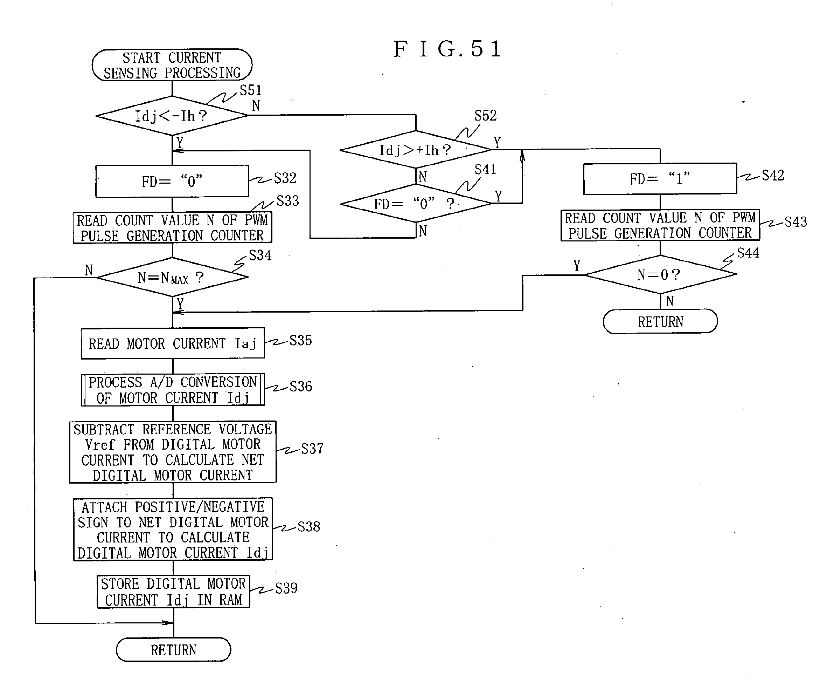

In this case, the current sensing processing executed by the central processing unit 218a of the microcomputer 218 should be changed as shown in Figure 51. More specifically, in the current sensing processing shown in Figure 51, the processes of steps S31 and S40 in the above-described processing of Figure 39 have been omitted and respectively replaced by: step S51, in which determination is made on whether a digital motor current Idj calculated during the previous current sensing processing stored in the RAM 218c is smaller than a hysteresis lower threshold -Ih, and when Idj < -Ih, the process proceeds to step S32, while when Idj ≥ -Ih, the process proceeds to step S52; and step S52, in which determination is made on whether the digital motor current Idj stored in the RAM 218c is greater than a hysteresis upper threshold +Ih, and when Idj ≤ +Ih, the process proceeds to step S39, while when Idj > +Ih, the process proceeds to step S42. Otherwise, the current sensing processing shown in Figure 51 is the same as the processing shown in Figure 39. Thus, processes corresponding to those of Figure 39 are assigned like step numbers, and detailed descriptions thereof will be omitted.

In the current sensing processing shown in Figure 51, when the digital motor current Idj stored in the RAM 218c during the previous processing is smaller than a hysteresis lower threshold -Ih, the location flag FD is reset to "0", and when the count value N of the PWM pulse generation counter takes a maximum value of $N_{MAX}$, a motor current Iaj is read from the motor current sensing section 217j to perform A/D conversion processing and then calculate a net motor current, to which a positive/negative sign is attached to be stored in the RAM 218c as a digital motor current Idj. In contrast, when the digital motor current Idj stored in the RAM 218c during the previous processing is greater than a hysteresis upper threshold +Ih, the location flag FD is set to "1", and when the count value N of the PWM pulse generation counter takes a minimum value of 0, a motor current Iaj is read from the motor current sensing section 217j to perform A/D conversion processing and then calculate a net motor current, to which a positive/negative sign is attached to be stored in the RAM 218c as a digital motor current Idj. Additionally, when the motor current Idj stored in the RAM 218c satisfies -Ih ≤ Idj ≤ +Ih, the process proceeds to step S41, and when the location flag FD is reset to "0", the process proceeds to step S43, while when the location flag FD is set to "1", the process further proceeds to step S33.

As a result, by merely changing the criterion for judgment of a trigger timing of A/D conversion processing to the digital motor current Idj, an effect similar to that of the above-described eighth embodiment may be obtained.

In addition, for the above-described eighth embodiment, while a case has been explained in which motor current sensing sections 217u to 217w are respectively provided between the connection points of the switching elements Trj2 and Trj4 of each inverter 234u to 234w and ground, the present invention is not limited to this case. Alternatively, an effect similar to that of the above-described eighth embodiment may be obtained by respectively inserting shunt resistors Ru to Rw between the connection points of the switching elements Trj1 and Trj3 of each inverter 234u to 234w and the positive electrode of the battery 16, and sensing the voltages developed across the shunt resistors Ru to Rw using operational amplifiers OPu to OPw.

Furthermore, for the above-described eighth embodiment, while a case has been explained in which an up/down counter for PWM pulse generation of the FET gate drive circuit 219 is configured as a software counter, the present invention is not limited to the above. Instead, a hardware-configured up/down counter for PWM pulse generation may be used, or an alternatively configured triangular wave generator arranged so as to be capable of notifying upper and lower summits of triangular waves to the central processing unit 218a of the microcomputer 18 may be applied.

Moreover, for the above-described eighth embodiment, while a case has been explained in which the microcomputer 218 and the FET gate drive circuit 219 are separate units, the present invention is not limited to this example. Instead, the central processing unit 218a of the microcomputer 218 may be provided with the function of the FET gate drive circuit 219.

Additionally, while the above-mentioned eighth embodiment described a case in which an induced voltage waveform and a drive current waveform of an unconnected motor assumes the same pseudo rectangular wave, the present invention is by no means restricted to this case. The same effect as the above embodiment may be achieved with an arrangement in which the phase and shape of the induced voltage waveform or the drive current waveform is unchanged while only the amplitude is changed.

Furthermore, for the above-described eighth embodiment, while a case has been explained in which a pseudo rectangular wave is formed by superimposing third and fifth harmonic waves to a sinusoidal wave, the present invention is not limited to this example. Alternatively, an arbitrary combination of third and higher harmonic waves may be superimposed, or a current waveform consisting solely of a sinusoidal wave without superimposing high harmonic waves may be used. In this case, the phase current calculation map is preferably a three-phase sinusoidal wave.

Moreover, while the above-mentioned eighth embodiment described a case in which the drive control circuit 15 has been given a simple configuration, the present invention is not limited to this example. Instead, phase current target values $I_{TU}{}^*$, $I_{TV}{}^*$ and $I_{TW}{}^*$ may be calculated by using the excellent properties of vector control to determine current command values of vector control d and q components, and subsequently converting the current command values into each phase current command value corresponding to each excitation coil Lu to Lw. Otherwise, everything may be arranged to be performed under vector control.

In addition, while the above-mentioned eighth embodiment described a case in which the armature windings Lu to Lw of the unconnected brushless motor 12 are provided with a winding arrangement corresponding to a wye-connection motor, the present invention is not limited to this example, and a winding arrangement corresponding to a conventional delta-connection motor may be used instead.

Furthermore, for the above-described eighth embodiment, while a case in which the present invention has been applied to an unconnected three-phase brushless motor has been explained, the present invention is not limited to this case. Instead, the present invention may be applied to a brushless motor or other motors with a plurality (N number, where N is an integer greater than or equal to 3) of phases.

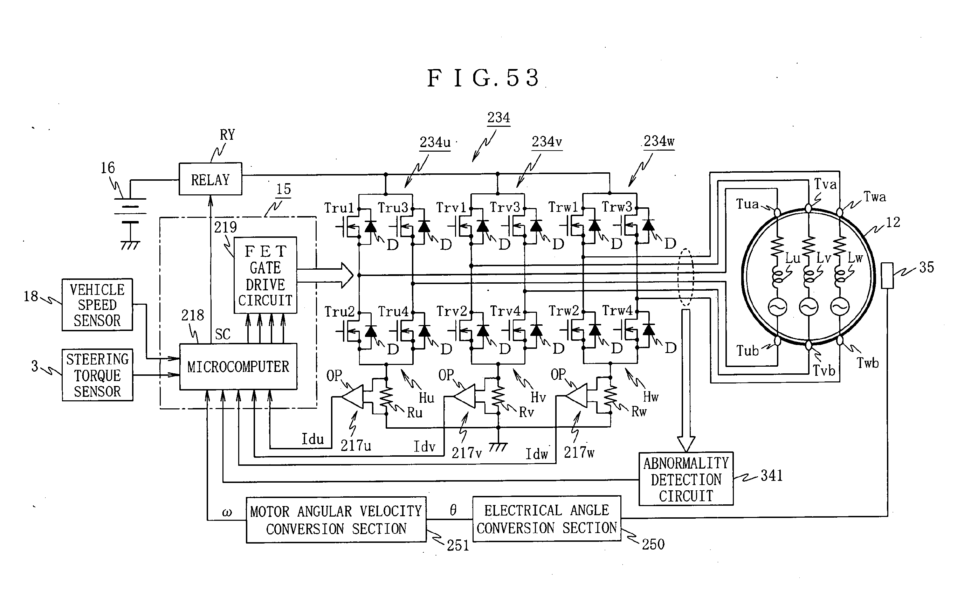

A ninth embodiment of the present invention will now be described with reference to Figures 53 to 58, 59A and 59B, 60A and 60B, and 61 to 65.

The ninth embodiment is arranged so that, when an on-abnormality of a switching element, a short-to-power or short-to-ground and the like of a motor harness occurs at a drive control section of an inverter and the like in a control device of an unconnected motor, such occurrences are accurately sensed, and driving of a brushless motor is continued to generate a predetermined torque even when such an on-abnormality of a switching element, a short-to-power or short-to-ground and the like of a motor harness occurs at a drive control section of an inverter and the like.

More specifically, in the ninth embodiment, the configurations of the electric power steering device and the unconnected motor are similar to those of the aforementioned eighth embodiment. However, as shown in Figure 53, an abnormality detection circuit 341 has been provided for individually sensing the voltages of the motor harnesses MH1 to MH6 which connect the inverter 134 and each terminal tua to twb of the armature windings Lu to Lw of the unconnected brushless motor 12, or in other words, the voltage developed across the unconnected brushless motor 12, and abnormality detection signals AS outputted from the abnormality detection circuit 341 are input to the drive control circuit 15.

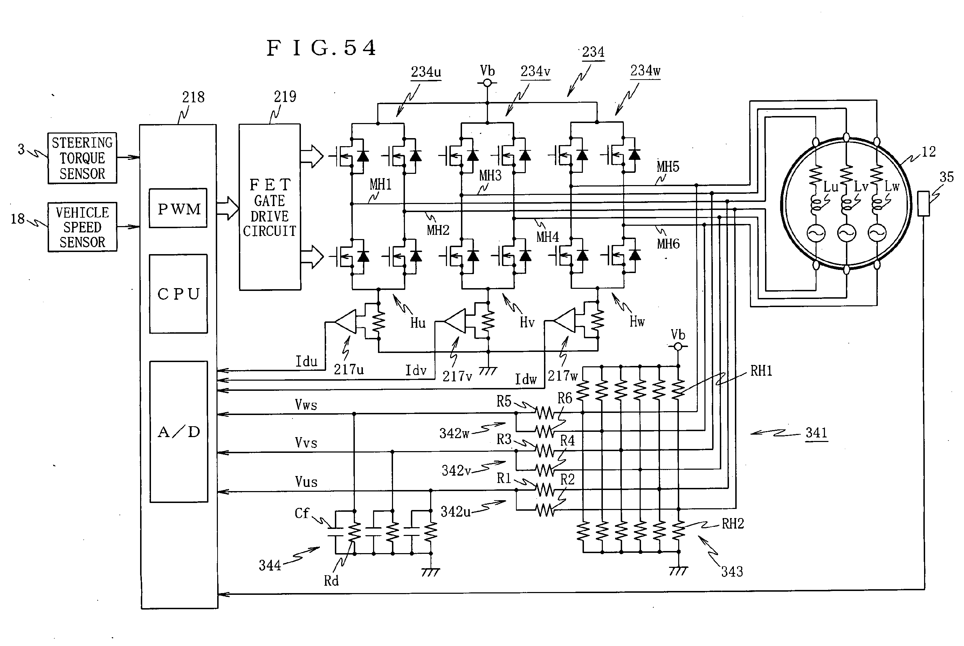

As shown in Figure 54, the abnormality detection circuit 341 comprises: an adder circuit 342u configured by interconnecting ends of a resistor R1 and a resistor R2 which have their other ends connected to the motor harnesses MH1 and MH2; an adder circuit 342v configured by interconnecting ends of a resistor R3 and a resistor R4 which have their other ends connected to the motor harnesses MH3 and MH4; an adder circuit 342w configured by interconnecting ends of a resistor R5 and a resistor R6 which have their other ends connected to the motor harnesses MH5 and MH6; a bias circuit 343 which applies a voltage Vb/2 as a bias voltage, obtained by voltage-dividing a battery voltage Vb with resistors RH1 and RH2 with impedances that are high compared to an on-resistance of the switching element to be sensed, resistance values of short-to-power and short-to-ground, and excitation coil resistance value of the motor, between each resistor R1 to R6 of each adder circuit 342u to 342w and motor harnesses MH1 to MH6; and a voltage-divider/filter circuit 344, which voltage-divides added output outputted by the adder circuits 342u to 42w, configured by a resistor Rd connected between added output to be filter-processed and ground, and a parallel circuit of a condenser Cf.

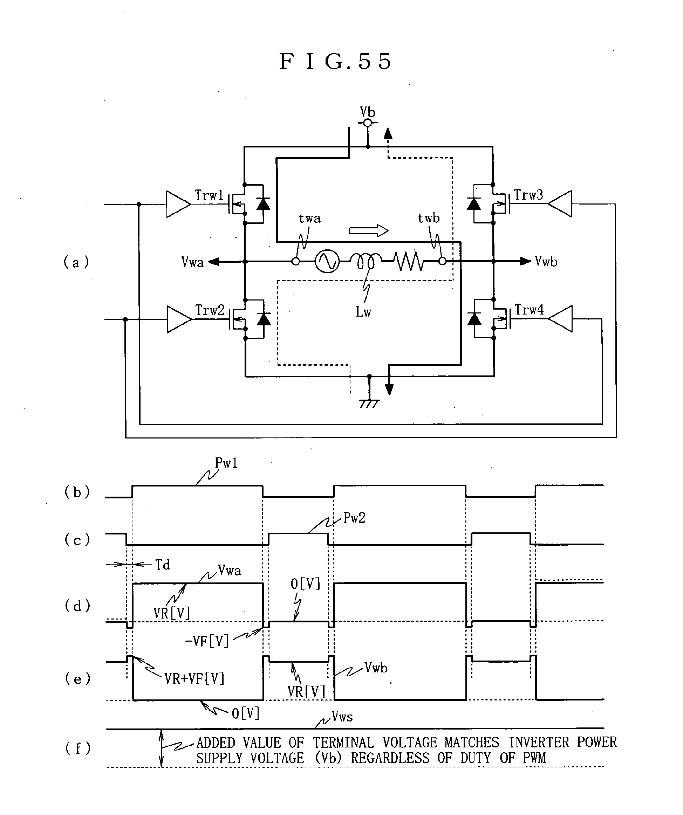

The abnormality detection circuit 141 is capable of detecting on-abnormalities of the switching elements Tru1 to Tru4 of the inverter 234u to 234w and abnormalities of the motor harnesses MH1 to MH6 because, as described later, for instance, a PWM signal Pw1 supplied to the switching elements Tru1 and Tru4 of a normal inverter circuit 234w and a PWM signal Pw2 supplied to the switching elements Trw2 and Trw3 are arranged as shown in (b) and (c) of Figure 55 so that the PWM signal Pw2 is in an off-state in an interval in which the PWM signal Pw1 is in an on-state, and a dead time Td is provided for avoiding a simultaneous on-state between the signals. When the duty ratios of the PWM signals Pw1 and Pw2 satisfy Pw1 > Pw2, as shown in (b) and (c) of Figure 55, a current flows through the inverter 234w from a positive electrode-side terminal of the battery 16 to ground via the switching element Trw1, the terminal twa, the excitation coil Lw, the terminal twb, and the switching element Trw4, as shown in (a) of Figure 55.

Therefore, for instance, as shown in (d) of Figure 55, a terminal voltage Vwa at the terminal twa of the excitation coil Lw of the unconnected brushless motor 12 that is sensed by the motor harness MH5 takes a value of approximately the battery voltage Vb [V], or to be precise, a voltage [Vb - Ron × Im] obtained by subtracting a voltage [Ron × Im] obtained by multiplying an on-resistance Ron of the switching element Tru1 with the motor current Im from the battery voltage Vb in an on-state interval of the PWM signal Pw1. In a dead time Td interval during which the PWM signal Pw1 changes from an on-state to an off-state, the terminal voltage Vwa takes a slightly negative value of -Vf. Subsequently, in an interval during which the PWM signal Pw2 maintains an on-state, the terminal voltage Vwa takes a value of approximately 0 [V], or to be precise, [- Ron × Im]. The terminal voltage Vwa once again takes a negative value of -Vf at the next dead time Td interval, and when the PWM signal Pw1 returns to an on-state, the terminal voltage Vwa takes a value of approximately the battery voltage Vb, or to be precise, a voltage [Vb - Ron × Im]. The cycle is hereafter repeated.

In contrast, as shown in (e) of Figure 55, a terminal voltage Vwb at the terminal twb of the excitation coil Lw of the unconnected brushless motor 12 that is sensed by the motor harness MH6 takes a value of approximately the battery voltage, or to be precise, a voltage obtained by adding a voltage [Ron × Im], obtained by multiplying an on-resistance Ron by the motor current Im, to the battery voltage Vb in an on-state interval of the PWM signal Pw2. In a dead time Td interval during which the PWM signal Pw2 changes from an on-state to an off-state, the terminal voltage Vwb takes a value obtained by adding a small voltage Vf to the battery voltage Vb. Subsequently, in an interval during which the PWM signal Pw1 retains an on-state, the terminal voltage Vwb takes a value of approximately 0 [V], or to be precise, a voltage of [Ron × Im].

Therefore, in a normal state in which the switching elements Trw1 to Trw4 are normal and no short-to-power and short-to-ground have occurred at the motor harnesses MH5 and MH6, the added voltage Vws obtained by adding the terminal voltages Vwa and Vwb at the adder circuit 342w and outputted from the abnormality detection circuit 341 matches the battery voltage Vb regardless of the duty ratios of the PWM signals Pw1 and Pw2, as shown in (f) of Figure 55.

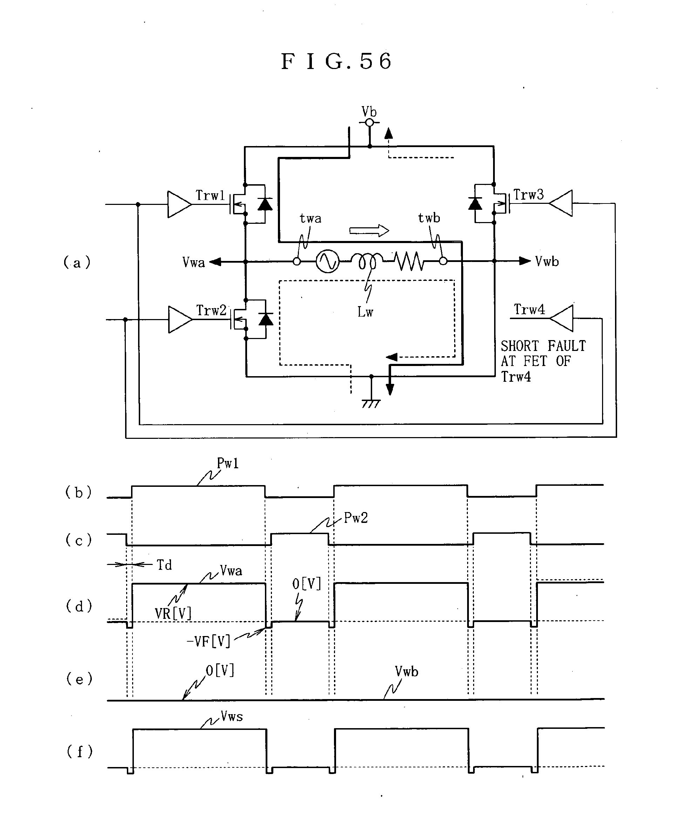

However, as shown in (a) of Figure 56, when an on-abnormality occurs at which an on-state of the switching element Trw4 of the inverter 234w continues, since the switching element Trw1 is normal, the terminal voltage Vwa alternates between an approximate battery voltage Vb [V] and an approximate 0 [V] as shown in (d) of Figure 56 in the same manner as shown in (d) of Figure 55, while the terminal voltage Vwb will be fixed at an approximate 0 [V], as shown in (e) of Figure 55.

As a result, the terminal voltage Vwa will appear as-is as the added voltage Vws outputted from the adder circuit 342w and voltage-divided, as shown in (f) of Figure 56.

This enables accurate detection of terminal voltage abnormalities by either calculating an average value of added voltages or measuring level changes in waveforms of added voltages.

As shown in Figures 53 and 54, the drive control circuit 15 is comprised of a microcomputer 218 having an A/D conversion input terminal which performs A/D conversion on inputted signals, and an FET gate drive circuit 219, to which PWM duty command values Du, Dv and Dw outputted from the microcomputer 218 is inputted, which outputs PWM signals Pu1, Pv1 and Pw1 having duty ratios according to the PWM duty command values Du, Dv and Dw corresponding to the switching elements Tru1 to Trw4 of each inverter 234u, 234v and 234w, as well as PWM signals Pu2, Pv2 and Pw2 obtained through on/off inversion of the PWM signals Pu1, Pv1 and Pw1.

Motor currents Idu to Idw sensed by the motor current sensing sections 217u to 217w, as well as steering torque sensed value T outputted from the steering torque sensor 3 and added voltages Vus to Vws outputted from the abnormality detection circuit 341, are inputted to the A/D conversion input terminal of the microcomputer 218. In addition, a vehicle speed sensed value V sensed by the vehicle speed sensor 18, a phase sensed signal sensed by a phase sensing section 35 and converted into an electrical angle θ at an electrical angle conversion section 250, and a motor angular velocity ω calculated by differentiating the electrical angle θ at the motor angular velocity conversion section 251 as a rotational velocity sensing section are inputted to the other input terminal of the microcomputer 218.

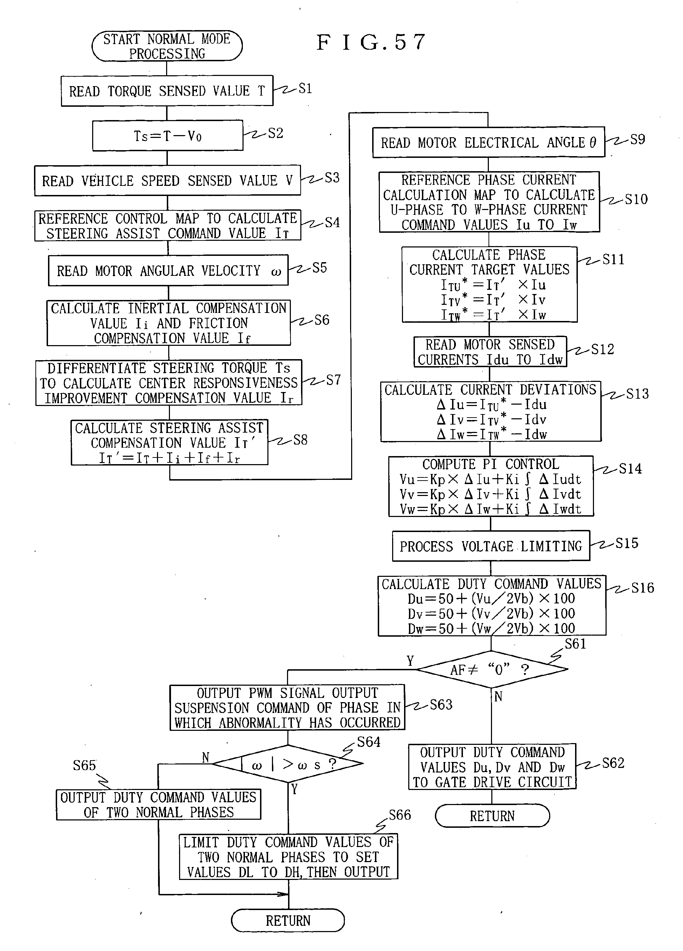

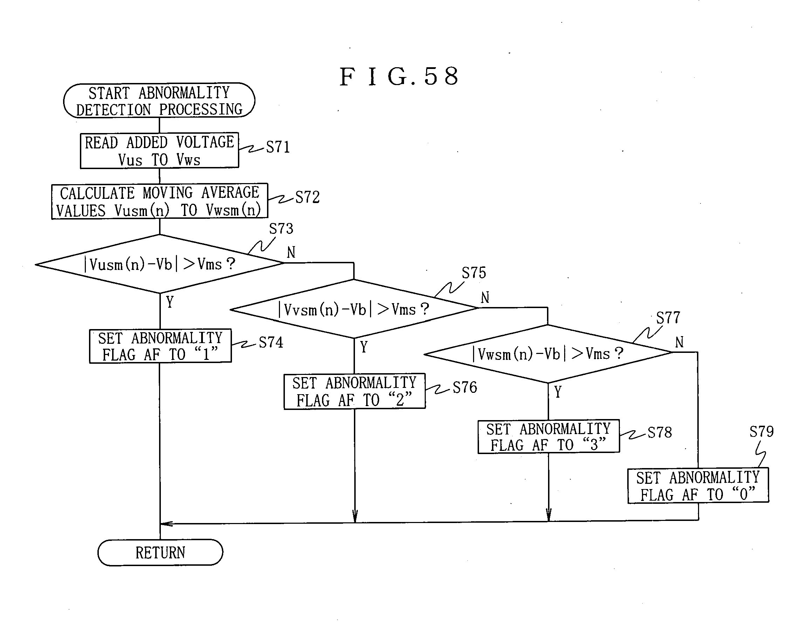

In addition, the microcomputer 218 executes the steering assist control processing shown in Figure 57 and the abnormality detection processing shown in Figure 58.

As shown in Figure 57, in steering assist control processing, the same processes are performed as the steering assist control processing of the above-described eighth embodiment shown in Figure 36, with the exception of an abnormal-time control process provided next to step S16 in the processing shown in Figure 36. Processes corresponding to those in Figure 36 are assigned like step numbers, and detailed descriptions thereof will be omitted.

The abnormal-time control processing first proceeds from step S16 to step S61 to determine whether an abnormality flag AF set during the abnormality detection processing, to be described later, is set to a value other than "0". If the abnormality flag AF is set to "0", it is determined that no abnormalities have occurred at the motor drive system consisting of inverters 234u to 234w, motor harnesses MH1 to MH6, and armature windings Lu to Lw. The process then proceeds to step S62 to output the duty command values Du to Dw calculated in the aforementioned step S16 to the gate drive circuit 219, and returns to the aforementioned step S1.

On the other hand, if the result of the determination of step S61 is that the abnormality flag AF is set to "1" to "3" and not to "0", it is determined that an abnormality has occurred at the motor drive system consisting of inverters 234u to 234w, motor harnesses MH1 to MH6, and armature windings Lu to Lw. The process then proceeds to step S63 in which, if the abnormality flag AF is "1", the abnormality is determined to be an abnormality of the U-phase drive system, and a PWM signal output suspension command for suspending output of U-phase PWM signals Pu1 and Pu2 is outputted to the gate drive circuit 219. The process then proceeds to step S64.

In step S64, determination is made on whether the absolute value $|\omega|$ of the motor angular velocity ω exceeds respective set values ωs which determine whether a state of high-speed steering in which an electrical angle interval incapable of generating a preset drive torque occurs. When $\omega \leq \omega s$, the region is determined to be a low-speed steering region in which drive torque may be generated in all electrical angle intervals, and the process proceeds to step S65 to output two normal phases worth of duty command values set in the aforementioned step S16 to the gate drive circuit 219 before returning to the aforementioned step S1. When $|\omega| > \omega s$, the region is determined to be a high-speed steering region, and the process proceeds to step S66 to limit duty command values of two normal phases to a range of duty command values DL to DH that are symmetrical with respect to 50% which corresponds to the vicinity of a maximum velocity in the low-speed steering region, and outputs the limited duty command values to the gate drive circuit 219 before returning to the aforementioned step S1.

In the processing shown in Figure 57, the processing performed in steps S1 to S16 and S62 correspond to the drive control section, the processing performed in steps S61 and S63 to S66 correspond to the abnormal-time control section, and the processing performed in steps S64 and S66 correspond to the motor velocity inhibition section.

In addition, the microcomputer 218 executes abnormality detection processing shown in Figure 58 for detecting switching element abnormalities in the inverters 234u to 234w, and abnormalities due to short-to-power and short-to-ground in the motor harnesses MH1 to MH6 and armature windings Lu to Lw.

The abnormality detection processing is executed as timer interrupt processing of a predetermined frequency, such as 10 msec, as shown in Figure 58. First, in step S71, present added voltages Vus(n) to Vws(n) outputted from the abnormality detection circuit 341 are read. The process next proceeds to step S72 to perform a moving average computation expressed by the formulas (31) to (33) below based on the read added voltages Vus(n) to Vws(n) to calculate moving average values Vusm(n) to Vwsm (n).

$$Vusm(n) = (1 - a)Vusm(n - 1) + a \cdot Vus(n) \quad \ldots \ldots \quad (31)$$

$$Vvsm(n) = (1 - a)Vvsm(n - 1) + a \cdot Vvs(n) \quad \ldots \ldots \quad (32)$$

$$Vwsm(n) = (1 - a)Vwsm(n - 1) + a \cdot Vws(n) \quad \ldots \ldots \quad (33)$$

where n = 1, 2, 3..., initial values Vusm(0) = Vvsm(0) = Vwsm(0) = Vb, a denotes a data weighting factor which satisfies 0 < a < 1, and Vusm(n - 1) denotes a previous moving average value.

Next, the process proceeds to step S73 to determine whether the absolute value of (Vusm(n)-Vb), obtained by subtracting the battery voltage Vb from the moving average value Vusm(n), exceeds a preset threshold Vms. When |Vusm(n) - Vb| > Vms, the abnormality is determined to be a U-phase on-abnormality in which the switching elements Tru1 to Tru4 of the inverter 234u are fixed to on-states, or an abnormality of the U-phase drive system in which a short-to-power or a short-to-ground has occurred in the motor harnesses MH1, MH2 and the armature winding Lu, and the process proceeds to step S74 to set the abnormality flag AF to "1" which indicates a U-phase abnormality. The timer interrupt processing is then terminated to return to a predetermined main program.

In addition, if the determination of step S73 results in |Vusm(n) - Vb| ≤ Vms, the U-phase drive system is determined to be normal and the process proceeds to step S75 to determine whether the absolute value of (Vvsm(n)-Vb), obtained by subtracting the battery voltage Vb from the moving average value Vvsm(n), exceeds a preset threshold Vms. When |Vvsm(n) - Vb| > Vms, the abnormality is determined to be a V-phase on-abnormality in which the switching elements Trv1 to Trv4 of the inverter 234v are fixed to on-states, or an abnormality of the V-phase drive system in which a short-to-power or a short-to-ground has occurred in the motor harnesses MH3, MH4 and the armature winding Lv, and the process proceeds to step S76 to set the abnormality flag AF to "2" which indicates a V-phase abnormality. The timer interrupt processing is then terminated to return to a predetermined main program.

Furthermore, if the determination of step S75 results in |Vvsm (n) - Vb| ≤ Vms, the V-phase drive system is determined to be normal and the process proceeds to step S77 to determine whether the absolute value of (Vwsm (n)-Vb), obtained by subtracting the battery voltage Vb from the moving average value Vwsm(n), exceeds a preset threshold Vms. When |Vwsm (n) - Vb| > Vms, the abnormality is determined to be a W-phase on-abnormality in which the switching elements Trw1 to Trw4 of the inverter 234v are fixed to on-states, or an abnormality of the W-phase drive system in which a short-to-power or a short-to-ground has occurred in the motor harnesses MH5, MH6 and the armature winding Lw, and the process proceeds to step S78 to set the abnormality flag AF to "3" which indicates a W-phase abnormality. The timer interrupt processing is then terminated to return to a predetermined main program.

Moreover, if the determination of step S77 results in |Vwsm(n) - Vb| ≤ Vms, all of the U-phase to W-phase drive systems are determined to be normal, and the process proceeds to step S79 to reset the abnormality flag AF to "0". The timer interrupt processing is then terminated to return to a predetermined main program.

The processing shown in Figure 58 and the abnormality detection circuit 341 correspond to the abnormality detection section.

Next, operations of the above-described ninth embodiment will be explained.

It is assumed that a vehicle is in a rest state, the unconnected motor 12 is in suspension, the steering wheel 1 has not been steered, and the steering torque sensed value T sensed by the steering torque sensor 3 takes a value of voltage $V_0$.

In this state, when the steering assist control processing shown in Figure 57 is performed by the microcomputer 218, since the steering torque sensed value T is at voltage $V_0$, the steering torque Ts calculated in step S2 takes a value of "0", and since the vehicle is in a rest state and the vehicle speed sensed value V also takes a value of "0", the steering assist command value IT calculated by referencing the control map of the above-described Figure 37 takes a value of "0" and the respective compensation values $I_i$, If and Ir also take values of "0", and therefore the steering assist compensation value IT' also takes a value of "0".

At this point, when a phase of a rotor 20, sensed by the phase sensing section 35 of the unconnected motor 12, is supplied to the electrical angle conversion section 250 and the electrical angle θ is, for instance, 0 degrees, a U-phase current command value Iu calculated by referencing the phase current command value calculation map shown in Figures 38A to 38C described earlier takes a value of "0", while a V-phase current command value Iv has a phase lag of 120 degrees in relation to the phase current command value Iu and therefore takes a value of -Imax, and a W-phase current command value Iw has a phase lead of 120 degrees in relation to the phase current command value Iu and therefore takes a value of +Imax.

The phase current command values Iu, Iv and Iw are multiplied by the steering assist command value IT to calculate phase current target values $I_{TU}{}^*$, $I_{TV}{}^*$ and $I_{TW}{}^*$, which all take values of "0" (step S11).

In addition, since the motor currents Idu, Idv and Idw sensed by the motor current sensing sections 217u, 217v and 217w also take values of "0", phase deviations ΔIu, ΔIv and ΔIw also take values of "0" and voltage command values Vu, Vv and Vw calculated based thereon also take values of "0", and all duty command values Du, Dv and Dw will take values of 50%. Thus, if the unconnected brushless motor 12 and its drive systems are assumed to be normal, duty command values Du, Dv and Dw of 50% are outputted to the gate drive circuit 219.

Therefore, on/off ratios of the PWM signals Pu1, Pv1, Pw1 and the PWM signals Pu2, Pv2, Pw2 outputted from the gate drive circuit 219 become approximately equal to each other, and in the case of, for instance, the inverter 234u, since the duration of an on-state of the switching elements Tru1 and Tru4 will be equal to the duration of an on-state of the switching elements Tru2 and Tru3 and since such on-states will occur alternately, current will not flow through the armature winding Lu. Similarly, at the other inverters 234v and 234w, current will not flow through the armature windings Lv and Lw, and as a result, the unconnected brushless motor 12 maintains its suspended state.

When the driver performs a so-called static steering by, for instance, steering the steering wheel 1 to the right from a suspended state of the unconnected brushless motor 12 in the rest state of the vehicle, a steering torque sensed value T, corresponding to the steering torque of the driver and sensed by the steering torque sensor 3 increases accordingly to a level greater than voltage $V_0$, and the steering torque Ts takes a large positive value.

Therefore, the steering assist command value IT calculated by referencing the steering assist command value calculation map of Figure 37 will take a relatively large positive value, and a steering assist compensation value IT' is calculated by adding compensation values $I_i$, If and Ir to the steering assist command value IT (step S8), to which positive phase current command values Iu, Iv and Iw calculated by referencing the phase current calculation maps shown in Figures 38A to 38C are multiplied in order to calculate phase current target values $I_{TU}^*$, $I_{TV}^*$ and $I_{Tw}^*$ having the steering assist command value IT as amplitudes thereof (step S11).

At this point, since the motor currents Idu, Idv and Idw maintain values of "0", phase current target values $I_{TU}^*$, $I_{TY}^*$ and $I_{TW}^*$ will be calculated as-is for the current deviations ∆Iu, ∆Iv and ∆Iw. Relatively large positive voltage command values Vu, Vv and Vw will be calculated based thereon, and when the voltage command values Vu, Vv and Vw exceed the battery voltage +Vb, such values will be limited to the battery voltage +Vb (step S15).

Then, since duty command values Du, Dv and Dw are calculated based on the limited voltage command values Vu, Vv and Vw, the duty command values Du, Dv and Dw will take values greater than 50% and will be outputted to the gate drive circuit 219. Therefore, as shown in (a) of Figure 55, a trapezoidal wave-like pseudo rectangular wave current with rounded corners, formed by superimposing a third and fifth harmonic waves to a sinusoidal wave, that is 120 degrees out of phase and has a waveform that is similar to the induced voltage waveforms of the unconnected brushless motor 12, flows through the inverters 134u to 134w from the switching element Trj1 to ground via the terminal tja, the armature winding Lj, the terminal tjb and the switching element Trj4 to rotationally drive the unconnected brushless motor 12 in, for instance, a clockwise direction. As a result, assist steering force according to the target assist steering torque Tt based on the steering torque T may be generated by the unconnected motor 12, and the assist steering force may be transferred to the steering shaft 2 via the reduction gear 11, enabling the driver to perform light steering.

Similarly, when the driver performs left-ward steering of the steering wheel 1 in a static steering-state, since the steering assist command value IT will take a negative value, the duty command values Du, Dv and Dw calculated in step S16 of the steering assist control processing shown in Figure 57 will take values lower than 50% and close to 0%. Therefore, current will flow through the excitation coils Lu to Lw in a direction that is opposite to the above-described direction, and the unconnected brushless motor 12 will be reverse-driven, for instance, in a counter-clockwise direction.

On the other hand, in the abnormality detection processing shown in Figure 58, a bias voltage Vb/2 with impedance that is high compared to the impedance of the conduction control system and having a voltage that is half of the battery voltage Vb as a power supply voltage is applied between adder circuits 342u to 342w and the motor harnesses MH1 to MH6 in the abnormality detection circuit 341 from the bias circuit 342. Therefore, even when the inverters 234u to 234w are in an initial diagnosis period during which all PWM signals Pu1 to Pw2 from the gate drive circuit 219 are in an off-state, the unconnected brushless motor 12 will be rotated by external force. In the event that an induced voltage is generated, such voltage will occur at both ends of each phase coil Lu to Lw as an antiphase terminal voltage centered on the bias voltage Vb/2. In other words, an added voltage value of the voltage developed across the phase coils Lu to Lw will take a constant value of double the bias voltage.

As a result, in a state in which no on-abnormalities of the switching elements have occurred in the inverters 234u and 234w and no short-to-ground and short-to-power fault have occurred at the motor harnesses MH1 to MH6 and the phase coils Lu to Lw, the added voltages Vus to Vws outputted from the adder circuits 342u to 342w take approximately the battery voltage Vb.

Therefore, when the added voltages Vus to Vws are supplied to the A/D conversion input terminal of the microcomputer 218 and the abnormality detection processing shown in Figure 58 is executed, the moving average values Vusm(n) to Vwsm(n) of the added voltages Vus to Vuw, corresponding to each phase coil Lu to Lw, calculated in step S72 also take approximately the battery voltage Vb, and |Vusm (n) - Vb|, |Vvsm (n) - Vb| and |Vwsm (n) - Vb|, respectively calculated in steps S73, S75 and S77 all take values of approximate "0". The conduction control systems for each phase coils are then determined to be normal, and the process proceeds to step S79 to reset the abnormality flag AF to "0".

However, in the event that an on-abnormality, in which an on-state persists, has occurred at any of the switching elements Tru2, Tru4 to Trw2, Trw4 of the inverters 234u to 234w, any one of the adder circuits 342u to 342w will be connected to ground via a switching element. Therefore, any one of the adder circuits 342u to 342w will become a ground potential, and any one of the added voltages of adder circuits 342u to 342w will take a value of Vb/2.

Therefore, a moving average value Vsjm of the added circuit 342j in which the abnormality has occurred will take a value of Vb/2 and |Vjsm(n) - Vb| will exceed a set value Vms to enable detection of the on-abnormality of the switching element Tru4 of the inverter 234j.

Similarly, in an event of an occurrence of a short-to ground fault at the motor harnesses MH1 to MH6 or the phase coils Lu to Lw, since the terminal voltage of the side at which the short-to ground fault had occurred will take approximate ground potential, detection of such a short-to ground fault may be performed in the same manner as described above.

Additionally, in contrast, in the event that an on-abnormality occurs at the switching elements Tru1, Tru2 to Trw1, Trw2 in the battery power supply-side of the inverters 234u to 234w, or a short-to-power fault occurs at the motor harnesses MH1 to MH6 or the phase coils Lu to Lw, the terminal voltage supplied to the adder circuits 342u to 342w of the side at which the abnormality had occurred will take approximate battery voltage Vb. Therefore, the added voltage Vjs of the relevant adder circuit 342j will take a value of 3Vb/4, the moving average value Vjsm(n) will also take a value of 3Vb/4, and |Vjsm (n) - Vb| > Vms. As a result, a relevant abnormality flag AF will be set to "1" to "3", and accurate detection of occurrences of abnormalities will become possible.

After conclusion of the initial diagnosis, moving average values Vusm(n) to Vwsm(n) are calculated in the abnormality detection processing shown in Figure 58 by reading the added voltages Vus to Vws outputted from the abnormality detection circuit 341 at a predetermined frequency and performing moving average processing on the read added voltages. In the event that the inverters 234u to 234w, the motor harnesses MH1 to MH6 and excitation coils Lu to Lw are normal as described above, the terminal voltages Vja and Vjb of the inverter 234j alternate on/off states at a duty ratio corresponding to the duty command values Du to Dw, and the added value obtained by adding the terminal voltages Vja and Vjb substantially matches the battery voltage Vb regardless of the duty ratios of the PWM signals Pj1 and Pj2, as shown in (f) of Figure 550.

Therefore, since an absolute value |Vjsm(n) - Vb| obtained by subtracting the battery voltage Vb from the moving average value Vjsm(n) takes a value of approximately "0" which is smaller than the threshold Vms, the process shown in Figure 58 proceeds from step S73 via steps S75 and S77 to step S79, and resets the abnormality flag AF to "0", which indicates a normal status.

However, as described above, in the event that an on-abnormality occurs at the switching element Trw4 of the inverter 234w in which an on-state persists even when the PWM signal Pw2 is in an off-state during a rightward steering of the steering wheel 1 in a static steering-state, since the terminal voltage Vwb maintains a constant approximate ground potential, or in other words, a potential obtained by multiplying the on-resistance $R_0$ of the switching element Trw4 by the motor current Im, the added voltage Vws outputted from the adder circuit 342w of the abnormality detection circuit 341 repetitively alternates between an approximate battery voltage Vb and an approximate zero ground voltage, as shown in (f) of Figure 56, and an moving average value Vwsm(n) of the added voltage Vws will become significantly lower than the battery voltage Vb. Therefore, in step S73 of Figure 58, |Vusm(n) - Vb| > Vms. The process then proceeds to step S74 in which the abnormality flag AF is set to "1".

As a result, the steering control processing of Figure 57 proceeds from step S61 to step S63 and outputs a PWM signal output suspension command in order to suspend output of PWM signals Pw1 and Pw2, which drive the U-phase inverter 234w, from the gate drive circuit 219. The driving of the inverter 234w is thereby suspended, and conduction control over the excitation coil Lw is also suspended.

Meanwhile, at the remaining two normal V-phase and W-phase inverters 234u and 234v, in a state in which the unconnected brushless motor 12 is in a low-speed rotation range, output of PWM signals Pu1, Pu2 and Pv1, Pv2, based on duty command values Du and Dv calculated in step S16, will be continued.

Assuming that the U-phase current, V-phase current and W-phase current are sinusoidal waves for simplicity, the U-phase, V-phase and W-phase currents applied to the excitation coils Lu to Lw at this point will be as shown in Figure 59A. Since a closed loop consisting of: a fly wheel diode D parallel to the switching element Trw2 - terminal twa - armature winding Lw - terminal twb - switching element Trw4 - fly wheel diode D, is formed for the W-phase current on which the abnormality has occurred, an current due to induced electromotive force associated with the rotation of the rotor 20 is applied, resulting in the generation of a motor braking torque in a direction of braking of the motor.

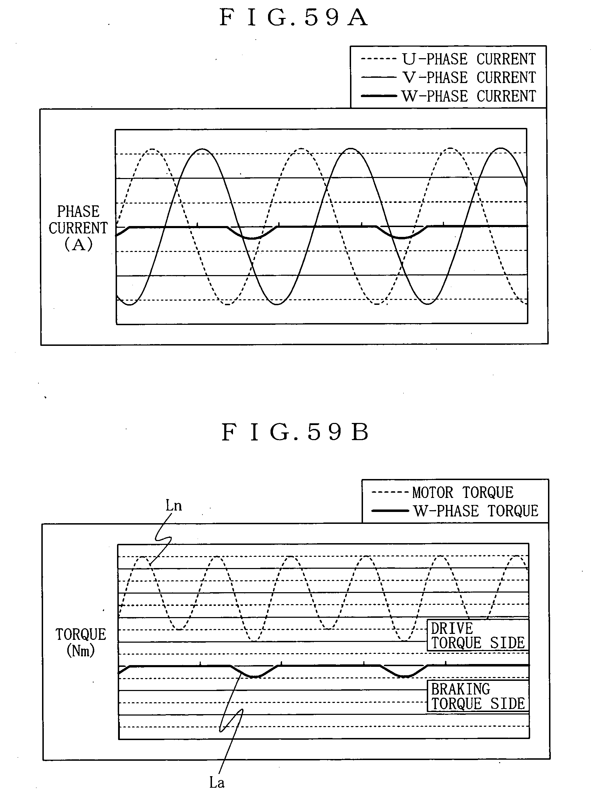

However, in a state in which the unconnected brushless motor 12 is rotationally driven in a low-speed steering region, the motor braking torque generated in the abnormal W-phase is minimal as indicated by the curved line La shown in Figure 59B. Although the motor drive torque generated in the normal U-phase and V-phase pulsates as indicated by the curved line Ln shown in Figure 59B, there are no electrical angle intervals in which drive torque may not be generated, and as a result, while vibration will occur at the steering wheel 1, sufficient steering assist force may be produced.

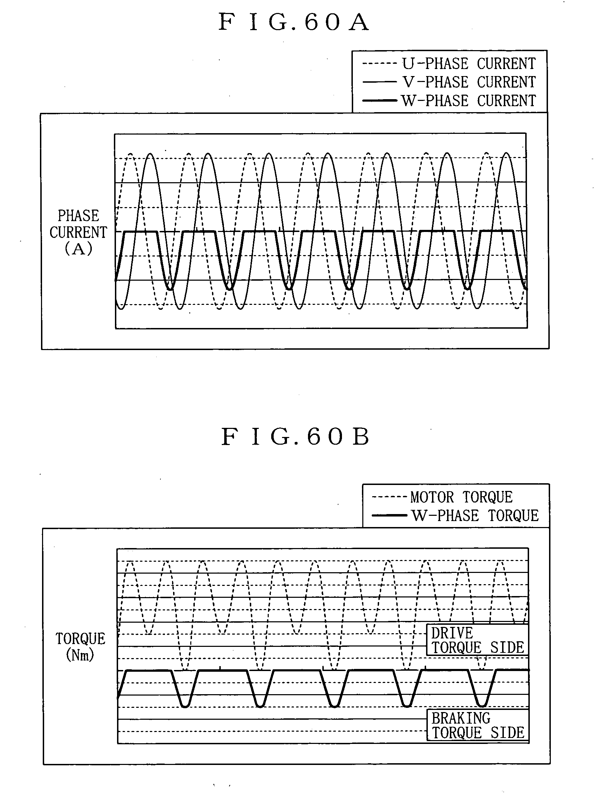

On the other hand, in a state in which the unconnected brushless motor 12 is driven in a high-speed steering region in which the steering wheel 1 is abruptly steered, when an on-abnormality occurs at the switching element Trw4 of the W-phase inverter 234w in the same manner as described above, a negative-direction amplitude of a W-phase current based on induced electromotive force caused by a closed loop formed at the inverter 234w becomes significant, as shown in Figure 60A. This causes an increase of the motor braking torque of the W-phase as shown in Figure 60B, which cancels out the motor drive torque generated by the normal U-phase and V-phase to produce an electrical angle interval in which drive torque may not be produced. As a result, a catching sensation is created at the steering wheel 1, causing discomfort to the driver.

Therefore, in the present embodiment, rotation of the unconnected brushless motor 12 in a high-speed steering region may be suppressed, and the unconnected brushless motor 12 may be driven in a low-speed steering region to maintain a generating state of steering assist force by sensing a motor angular velocity ω of the unconnected brushless motor 12, and by proceeding from step S64 to step S66 in the processing shown in Figure 57 when an absolute value of the motor angular velocity $\omega$ exceeds a set value $\omega s$ corresponding to a motor angular velocity in the vicinity of an upper limit of the low-speed steering region to limit the duty command values Du and Dv of the then normal U-phase and V-phase, which are duty command values that will take the value of the motor angular velocity in the vicinity of an upper limit of the low-speed steering region, to a range of duty command values DL to DH that is symmetrical with respect to 50%.

In addition, occurrences of short-to-ground in the motor harness MH6 or the excitation coil Lw may be sensed in the same manner as described above. When an on-abnormality occurs at the switching element Tj1l of the battery power supply-side, the terminal voltage Vja maintains a value of an approximate battery voltage Vb, while the terminal voltage Vjb alternates between an approximate ground voltage and an approximate battery voltage Vb. This means that the added voltage thereof will repetitively alternate between the battery Vb and its double voltage, and when an moving average value Vjsm(n) exceeds the battery voltage Vb, determination of an abnormal state may be made since |Vjsm (n) - Vb| > Vms. Similarly, occurrences of short-to-power fault in the motor harness mh5 or the excitation coil Lw may be sensed in the same manner as described above.

Furthermore, occurrences in the other U-phase or V-phase of on-abnormalities of switching elements of the inverter 234u or 234v, or short-to-ground or short-to-power fault in the motor harnesses MH1, MH3 or MH2 may be sensed in the same manner as described above.

Moreover, by respectively applying a high-impedance bias voltage from a bias circuit 343 to the voltages developed across the phase coils in the same manner as in the above-described ninth embodiment, on-abnormalities of the inverters 234u to 234w, or short-to-power or short-to-ground faults of the motor harnesses MH1 to MH6 and phase coils Lu to Lw may be accurately sensed even in a suspended state of the inverters 234u to 234w, or in other words, even in a state in which conduction control is not performed on the phase coils. Abnormalities in the conduction control system may be accurately sensed in a short amount of time by performing initial diagnosis upon turning on the ignition key 17.

Additionally, by drive-controlling the unconnected brushless motor 12 without using vector control, in the same manner as in the above-described ninth embodiment, simplification of the computation processing may be achieved and a simplified drive control section may be formed.

Furthermore, since the voltages Vua, Vub to Vwa, Vwb developed across the phase coils Lu to Lw are added by the adder circuits 342u to 342w in the abnormality detection circuit 341, only three sensor inputs to be supplied to the A/D conversion input terminal of the microcomputer 218 are required, as is the case with conventional three-phase brushless motors, thereby enabling inexpensive microcomputers to be applied.

For the above-described ninth embodiment, while a case has been explained in which a bias voltage Vb/2 which is half of the battery voltage Vb is applied between the adder circuits 342u to 342w and the motor harnesses MH1 to MH6 by the bias circuit 343, the present invention is not limited to this case. Alternatively, if abnormality detection during initial diagnosis is not performed, the bias circuit 343 may be omitted.

In addition, while the bias voltage need not be precisely set to Vb/2, and may instead be set to a value in the vicinity of Vb/2, in the event that the bias voltage is too low or high compared to the battery voltage Vb, motor terminal voltage due to induced voltage will be clamped by the ground potential or the battery potential, and the added value may be altered. Therefore, it is preferable to set the bias voltage to approximately half of the battery voltage Vb. Furthermore, since the added voltage value of the voltages developed across the phase coils Lu to Lw under conduction control of the inverters 234u to 234w takes the value of the battery voltage Vb, it is preferable that the bias voltage is set so as to satisfy the relation expressed as bias voltage $\times$ 2 = battery voltage Vb in order to share the fault determination threshold Vms regardless of whether conduction control is being performed on the inverters 234u to 234w.

Moreover, for the above-described ninth embodiment, while a case in which a moving average value of the added voltage Vjs is calculated in the abnormality detection processing of Figure 58 has been explained, the present invention is not limited to this case, and a simple averaging processing which averages a predetermined number of added voltages may be performed instead.

Additionally, for the above-described ninth embodiment, while a case in which a moving average value is calculated in step S72 of the abnormality processing of Figure 58 has been explained, the present invention is not limited to this case. Alternatively, a low-pass filter for calculating an average value may be provided on the output-side of the adder circuits 342u to 342w, and the average value outputs from the low-pass filter may be inputted to the microcomputer 218. In this case, the time constant of the low-pass filter is preferably set to a time constant at which secondary faults may be avoided.

Furthermore, for the above-described ninth embodiment, while a case in which driving of the unconnected brushless motor 12 is continued in order to generate steering assist force in the event of an occurrence of a short-to-ground or a short-to power fault has been explained, the present invention is not limited to this case. Instead, in the event a detection of abnormality such as a short-to-ground or a short-to power fault, step S61 and steps S63 to S66 of the steering assist control processing of Figure 57 may be omitted and replaced by a step which immediately turns off the relay circuit RY to suspend PWM signal output from the inverters 234u to 234w in order to suspend rotational driving of the unconnected brushless motor 12. In addition, in the event that abnormalities occur in two or more conduction control systems, either the relay circuit RY or the PWM signals Pu1 to Pw2 may be arranged to be turned off.

Additionally, in the above-described ninth embodiment, since the motor is not a motor in which one end or both ends of excitation coils are mutually connected, as is the case with conventional wye-connection motors or delta-connection motors, but instead is an unconnected brushless motor 12 wherein each excitation coil Lu to Lw which form a three-phase brushless motor are independently wound without mutual interconnection, individual conduction control may be performed at each excitation coil Lu to Lw, allowing pseudo rectangular wave currents which include third and fifth harmonic waves to be applied without any restrictions. Therefore, the motor current waveform is arranged to assume a pseudo rectangular wave with rounded corners that is wide in relation to a sinusoidal wave similar to a back emf waveform.

For this reason, since the output of the unconnected motor 12 may be expressed by output = current $\times$ voltage = torque $\times$ rotational velocity, effective value may be significantly increased compared to a case in which a back emf and a drive current having a sinusoidal wave are used, making it possible to obtain a high-level output as well as a constant output that is free of torque ripples. In addition, pulsation in motor drive torque in the event that an abnormality occurs at a drive system consisting inverter circuits, motor harnesses and armature windings may be reduced in comparison to a case in which the motor current waveform is a sinusoidal wave.

In comparison, in a conventional connection brushless motor, although the back emf waveform may be arranged to assume a pseudo rectangular wave approximately similar to that of the present embodiment, since a third harmonic component cannot be applied to an armature winding of the motor, the current waveform assumes a narrow pseudo rectangular wave as shown in the above-described Figure 46A. The reduced area indicates that the effective value will be higher than that of a sinusoidal wave yet lower than that of the present embodiment, which in turn signifies that output will be reduced accordingly.

The reason why a third harmonic component may not be applied to an armature winding in a conventional connection brushless motor is as provided for the first embodiment described above.

As seen, in the ninth embodiment, since both the back emf waveform and the drive current waveform of the excitation coils Lu to Lw of the unconnected motor 12 may be shaped as a pseudo rectangular wave including a third harmonic wave, the effective value may be increased and a higher output may be obtained. In other words, since the size of a coefficient of a third harmonic wave when performing Fourier series expansion of a pseudo rectangular wave is second only to that of a primary component, maximum efficiency for increasing effective values may be achieved by superimposing a sinusoidal wave with its third harmonic wave, and a high-level output may be obtained.

Additionally, by using the unconnected brushless motor 12, respectively connecting inverter 234u, 234v and 234w to both ends of each excitation coil, and reverse-phase-driving each end of the excitation coils Lu, Lv and Lw, the voltage between terminals Vuab, Vvab and Vwab of each excitation coil may be respectively expressed by the formulas (34), (35) and (36) below, as described earlier.

$$Vun = 2 \times V_0 \times \sin(\omega t + \alpha) \qquad \ldots\ldots (34)$$

$$Vvn = 2 \times V_0 \times \sin(\omega t - 2\pi/3 + \alpha) \qquad \ldots\ldots (35)$$

$$Vwn = 2 \times V_0 \times \sin(\omega t - 2\pi/3 + \alpha) \qquad \ldots\ldots (36)$$

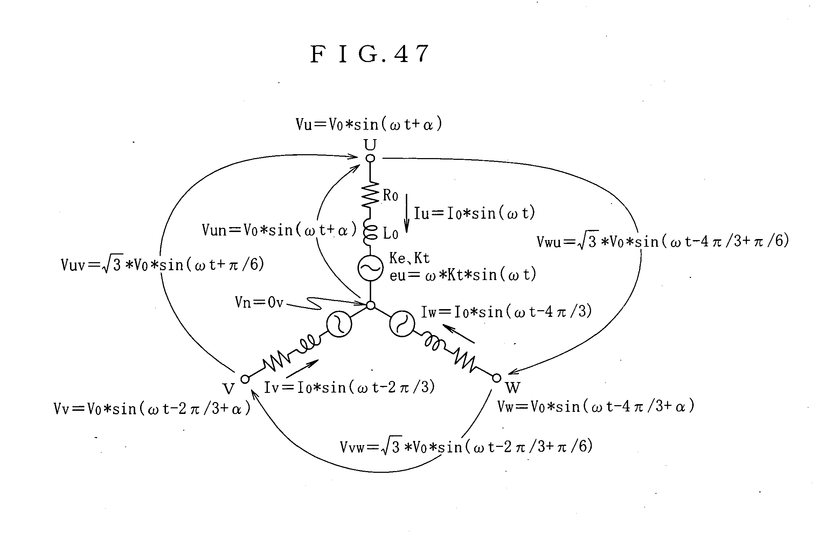

On the other hand, in the case of an equivalent circuit of a similarly configured wye-connection motor, as shown in the aforementioned Figure 47, since a voltage Vn of a neutral point at which an end of each excitation coil Lu, Lv and Lw are connected takes a value of Vn = 0 (V), a voltage between terminals Vun, Vvn and Vwn of each excitation coil Lu, Lv and Lw may be expressed by the following formulas (37), (38) and (39).

$$Vun = V_0 \times \sin(\omega t + \alpha) \qquad \ldots\ldots (37)$$

$$Vvn = V_0 \times \sin(\omega t - 2\pi/3 + \alpha) \qquad \ldots\ldots (38)$$

$$Vwn = V_0 \times \sin(\omega t - 2\pi/3 + \alpha) \qquad \ldots\ldots (39)$$

Therefore, taking the example of the excitation coil Lu, terminal voltages Vua, Vub and a voltage between terminals Vuab of the unconnected motor 12 according to the present invention are as shown in the aforementioned Figure 48A, while a terminal voltage Vu, terminal voltage Vv, voltage between terminals Vuv and a neutral point voltage V of a conventional wye-connection motor will be as shown in the aforementioned Figure 48B. On the other hand, voltages between terminals Vuab, Vvab and Vwab of the unconnected motor 12 according to the present embodiment will be as shown in the aforementioned Figure 49A, while voltages developed across coils Vun, Vvn and Vwn in the case of a conventional wye-connection motor will be as shown in Figure 49B.

As is apparent from Figures 48A and 48B, and 49A and 49B, when comparing voltage magnitudes applicable across an excitation coil, the unconnected motor 12 is capable of achieving the same effect as in a case in which a wye-connection motor is driven at double the power supply voltage. Therefore, when assuming that the battery voltage Vb is the same, since an unconnected motor is capable of improving drive voltage of the excitation coils Lu to Lw, smooth steering may be achieved without creating power shortages by generating optimum steering assist force when abrupt steering is performed on the steering wheel 1.

Similarly, in a case of a conventional delta-connection motor, an equivalent circuit thereof will be as shown in Figure 12 of the above-described first embodiment, wherein voltages between terminals Vuv, Vvw and Vwu are √3 times that of a wye-connection motor, while currents between terminals are reduced to 1/√3. While the coil currents of the excitation coils Lu to Lw of the unconnected motor 12 according to the present invention is able to effectively use a specified current as shown in the aforementioned Figure 13A, the coil currents Iuv, Ivw and Iwu and phase currents Iu, Iv and Iw of the delta-connection motor will be as shown in the aforementioned Figure 13B, wherein each phase current Iu, Iv and Iw is reduced to 1/√3 of the specified current. Therefore, the unconnected motor 12 is capable of achieving the same effects as a case in which a motor current that is √3 times is large is applied to the delta-connection motor. As a result, an unconnected motor is capable of improving coil currents of excitation coils and achieving a higher level of torque.

Therefore, an equivalent exchange of a wye-connection motor and a delta-connection motor may be expressed by a relational expression shown in the above-described Table 1.

Using this relational expression, motor output and current characteristics in a case where equivalent-exchanged wye-connection and delta-connection motors are changed to an unconnected motor using the motor constant of the wye-connection motor are as shown in the above-described Figure 14. As for motor output characteristics, in comparison to the rotational velocity of the wye-connection motor indicated by a dotted line, the increment in rotational velocity of the unconnected motor, which is indicated by a full line, increases as torque decreases from a maximum torque regulated by a maximum current, enabling rotational velocity to be improved.

In addition, motor output characteristics in a case where a change is made to an unconnected motor using the motor constant of the delta-connection motor is as shown in the above-described Figure 15, wherein the increment in torque in the unconnected motor increases as rotational velocity decreases from a maximum number of rotations in comparison to the torque characteristics of the delta-connection motor which is indicated by a dotted line. Thus, torque may be improved accordingly.

Furthermore, motor output characteristics in a case where a change is made to an unconnected motor using an intermediate motor constant of the wye-connection and delta-connection motors is as shown in the above-described Figure 16, wherein both rotational velocity and torque may be improved with the unconnected motor, as indicated by full lines, in comparison with rotational velocity characteristics of a conventional motor which is indicated by a dotted line.

Therefore, in the event that the unconnected motor 12 is applied to an electric power steering device, required arbitrary motor output characteristics may be obtained by setting a motor constant according to required characteristics.

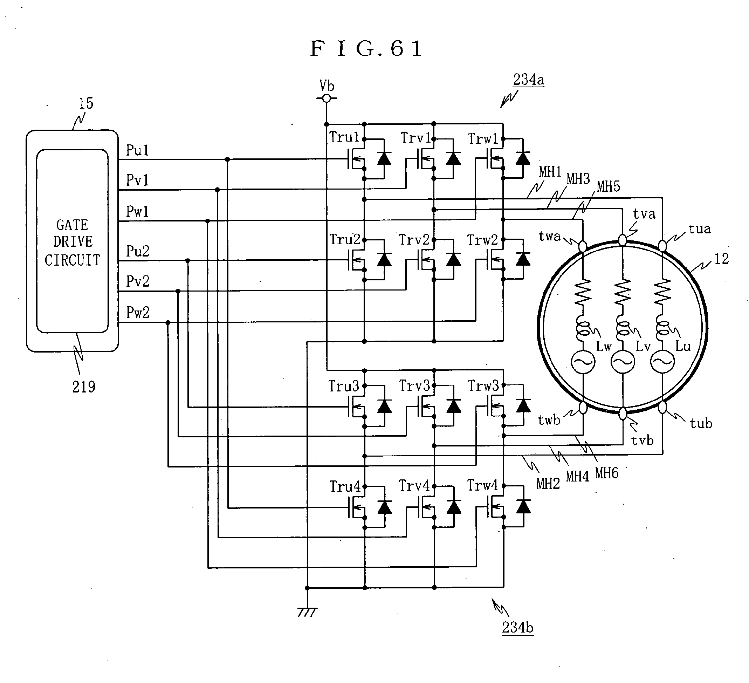

For the above-described ninth embodiment, while a case in which inverters 234u to 234w are used to perform conduction control on the excitation coils Lu to Lw of the unconnected brushless motor 12 has been explained, the present invention is not limited to this case. Instead, as shown in Figure 61, an effect similar to that of the above-described embodiment may be obtained by individually connecting inverters 234a and 234b to both ends of the excitation coils Lu to Lw.

In addition, for the above-described ninth embodiment, while a case has been explained in which adder circuits 342u to 342w, the bias circuit 343 and the voltage-divider/filter circuit 344 have been provided as the abnormality detection circuit 341, the present invention is not limited to this case. Alternatively, the voltage-divider/filter circuit 344 may be omitted, and the value of a threshold Vms of the abnormality detection processing of Figure 58 may be changed instead. In addition, if abnormality detection during initial diagnosis is not performed, the bias circuit 343 may be omitted.

Furthermore, for the above-described ninth embodiment, the abnormality detection processing may be arranged so that an amount of change for each timer interrupt period (sampling period) of the added voltage Vjs is calculated instead of average values, and an abnormality is determined when the amount of change exceeds a predetermined value.

While the above-described ninth embodiment described a case in which an induced voltage waveform and a drive current waveform of an unconnected motor assumes the same pseudo rectangular wave, the present invention is by no means restricted to this case. The same effects as the above-described fourth embodiment may be achieved with an arrangement in which the phase and shape of the induced voltage waveform or the drive current waveform is unchanged while only the amplitude is changed.

Furthermore, for the above-described ninth embodiment, while a case has been explained in which a pseudo rectangular wave is formed by superimposing third and fifth harmonic waves to a sinusoidal wave, the present invention is not limited to this example. Alternatively, an arbitrary combination of second-order and high harmonic waves may be superimposed, or a current waveform consisting solely of a sinusoidal wave without superimposing high harmonic waves may be used. In this case, the phase current calculation map is preferably a three-phase sinusoidal wave.

Moreover, while the above-mentioned ninth embodiment described a case in which the drive control section has been given a simple configuration, the present invention is not limited to this example. Instead, phase current target values $I_{TU}{}^*$, $I_{TV}{}^*$ and $I_{TW}{}^*$ may be calculated by using the excellent properties of vector control to determine current command values of vector control d and q components, and subsequently converting the current command values into each phase current command value corresponding to each excitation coil Lu to Lw. Otherwise, everything may be arranged to be performed under vector control.

Furthermore, for each of the above-described ninth embodiments, while a case in which the present invention has been applied to an unconnected three-phase brushless motor has been explained, the present invention is not limited to this case. Instead, the present invention may be applied to a brushless motor or other motors with a plurality (N number, where N is an integer greater than or equal to 3) of phases.

Furthermore, for the above-described ninth embodiment, while a case in which the present invention has been applied to an electric power steering device has been explained, the present invention is not limited to this case. Instead, the present invention may be applied to an arbitrary device having other drive motors.

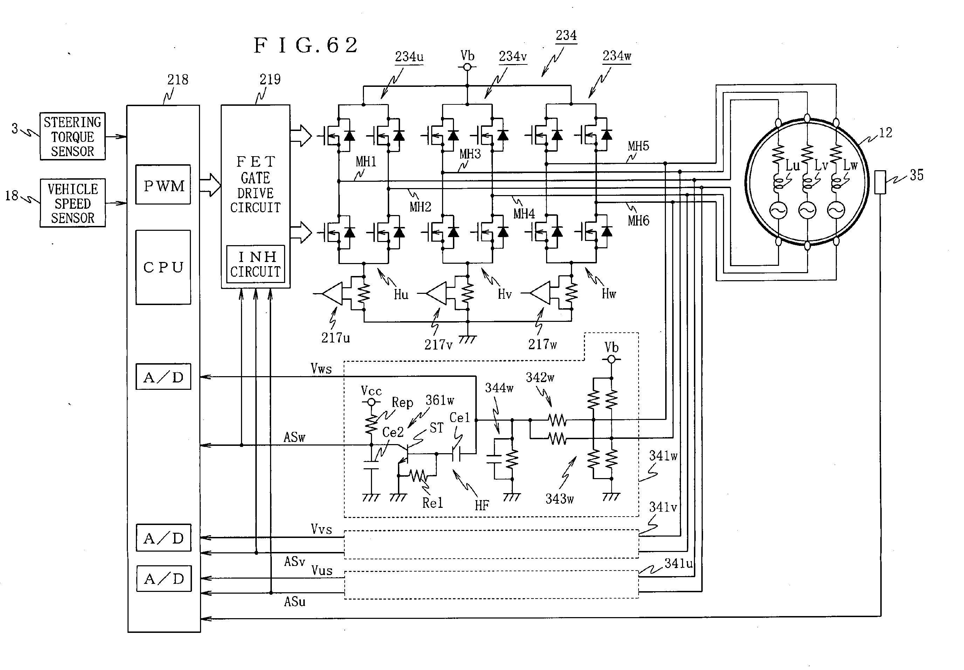

A tenth embodiment of the present invention will now be described with reference to Figure 62.

When calculating average values of the added voltages outputted from the adder circuits 342u to 342w with the abnormality detection circuit 341 as an abnormality detection section in the above-described ninth embodiment, since an A/D conversion period and a computation processing period become delay times when performing computation processing using the microcomputer 218, while a predetermined delay time due to a time constant is necessary when performing processing in an analog-like fashion using a low-pass filter. In this light, the tenth embodiment has been arranged to alternatively perform abnormality detection by the abnormality detection circuit 341 in a speedier manner.

More specifically, as shown in Figure 62, the tenth embodiment is provided with: an abnormality detection circuit 341j for each phase, respectively having adder circuits 342j (j = u, v, w), a bias circuit 343j and a voltage-divider/ filter circuit 344j; and an edge detection circuit 361j to an output-side of the voltage-divider/filter circuit 144j of the abnormality detection circuit 141j, and is arranged so that an edge detection signal from the edge detection circuit 361j is supplied as an abnormality detection signal ASj to an external interrupt terminal of the microcomputer 218 and a drive suspension input terminal of the gate drive circuit 219, and in the event that the abnormality detection signal drops to a low level, the microcomputer 218 performs external interrupt processing and terminates the steering assist control processing shown in Figure 57, while the gate drive circuit 219 suspends output of PWM signals Pu1 to Pw2. Otherwise, the tenth embodiment has a configuration similar to that of the ninth embodiment shown in Figure 54. Thus, portions corresponding to those shown in Figure 54 will be assigned like reference characters, and detailed descriptions thereof will be omitted.

The edge detection circuit 361j comprises: a high-pass filter HF composed of a capacitor Ce1 and a resistor Re1; a switching transistor ST with a base to which a differential signal outputted from the high-pass filter HF is inputted; a pull-up resistor Rep connected between a collector of the switching transistor ST and the power supply; and a charge and discharge capacitor Ce2 connected between the connection point of the pull-up resistor Rep and the collector, and ground.

According to the tenth embodiment, as described earlier, when the inverter 234w is, for instance, normal, added voltage outputted from the adder circuit 342w of the abnormality detection circuit 341w maintains battery voltage Vb as shown in (f) of Figure 55, and the output of the high-pass filter HF maintains a low level. Therefore, since the switching transistor ST maintains an off-state, the charge and discharge capacitor Ce2 maintains a charged state, a high-level edge detection signal is inputted to the microcomputer 218 and the gate drive circuit 219 enabling the microcomputer 218 to continue steering assist control processing shown in Figure 57 and the gate drive circuit 219 to output PWM signals Pu1 to Pw2 based on duty command values Du to Dw outputted through the steering assist control processing to the inverters 234u to 234w, which in turn continues rotational driving of the unconnected brushless motor 12 and generates steering assist force based on the steering torque Ts.

However, in the event that, for instance, an on-abnormality occurs at the switching element Trw4 of the inverter 234w or a short-to-ground fault occurs at the motor harness MH2, an added voltage synchronized with on/off operations of the terminal voltage Vwa of the phase coil Lw is obtained as shown in the aforementioned (f) of Figure 56, from the adder circuit 342w of the abnormality detection circuit 341w. The output of the high-pass filter HF rises to a high level at a rising edge of the added voltage, changing the switching transistor ST to an on-state and causing fast discharge of the charge and discharge capacitor Ce2 via the switching transistor ST, which in turn causes the external interrupt terminal of the microcomputer 218 to drop to a low level to initiate external interrupt processing, thereby suspending the steering assist control processing shown in Figure 57.

At the same time, the drop of the abnormality detection signal to a low level causes the gate drive circuit 219 to suspend output of PWM signals Pu1 to Pw2 to the respective inverters 234u to 234w.

As a result, conduction of each phase coil Lu to Lw of the unconnected brushless motor 12 is instantaneously suspended, thereby suspending the unconnected brushless motor 12.

Furthermore, in the event that, for instance, an on-abnormality occurs at the switching element Trj1 at the battery power supply-side of the inverters 234u to 234w, or a short-to-power fault occurs at the motor harnesses MH1, MH3, MH5 or at the phase coils Lu to Lw, the terminal voltage causing the short-to-power takes battery voltage Vb. Since the added voltage Vjs changes in synchronization with the on/off state of a normal terminal voltage, the abnormality detection signal drops to a low level at the rising edge of the added voltage in the same manner as in the case of a short-to-ground fault described above. This causes the microcomputer 218 to suspend steering assist control processing and the gate drive circuit 219 to suspend output of PWM signals Pu1 to Pw2, thereby suspending the unconnected brushless motor 12.

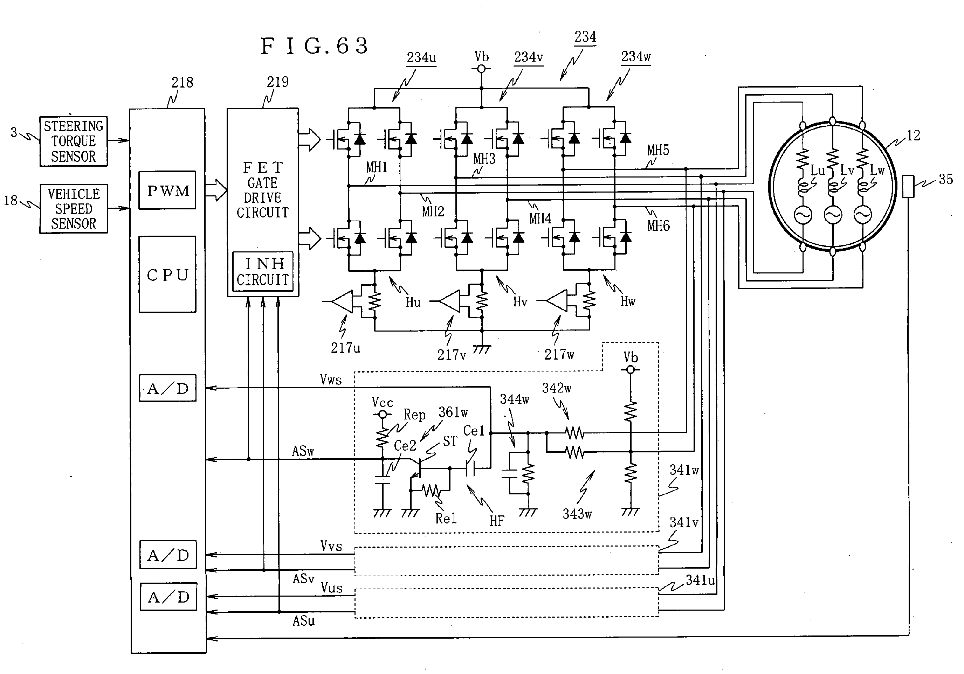

An eleventh embodiment of the present invention will now be described with reference to Figure 63.

The eleventh embodiment is arranged so that the abnormality detection circuit 341, as an abnormality detection section, of the above-described tenth embodiment, is now capable of detecting opening-abnormalities due to disconnection of the motor harnesses MH1 to MH6 and phase coils Lu to Lw, in addition to detection of short-to-ground and short-to-power faults.

More specifically, as shown in Figure 63, the eleventh embodiment has a configuration similar to that shown in Figure 62, with the exception of the omission of one of the bias voltages Vb/2 applied to both terminal voltages of each phase coil Lu to Lw in the above-described tenth embodiment. Thus, portions corresponding to those shown in Figure 62 will be assigned like reference characters, and detailed descriptions thereof will be omitted.

According to the eleventh embodiment, in a state in which driving of the inverters 234u to 234w is suspended, when the inverters 234u to 234w, the motor harnesses MH1 to MH6 and phase coils Lu to Lw are normal, a bias voltage Vb/2 applied to one of the terminal voltage sides is also applied to the other terminal voltage side via the phase coils Lu to Lw. Therefore, the bias voltage is applied to both terminal voltages of the phase coils Lu to Lw, enabling an abnormality detection signal to maintain a high level in the same manner as the above-described tenth embodiment.

In this drive-suspended state of the inverters 234u to 234w, when a disconnection occurs at the motor harnesses MH1 to MH6 and phase coils Lu to Lw to cause an opening failure, bias voltage Vb/2 will only be applied to one of the terminal voltages creating an unbalance of the bias voltage with respect to the terminal voltages. This causes a formation of an edge in the added voltage Vjs outputted from the adder circuit 342j, and the abnormality detection signal drops to a low level at the edge detection circuit 361j to enable suspension of the unconnected brushless motor 12. In addition, since the change in the added voltage Vjs of the adder circuit 342j causes an average value Vjsm(n) to change as well, thus $|Vjsm(n) - Vb| > Vms$. As a result, an abnormality flag AF is set to "1" to "3", thereby enabling either suspension of conduction control processing of the phase coil Lj at which the abnormality had occurred, or suspension of conduction control processing of all phase coils Lu to Lw.

For the above-described tenth and eleventh embodiments, while a case has been explained in which inverters 234u to 234w are used to perform conduction control on the excitation coils Lu to Lw of the unconnected brushless motor 12, the present invention is not limited to this case. Instead, as shown in the aforementioned Figure 61, an effect similar to that of the above-described tenth and eleventh embodiments may be obtained by individually connecting inverters 234a and 234b to both ends of the excitation coils Lu to Lw.

In addition, for the above-described tenth and eleventh embodiments, while a case has been explained in which adder circuits 342u to 342w, the bias circuit 343 and the voltage-divider/filter circuit 344 have been provided as the abnormality detection circuit 341. Alternatively, the voltage-divider/filter circuit 344 may be omitted, and the value of a threshold Vms of the abnormality detection processing of Figure 58 may be changed instead. In addition, if abnormality detection during initial diagnosis is not performed, the bias circuit 343 may be omitted.

Industrial Applicability

According to the first to fourth embodiments of the present invention, which comprise a rotor in which permanent magnets are allocated and a stator opposing the rotor, in which a plurality of N-phases of armature windings are independently arranged, since for each armature winding, at least one of either a back emf waveform or a drive current waveform of is arranged to be a pseudo rectangular wave, a pseudo rectangular drive current formed by superimposing on a sinusoidal wave its Nth harmonic component may be applied to a Nth phase armature winding, which had been unachievable through connection motors, and effective values may be actively improved in order to obtain higher output (power). In addition, effective values may further be increased by applying a pseudo rectangular wave including a high harmonic wave to both a back emf waveform and a drive current waveform, and higher output may be obtained.

In addition, since a drive control device which drives an unconnected motor is configured to drive an inverter circuit connected to an armature winding in a drive control circuit so that a drive current waveform of the armature winding assumes a pseudo rectangular wave state which includes a high harmonic wave, the unconnected motor may be driven with a large output by increasing its effective value.

Furthermore, by calculating an N-phase current command value reference command value with the same waveform as an induced voltage waveform with a pseudo rectangular wave state which includes a high harmonic wave, and performing current feedback control of the drive control device which drives an unconnected motor based on the calculated reference command value, an advantage may be gained in that a drive control device of an unconnected motor with a small-sized brushless DC motor and with low torque ripple and high output may be provided.

Moreover, by configuring an electric power steering device using an unconnected motor, an electric power steering device may be provided which generates steering assist force capable of smooth following even upon abrupt steering of the steering wheel and enables steering wheel operations which are free of discomfort while keeping noise at a low level.

According to the fifth to seventh embodiments of the present invention, an unconnected motor, in which armature windings of a predetermined number of phases are independently allocated in a stator, configured to individually provide drive signals to each independent armature winding, and a pair of inverter circuits connected to both ends of each armature winding, are provided to enable drive control of a pair of inverter circuits through a single drive control circuit, resulting in a gained advantage in that the overall circuit configuration may be simplified.

In addition, by arranging voltage between terminals of each armature winding to be adjustable through the drive control circuit, an advantage may be gained in that an arbitrary voltage between terminals may be generated and output characteristics of the unconnected motor becomes adjustable.

Furthermore, by arranging a drive control device which drives an unconnected motor to calculate each phase current command value based on vector control and to perform current feedback control, an advantage may be gained in that a drive control device which drives an unconnected motor which is small-sized and has low torque ripple but still capable of producing large output may be provided.

Moreover, by configuring an electric power steering device using an unconnected motor, an advantage may be gained in that an electric power steering device may be provided which generates steering assist force capable of smooth following even upon abrupt steering of the steering wheel, and enables steering operations which are free of discomfort while keeping noise at a low level.

According to the eighth embodiment of the present invention, performing current detection of each armature winding of an unconnected brushless motor having a rotor in which permanent magnets are allocated, and a stator in which a plurality (N number) of phases of armature windings are independently arranged without mutual interconnection, by individually sensing a current of each armature winding by current sensing means provided either on a power-side or a ground-side of an inverter circuit individually connected to both ends of each armature winding enables adjustment of a timing of performing A/D conversion of sensed currents, which in turn allows detection of current values which assume approximate absolute values without including current direction information, and current-sensing accuracy may be improved by reducing dynamic ranges and by reducing bit rates of current sensed values.

According to the ninth embodiment of the present invention, since current abnormalities of each armature winding of an unconnected brushless motor, having a rotor in which permanent magnets are allocated and a stator in which a plurality (N number) of phases of armature windings are independently arranged without mutual interconnection, are independently sensed by an abnormality detection circuit, and in the event that a current/voltage abnormality such as a short-to-power or a short-to-ground and the like is sensed in one of the armature windings by the abnormality detection section, an abnormal-time control section drives the unconnected brushless motor while suppressing braking force due to current caused by an induced electromotive force generated by the armature winding at which the current/voltage abnormality has occurred, enabling output of drive torque even during an occurrence of current/voltage abnormalities.

In addition, since the abnormal-time control section also suppresses rotational velocity of an unconnected brushless motor when the rotational velocity is greater than or equal to a set velocity, braking force generated by induced electromotive force may be suppressed to secure drive torque.

Furthermore, when a current abnormality occurs at one of the armature windings, a pseudo rectangular wave current may be applied to the remaining normal armature windings by superimposing high harmonic components of the second-order, third-order and so on in order to reduce drive torque pulsation.

Moreover, since steering assist torque may be generated by an unconnected brushless motor and transferred to a steering system even when a current/voltage abnormality occurs at one of the armature windings of the unconnected brushless motor by configuring an electric power steering device using a drive control device for an unconnected motor having the above-described effects, steering assist control may be sustained during an occurrence of a current/voltage abnormality without producing significant fluctuations in steering assist force and without causing significant discomfort.

In addition, according to the ninth to eleventh embodiments of the present invention, since detection of abnormalities is arranged to be performed at an abnormality detection section based on the voltage developed across each phase coil of an unconnected brushless motor, having a rotor in which permanent magnets are allocated and a stator in which a plurality (N number) of phase coils are independently arranged without mutual interconnection, by using an added voltage of voltages developed across phase coils as judgment criteria at the abnormality judgment section, abnormality judgment processing may be performed with a fewer number of A/D converters and may also be simplified.

Furthermore, by providing a bias circuit for applying a bias voltage to voltages developed across phase coils, an initial diagnosis at a state in which driving of an inverter circuit has been suspended may be performed accurately.

Moreover, by applying bias voltage from bias circuit to only one of the voltages developed across a phase coil, open fault may be judged in addition to short-to-power and short-to-ground faults.

**Claims**

1. An unconnected motor, **characterized by** comprising a rotor in which permanent magnets are allocated and a stator opposing the rotor, in which a plurality of N-phases of armature windings are independently arranged, wherein for each armature winding, at least one of either a back emf waveform or a drive current waveform of is arranged to be a pseudo rectangular wave.

2. The unconnected motor according to claim 1, **characterized in that** the pseudo rectangular wave is formed by superimposing a sinusoidal wave with a high harmonic component thereof.

3. The unconnected motor according to claim 1, **characterized in that** the pseudo rectangular wave is formed by superimposing a sinusoidal wave signal with any or a plurality of a third, fifth and seventh harmonic component thereof.

4. An unconnected motor, **characterized by** comprising a rotor in which permanent magnets are allocated and a stator opposing the rotor, in which a plurality of N-phases of armature windings are independently arranged, wherein an Nth harmonic current is arranged to be conductive through each armature winding.

5. A drive control device of an unconnected motor, **characterized by** comprising: an unconnected motor having a rotor in which permanent magnets are allocated, and a stator opposing the rotor, in which a plurality of N-phases of armature windings are independently arranged; a pair of inverter circuits, individually connected to both ends of each armature winding, which supplies a drive signal which arranges a current waveform of each armature winding to assume a pseudo rectangular wave-shape; and a drive control circuit for drive-controlling the pair of inverter circuits.

6. The drive control device of an unconnected motor according to claim 5, **characterized in that** the drive control circuit is arranged to form control signals for the pair of inverters based on a pseudo rectangular wave-shaped voltage waveform including high harmonic waves of each armature windings of the unconnected motor.

7. The drive control device of an unconnected motor according to claim 5, **characterized in that** the drive control circuit is configured to form control signals for the pair of inverters based on a corrected current command value corrected by superimposing a high harmonic component onto a phase current command value for each armature winding of the unconnected motor.

8. The drive control device of an unconnected motor according to claim 5, **characterized in that** the drive control device comprises an electrical angle sensing circuit which senses electrical angles of the unconnected motor, wherein the drive control circuit comprises: a phase current target value computing section having a phase current target value calculation section which respectively outputs a phase current target value on which a high harmonic component has been superimposed for each armature winding of the unconnected motor based on the electrical angle sensed by the electrical angle sensing means, and a phase current command value calculation section which calculates phase current command values for the armature windings of the unconnected motor by multiplying each phase current target value calculated by the phase current target value calculation section by a control current command value; a motor current sensing circuit which senses a phase current of each armature winding; and a current control section which controls a drive current for each armature winding based on the phase current command value and the phase current.

9. The drive control device of an unconnected motor according to claim 8, **characterized in that** the phase current target value calculation section comprises a storage table which stores a relationship between a phase current command value waveform on which a high harmonic component is superimposed, which has the same waveform as an induced voltage waveform onto which a high harmonic component is superimposed, and an electrical angle of the unconnected motor for armature windings in the unconnected motor, and is arranged to reference the storage table based on an electrical angle sensed by the electrical angle sensing circuit in order to calculate a phase current target value.

10. An electric power steering device, **characterized in that** a drive device of an unconnected motor according to any one of the claims 5 to 9 is used.

11. An electric power steering device, **characterized by** comprising: a steering torque sensing section which senses steering torques; an unconnected motor having a rotor in which permanent magnets are allocated and a stator opposing the rotor, in which a plurality of N-phases of armature windings are independently arranged, a pair of inverter circuits individually connected to both ends of each armature winding, which arranges a current waveform of each armature winding to assume a pseudo rectangular wave-shape; and a drive control circuit for outputting control signals to the pair of inverter based on steering torque sensed by the steering torque sensing section.

12. The electric power steering device according to claim 11, **characterized in that** the drive control circuit is arranged to form control signals for the pair of inverters based on a phase current target value of each armature winding of the unconnected motor corresponding to a back emf waveform including a high harmonic component of each armature winding, and on a torque command value based on the steering torque.

13. The electric power steering device according to claim 11, **characterized in that** the drive control circuit comprises: a phase current command value computing section which calculates a phase current command value for each armature winding based on the steering torque sensed value; a motor current sensing circuit which senses a phase current of each armature winding; and a current control section which controls a drive current for each armature winding based on the phase current command value and the phase current.

14. The electric power steering device according to claim 13, **characterized by** having an electrical angle sensing circuit which senses electrical angles of the unconnected motor, wherein the phase current command value computing section comprises: a phase current target value calculation section which calculates a phase current target value corresponding to a back emf including a high harmonic wave, corresponding to each armature winding of the unconnected motor based on the electrical angle; and a phase current command value calculation section which calculates a phase current command value for each armature winding based on the phase current target value and the steering torque sensed value.

15. The electric power steering device according to claim 11, **characterized in that** the drive control circuit is arranged to form a control signal for the pair of inverters by superimposing a high harmonic component on a command voltage for each armature winding, calculated based on a deviation between phase current command value of each armature winding of the unconnected motor calculated based on the steering torque sensed value, and a current sensed value of each armature winding.

16. The electric power steering device according to claim 13, **characterized in that** the current control section comprises: a current controller which calculates, based on a deviation between the phase current command value and the phase current, a phase voltage command value; a high harmonic wave superposition section which calculates a corrected phase voltage command value by superimposing a high harmonic component on a phase voltage command value calculated by the current controller; and a pulse width modulation section which generates a control signal, consisting of a pulse width modulation signal, to be supplied to the pair of inverters based on the corrected phase voltage command value from the high harmonic wave superposition section.

17. A drive control device of an unconnected motor, **characterized by** comprising: an unconnected motor having a rotor in which permanent magnets are allocated, and a stator opposing the rotor, in which a plurality of N-phases of armature windings are independently arranged; a pair of inverter circuits individually connected to both ends of each armature winding; and a drive control circuit for drive-controlling the pair of inverter circuits, wherein the drive control circuit is arranged to drive the pair of inverter circuits with a predetermined number of PWM drive control signals.

18. The drive control device of an unconnected motor according to claim 17, **characterized in that** the drive control circuit is arranged to drive the pair of inverter circuits with 2N number of PWM drive control signals.

19. The drive control device of an unconnected motor according to claim 17, **characterized in that** the drive control circuit is arranged to output 2N number of PWM drive control signals to a pair of inverter circuits, wherein N number of PWM drive control signals are supplied to an upper arm of one of the inverter circuits and a lower arm of the other inverter circuit, and the remaining N number of PWM drive control signals are supplied to the lower arm of the former inverter circuit and an upper arm of the latter inverter circuit.

20. The drive control device of an unconnected motor according to any one of the claims 17 to 19, **characterized in that** the drive control circuit is arranged so that a voltage developed between terminals of each armature winding is adjustable.

21. The drive control device of an unconnected motor according to claim 20, **characterized in that** the drive control circuit comprises: a vector control phase command value calculation section which calculates a phase current command value for each armature winding using vector control; a motor current sensing circuit which senses a phase current of each armature winding; and a current control section which controls a drive current for each armature winding based on the phase current command value and the phase current.

22. The drive control device of an unconnected motor according to claim 21, **characterized in that** the current control section comprises: a computing control section which calculates a phase voltage command value based on a deviation between the phase current command value and the phase current; a voltage limiting section which limits a maximum value of the phase voltage command value calculated by the computing control section; a duty command value calculation section which calculates a duty command value based on the phase voltage command value limited by the voltage limiting section; a phase conversion section which phase-converts the duty command value calculated by the duty command value calculation section into a number of armature windings to calculate a phase duty command value; and a drive control signal formation section which forms a predetermined number of PWM drive control signals to be supplied to the pair of inverters based on the phase duty command value outputted from the phase conversion section.

23. The drive control device of an unconnected motor according to claim 21, **characterized in that** the drive control signal formation section comprises: a first computing section which computes a first phase duty command value for one of the inverters based on the phase duty command value outputted from the phase conversion section; a second computing section which computes a second phase duty command value for the other inverter based on the phase duty command value; a first PWM circuit which forms a PWM drive control signal for the former inverter based on the first phase duty command value outputted from the first computing section; and a second PWM circuit which forms a PWM drive control signal for the latter inverter based on the second phase duty command value outputted from the second computing section.

24. The drive control device of an unconnected motor according to claim 23, **characterized in that** either the first computing section or the second computing section is arranged to output a phase duty command value with a duty ratio of 50% to a corresponding PWM circuit.

25. The drive control device of an unconnected motor according to claim 23, **characterized by** comprising a gain setting section which sets a gain for the phase duty command value, wherein the second computing section is arranged to compute the second phase duty command value based on a value obtained by multiplying the phase duty command value outputted from the phase conversion section by the gain.

26. The drive control device of an unconnected motor according to claim 25, **characterized in that** the gain setting section is arranged to set a gain based on a q-axis phase voltage command value formed by the current control section.

**27.** An electric power steering device, **characterized in that** a drive device of an unconnected motor according to any one of the claims 20 to 26 is used.

**28.** An electric power steering device, **characterized by** comprising: a steering torque sensing section which senses steering torques; an unconnected motor having a rotor in which permanent magnets are allocated and a stator opposing the rotor, in which a plurality of N-phases of armature windings are independently arranged, which generates steering assist force for a steering system, a pair of inverter circuits individually connected to both ends of each armature winding; and a drive control circuit for outputting a predetermined number of drive control signals to the pair of inverter circuits based on steering torque sensed by the steering torque sensing section.

**29.** The drive control device of an unconnected motor according to claim 28, **characterized in that** the drive control circuit is arranged to output 2N number of PWM drive control signals to a pair of inverter circuits, wherein N number of drive control signals are supplied to an upper arm of one of the inverter circuits and a lower arm of the other inverter circuit, and the remaining N number of drive control signals are supplied to the lower arm of the former inverter circuit and an upper arm of the latter inverter circuit.

**30.** The electric power steering device according to claim 28 or 29, **characterized in that** the drive control circuit comprises: a vector control phase command value calculation section which uses vector control to calculate a phase current command value for each armature winding based on the steering torque sensed value; a motor current sensing circuit which senses a phase current of each armature winding; and a current control section which controls a drive current for each armature winding from the pair of inverters based on the phase current command value and the phase current.

**31.** The electric power steering device according to claim 30, **characterized in that** the current control section comprises: a computing control section which calculates a phase voltage command value based on a deviation between the phase current command value and the phase current; a voltage limiting section which limits a maximum value of the phase voltage command value calculated by the computing control section; a duty command value calculation section which calculates a duty command value based on the phase voltage command value limited by the voltage limiting circuit; a phase conversion section which phase-converts the duty command value calculated by the duty command value calculation section into a number of armature windings to calculate a phase duty command value; and a drive control signal formation section which forms a predetermined number of PWM drive control signals to be supplied to the pair of inverters based on the phase duty command value outputted from the phase conversion section.

**32.** The electric power steering device according to claim 30, **characterized in that** the drive control signal formation section comprises: a first computing section which computes a first phase duty command value for one inverter based on the phase duty command value outputted from the phase conversion section; a second computing section which computes a second phase duty command value for the other inverter based on the phase duty command value outputted from the phase conversion section; a first PWM circuit which forms a PWM drive control signal for the former inverter based on the first phase duty command value outputted from the first computing section; and a second PWM circuit which forms a PWM drive control signal for the latter inverter based on the second phase duty command value outputted from the second computing section.

**33.** The electric power steering device according to claim 32, **characterized in that** either the first computing section or the second computing section is arranged to output a phase duty command value with a duty ratio of 50% to a corresponding PWM circuit.

**34.** The electric power steering device according to claim 32, **characterized by** comprising a gain setting section which sets a gain for the phase duty command value, wherein the second computing section is arranged to compute the second phase duty command value based on a value obtained by multiplying the phase duty command value outputted from the phase conversion section by the gain.

**35.** The electric power steering device according to claim 32, **characterized by** comprising a rotational velocity sensing section which senses a rotational velocity of the unconnected motor, wherein the gain setting section is arranged to set the gain based on a steering torque sensed by the steering torque sensing section and a motor rotational velocity sensed by the rotational velocity sensing section.

**36.** The electric power steering device according to claim 35, **characterized in that** the gain setting section comprises a gain calculation table which uses the gain as a parameter to express a relationship between the steering torque and motor rotational velocity.

37. The electric power steering device according to claim 34, **characterized in that** the gain setting section is arranged to compute a gain based on a q-axis phase voltage command value formed by the current control section.

38. An electric power steering device, **characterized by** comprising: an unconnected brushless motor having a rotor in which permanent magnets are allocated, and a stator opposing the rotor, in which a plurality of N-phases of armature windings are independently arranged without interconnection; steering torque sensing means which senses steering torques inputted to a steering system; a plurality (N-number) of inverter circuits, to which both ends of each armature winding of the unconnected brushless motor are respectively connected, which individually supplies a drive signal to each armature winding; current sensing means allocated to either a ground-side or a power-side of each inverter circuit; and a drive control section which drive-controls each inverter circuit based on winding current sensed by the current sensing means and steering torque sensed by the steering torque sensing means.

39. The electric power steering device according to claim 38, **characterized in that** the current sensing means is arranged to sense voltage between terminals of a current sensing resistor inserted to either a ground-side or a power-side of each inverter circuit, and the drive control section has A/D conversion means for performing A/D conversion by sampling voltage between terminals sensed by the current sensing means, wherein a sampling timing of the A/D conversion means is determined based on a duty ratio of a pulse width modulation signal supplied to each armature winding.

40. The electric power steering device according to claim 39, **characterized in that** switching of sampling timings of the A/D conversion means is set so that a duty ratio of a pulse width modulation signal has hysteresis characteristics of a predetermined width across a 50% point.

41. The electric power steering device according to claim 38, **characterized in that** the current sensing means is arranged to sense voltage between terminals of a current sensing resistor inserted to either a ground-side or a power-side of each inverter circuit, and the drive control section has A/D conversion means for performing A/D conversion by sampling voltage between terminals sensed by the current sensing means, wherein a sampling timing of the A/D conversion means is determined for each armature winding based on a direction and size of a drive current thereof.

42. The electric power steering device according to claim 41, **characterized in that** switching of sampling timings of the A/D conversion means in the invention according to claim 41 is set so that a drive current of the armature winding has hysteresis characteristics of a predetermined width across a zero-point.

43. A drive control device of an unconnected motor, **characterized by** comprising: an unconnected brushless motor having a rotor in which permanent magnets are allocated, and a stator in which a plurality (N number) of phases of armature windings are independently arranged without mutual interconnection to oppose the rotor; inverter circuits individually connected to both ends of each armature winding, which supply a drive signal to each armature winding; a drive control section which drive-controls the inverter circuits; an abnormality detection section which respectively detects current/voltage abnormalities of each armature winding; and an abnormal-time control section which drives the unconnected brushless motor while suppressing braking force generated by the unconnected brushless motor when a current/voltage abnormality is detected in one of the armature windings by the abnormality detection section.

44. A drive control device of an unconnected motor, **characterized by** comprising: an unconnected brushless motor having a rotor in which permanent magnets are allocated, and a stator in which a plurality (N number) of phases of armature windings are independently arranged without mutual interconnection to oppose the rotor; inverter circuits individually connected to both ends of each armature winding, which supply a drive signal to each armature winding; a drive control section which drive-controls the inverter circuits; an abnormality detection section which respectively detects current/voltage abnormalities of each armature winding; an abnormal-time control section which drives the unconnected brushless motor while suppressing braking force generated by the unconnected brushless motor when a current/voltage abnormality is detected in one of the armature windings by the abnormality detection section; a rotational velocity sensing section which senses a rotational velocity of the unconnected brushless motor; and a motor velocity suppression section which suppresses the rotational velocity of the unconnected brushless motor when the motor rotational velocity sensed by the rotational velocity sensing section is greater than or equal to a set velocity, in the event that a current/voltage abnormality is detected the armature windings by the abnormality detection circuit.

**45.** The drive control device of an unconnected motor according to claim 43 or 44, **characterized in that** the abnormal-time control section is arranged, in the event that a current/voltage abnormality is detected in one of the armature windings by the abnormality detection section, to suspend drive control of a drive element of only an inverter circuit corresponding to the relevant armature winding.

**46.** The drive control device of an unconnected motor according to any one of the claims 43 to 45, **characterized in that** the abnormality detection section is arranged to detect an abnormality of a drive element which composes an inverter circuit as well as an abnormality of a motor harness between the relevant inverter circuit and an armature winding of the unconnected brushless motor.

**47.** The drive control device of an unconnected motor according to any one of the claims 43 to 46, **characterized in that** the drive control section is configured to form control signals for the inverter circuits based on a current command value corrected by superimposing a high harmonic component onto a phase current command value for each armature winding of the unconnected motor.

**48.** An electric power steering device, **characterized in that** a drive control device of an unconnected motor according to any one of the claims 43 to 47 is used.

**49.** An electric power steering device, **characterized by** comprising: a steering torque sensing section which senses a steering torque; an unconnected brushless motor, having a rotor in which permanent magnets are allocated and a stator in which a plurality (N number) of phases of armature windings are independently arranged without mutual interconnection to oppose the rotor, which generates steering assist force for a steering system; inverter circuits individually connected to both ends of each armature winding, which supply a drive signal to each armature winding; a drive control section which drive-controls the inverter circuits based on a steering torque sensed by the steering torque sensing section; an abnormality detection section which respectively detects current/voltage abnormalities of each armature winding; and an abnormal-time control section which drives the unconnected brushless motor while suppressing braking force generated by the unconnected brushless motor when a current/voltage abnormality is sensed in one of the armature windings by the abnormality detection section.

**50.** An electric power steering device, **characterized by** comprising: a steering torque sensing section which senses a steering torque; an unconnected brushless motor having a rotor in which permanent magnets are allocated and a stator in which a plurality (N number) of phases of armature windings are independently arranged without mutual interconnection to oppose the rotor; inverter circuits individually connected to both ends of each armature winding, which supply a drive signal to each armature winding; a drive control section which drive-controls the inverter circuits based on a steering torque sensed by the steering torque sensing section; an abnormality detection section which respectively senses current/voltage abnormalities of each armature winding; an abnormal-time control section which drives the unconnected brushless motor while suppressing braking force generated by the unconnected brushless motor when a current/voltage abnormality is sensed in one of the armature windings by the abnormality detection section; a rotational velocity sensing section which senses a rotational velocity of the unconnected brushless motor; and a motor velocity suppression section which suppresses the rotational velocity of the unconnected brushless motor when the motor rotational velocity sensed by the rotational velocity sensing section is greater than or equal to a set velocity in the event that a current/voltage abnormality is detected in one of the armature windings by the abnormality detection circuit.

**51.** The electric power steering device according to claim 49 or 50, **characterized in that** the drive control section comprises: a phase current command value computing section which calculates a phase current command value for each armature winding based on the steering torque; a motor current sensing section which senses a phase current of each armature winding; and a current control section which controls a drive current for each armature winding based on the phase current command value and the phase current.

**52.** The electric power steering device according to claim 51, **characterized by** having an electrical angle sensing circuit which senses electrical angles of the unconnected motor, wherein the phase current command value computing section comprises: a phase current target value calculation section which respectively calculates a phase current target value corresponding to a back emf including a high harmonic component, corresponding to each armature winding of the unconnected motor based on the electrical angle; and a phase current command value calculation section which calculates a phase current command value for each armature winding based on the phase current command value and the steering torque sensed value.

53. An electric power steering device, **characterized by** comprising: a steering torque sensing section which senses steering torques; an unconnected brushless motor, having a rotor in which permanent magnets are allocated and a stator opposing the rotor, in which phase coils of a plurality (N number) of phases are independently arranged without mutual interconnection, which generates steering assist force for a steering system; inverter circuits individually connected to both ends of each phase coil, which supplies a drive signal to each phase coil; a drive control section which drive-controls the inverter circuit based on a steering torque sensed by the steering torque sensing section; and an abnormality detection section which detects abnormalities in a conduction control system including the respective phase coils and the inverters based on a voltage between terminals of each phase coil.

54. The electric power steering device according to claim 53, **characterized in that** the inverter circuits are respectively connected to both ends of each phase coil.

55. The electric power steering device according to claim 54, **characterized in that** the inverter circuits, connected to both ends of each phase coil, are driven at opposite phases to each other.

56. The electric power steering device according to any one of the claims 53 to 55, **characterized in that** the abnormality detection section comprises: a voltage addition section which adds voltages developed across each phase coil; and an abnormality judgment section which compares the added voltage added by the voltage addition section with a set voltage range based on a power supply voltage supplied to the conduction control system in order to judge whether a short-to-power/short-to-ground has occurred in the conduction control system.

57. The electric power steering device according to any one of the claims 53 to 55, **characterized in that** the abnormality detection section comprises: a voltage addition section which adds voltages developed across each phase coil; a bias circuit which applies a bias voltage of around half of the power supply voltage of the conduction control system at a high impedance to the terminal voltages of both ends of each phase coil; and an abnormality judgment section which compares the added voltage added by the voltage addition section with a set voltage range based on a power supply voltage supplied to the conduction control system in order to judge whether a short-to-power/short-to-ground has occurred in the conduction control system.

58. The electric power steering device according to any one of the claims 53 to 55, **characterized in that** the abnormality detection section comprises: a voltage addition section which adds voltages developed across each phase coil; a bias circuit which applies a bias voltage of around half of the power supply voltage of the conduction control system at a high impedance to the terminal voltage of either one of the ends of each phase coil; and an abnormality judgment section which compares the added voltage added by the voltage addition section with a set voltage range based on a power supply voltage supplied to the conduction control system in order to judge whether a short-to-power/ short-to-ground and a open abnormality has occurred in the conduction control system.

59. The electric power steering device according to any one of the claims 56 to 58, **characterized in that** the abnormality judgment section is arranged to judge that a short-to-power/short-to-ground fault has occurred when a state in which the added voltage added by the voltage addition section deviates from the set voltage range continues for more than a predetermined period of time.

60. The electric power steering device according to claim 59, **characterized in that** the abnormality judgment section is arranged to calculate an average value of added voltages added by the voltage addition section, and to judge whether the average value deviates from the set voltage range.

61. The electric power steering device according to any one of the claims 56 to 58, **characterized in that** the abnormality judgment section is arranged to detect a voltage change in the added voltages added by the voltage addition section, and judge that a short-to-power/short-to-ground fault has occurred when a voltage change has occurred.

# FIG. 1

EP 1 826 899 A1

# F I G. 2

TORQUE SENSOR OUTPUT VOLTAGE

0   STEERING TORQUE

LEFTWARD STEERING   RIGHTWARD STEERING

# F I G. 3

F I G. 4

# F I G. 5

EP 1 826 899 A1

F I G. 6

F I G. 7

43 TARGET STEERING ASSIST TORQUE
CALCULATION SECTION

40 PHASE CURRENT COMMAND VALUE
COMPUTATION SECTION

15 DRIVE CONTROL CIRCUIT

50 CURRENT CONTROL SECTION

ELECTRICAL ANGLE
CONVERSION SECTION

PI
CONTROL
SECTION

PWM
CONTROL
SECTION

INVERTER

INVERTER

F I G . 8 B
PRESENT INVENTION

F I G . 8 A
PRESENT INVENTION

F I G . 8 D
CONVENTIONAL EXAMPLE

F I G . 8 C
CONVENTIONAL EXAMPLE

# F I G. 9

$$Vu = V_0 * \sin(\omega t + \alpha)$$

U

$$Vun = V_0 * \sin(\omega t + \alpha)$$

$R_0$

$$Iu = I_0 * \sin(\omega t)$$

$L_0$

$$Vuv = \sqrt{3} * V_0 * \sin(\omega t + \pi/6)$$

$$Vwu = \sqrt{3} * V_0 * \sin(\omega t - 4\pi/3 + \pi/6)$$

$Ke、Kt$

$$eu = \omega * Kt * \sin(\omega t)$$

$$Vn = 0v$$

$$Iw = I_0 * \sin(\omega t - 4\pi/3)$$

V

W

$$Iv = I_0 * \sin(\omega t - 2\pi/3)$$

$$Vv = V_0 * \sin(\omega t - 2\pi/3 + \alpha)$$

$$Vw = V_0 * \sin(\omega t - 4\pi/3 + \alpha)$$

$$Vvw = \sqrt{3} * V_0 * \sin(\omega t - 2\pi/3 + \pi/6)$$

## F I G . 1 0 A

TERMINAL VOLTAGE OF
UNCONNECTED MOTOR

——— TERMINAL VOLTAGE Vua
----- TERMINAL VOLTAGE Vub
——— VOLTAGE DEVELOPED ACROSS COIL Vuab

## F I G . 1 0 B

TERMINAL VOLTAGE OF
WYE-CONNECTION MOTOR

——— TERMINAL VOLTAGE Vu
----- TERMINAL VOLTAGE Vv
——— VOLTAGE BETWEEN TERMINALS Vuv
– – – NEUTRAL POINT VOLTAGE Vn

# F I G. 1 1 A

| COIL TERMINAL VOLTAGE OF UNCONNECTED MOTOR | ──── VOLTAGE DEVELOPED ACROSS COIL Vuab<br>──── VOLTAGE DEVELOPED ACROSS COIL Vvab<br>----- VOLTAGE DEVELOPED ACROSS COIL Vwab |

# F I G. 1 1 B

| VOLTAGE DEVELOPED ACROSS COIL OF WYE-CONNECTION MOTOR $\left(\begin{array}{c}\text{TERMINAL VOLTAGE-}\\\text{NEUTRAL POINT VOLTAGE}\end{array}\right)$ | ──── VOLTAGE DEVELOPED ACROSS COIL Vun<br>──── VOLTAGE DEVELOPED ACROSS COIL Vvn<br>----- VOLTAGE DEVELOPED ACROSS COIL Vwn |

$Iu=I_0*\sin(\omega t)$

$Vu=V_0*\sin(\omega t+\alpha)$

U

$eu=\omega*\sqrt{3}*Kt*\sin(\omega t+\pi/6)$

$\sqrt{3}\,Ke、\sqrt{3}\,Kt$

$Iuw=I_0/\sqrt{3}*\sin(\omega t+\pi/6)$

$3*L_0$

$3*R_0$

$Vuv=\sqrt{3}*V_0*\sin(\omega t+\pi/6)$

$Vwu=\sqrt{3}*V_0*\sin(\omega t-4\pi/3+\pi/6)$

$Iwu=I_0/\sqrt{3}*\sin(\omega t-4\pi/3+\pi/6)$

$Iv=I_0*\sin(\omega t-2\pi/3)$

V

$Vv=V_0*\sin(\omega t-2\pi/3+\alpha)$

$Ivw=I_0/\sqrt{3}*\sin(\omega t-2\pi/3+\pi/6)$

$Iw=I_0*\sin(\omega t-4\pi/3)$

W

$Vw=V_0*\sin(\omega t-4\pi/3+\alpha)$

$Vvw=\sqrt{3}*V_0*\sin(\omega t-2\pi/3+\pi/6)$

EP 1 826 899 A1

# FIG.13A

COIL CURRENT OF UNCONNECTED MOTOR

—— COIL CURRENT Iu
—— COIL CURRENT Iv
----- COIL CURRENT Iw

# FIG.13B

PHASE CURRENT AND COIL CURRENT OF DELTA-CONNECTION MOTOR

—— COIL CURRENT Iuv
—— COIL CURRENT Ivw
----- COIL CURRENT Iwv
– – – PHASE CURRENT Iu
–·– PHASE CURRENT Iv
–··– PHASE CURRENT Iw

# F I G . 1 4

POWER SUPPLY CURRENT·MOTOR CURRENT (A)

ROTATIONAL VELOCITY (min⁻¹)

NUMBER OF ROTATIONS INCREASED

POWER SUPPLY CURRENT OF UNCONNECTED TYPE

MOTOR CURRENT OF WYE-CONNECTION TYPE, UNCONNECTED TYPE

NUMBER OF ROTATIONS OF UNCONNECTED TYPE

POWER SUPPLY CURRENT OF WYE-CONNECTION TYPE

NUMBER OF ROTATIONS OF WYE-CONNECTION TYPE

TORQUE (Nm)

# F I G . 1 5

POWER SUPPLY CURRENT·MOTOR CURRENT (A)

ROTATIONAL VELOCITY (min⁻¹)

MOTOR CURRENT OF DELTA-CONNECTION TYPE

POWER SUPPLY CURRENT OF DELTA-CONNECTION TYPE, UNCONNECTED TYPE

MOTOR CURRENT OF UNCONNECTED TYPE

NUMBER OF ROTATIONS OF UNCONNECTED TYPE

NUMBER OF ROTATIONS OF DELTA-CONNECTION TYPE

TORQUE (Nm)

TORQUE INCREASED

# F I G. 1 6

MOTOR CURRENT OF
CONVENTIONAL MOTOR

MOTOR CURRENT OF
UNCONNECTED TYPE

POWER SUPPLY
CURRENT OF
UNCONNECTED
TYPE

NUMBER OF
ROTATIONS
INCREASED

NUMBER OF
ROTATIONS OF
UNCONNECTED
TYPE

POWER SUPPLY CURRENT OF
CONVENTIONAL MOTOR

NUMBER OF ROTATIONS
OF CONVENTIONAL MOTOR

ROTATIONAL VELOCITY (min⁻¹)

POWER SUPPLY CURRENT·MOTOR CURRENT (A)

TORQUE (Nm)

TORQUE INCREASED

F I G . 1 7

VECTOR CONTROL PHASE COMMAND VALUE CALCULATION SECTION

Blocks:
- 76 TORQUE COMMAND VALUE COMPUTATION SECTION
- 71 CONVERSION SECTION
- 72 THREE-PHASE TO TWO-PHASE TRANSFORMATION SECTION
- 73 q-AXIS COMMAND CURRENT CALCULATION SECTION
- 74 TWO-PHASE TO THREE-PHASE TRANSFORMATION SECTION
- 77 CONVERSION SECTION
- 75 d-AXIS COMMAND CURRENT CALCULATION SECTION
- 78 ELECTRICAL ANGLE CONVERSION SECTION
- 79 DIFFERENTIAL CIRCUIT
- 83 PI CONTROL SECTION
- 60 PWM CONTROL SECTION
- 34a INVERTER
- 34b INVERTER
- M 12
- 35

Signals: T, T*, eu, ev, ew, ed, eq, Iq*, Id*, Iu*, Iv*, Iw*, ΔIu, ΔIv, ΔIw, Vu, Vv, Vw, ωb, θe, ωe, 51u, 51v, 51w, 82u, 82v, 82w, 70, 80, 15

EP 1 826 899 A1

F I G. 1 8

75

d-AXIS COMMAND CURRENT CALCULATION SECTION

76

$T^*$

$\omega$ e

CONVERSION SECTION

$\phi = a \cos(\omega b / \omega m)$

$\omega$ b

$\omega m = \omega e/p$

MECHANICAL ANGLE CALCULATION SECTION

$\omega$ m

a cos CALCULATION SECTION

75a

$\phi$

75b

75c

sin CALCULATION SECTION

$\sin \phi$

TORQUE COEFFICIENT SECTION

Iqb

ABSOLUTE VALUE SECTION

|Iqb|

MULTIPLIER × (-1)

Id* = -|Iqb|sin $\phi$

75e

75f

75d

Iqb = (T*/Kt)

EP 1 826 899 A1

76

F I G . 1 9

F I G. 20

# F I G . 2 1

F I G. 2 2

# F I G. 2 3

# F I G. 2 4

TERMINAL VOLTAGE OF
UNCONNECTED MOTOR

——— TERMINAL VOLTAGE Vua
------ TERMINAL VOLTAGE Vub
━━━ VOLTAGE DEVELOPED ACROSS COIL Vuab

F I G . 2 5

EP 1 826 899 A1

# F I G. 2 6 A

163a

PuL ——— 164u

PvL ——— 164v

PwL ——— 164w

P1 ——— 165

SL

166u — PuL'

166v — PvL'

166w — PwL'

# F I G. 2 6 B

163b

PuH ——— 167u

PvH ——— 167v

PwH ——— 167w

P2 ——— 168

SL

169u — PuH'

169v — PvH'

169w — PwH'

# F I G. 2 6 C

P1

P2

# F I G. 2 7

F I G. 2 8

F I G . 2 9

F I G. 3 0

# F I G. 3 1

# F I G. 3 2

| | $V_{Ub} = K \cdot V_{Ua}$ | $V_{Uab} = V_{Ua} - V_{Ub} = (1-K) V_{Ua}$ |
|---|---|---|
| K = 0. 5 | | ×1/2 |
| K = 0 | | ×1 |
| K = -1 | | ×2 |

EP 1 826 899 A1

F I G . 3 5

# FIG. 36

START STEERING ASSIST
CONTROL PROCESSING

READ TORQUE SENSED VALUE T —S1

$Ts = T - V_0$ —S2

READ VEHICLE SPEED SENSED VALUE V —S3

REFERENCE CONTROL MAP TO CALCULATE
STEERING ASSIST COMMAND VALUE $I_T$ —S4

READ MOTOR ANGULAR VELOCITY $\omega$ —S5

CALCULATE INERTIAL COMPENSATION
VALUE $I_i$ AND FRICTION
COMPENSATION VALUE $I_f$ —S6

DIFFERENTIATE STEERING TORQUE Ts
TO CALCULATE CENTER RESPONSIVENESS
IMPROVEMENT COMPENSATION VALUE $I_r$ —S7

CALCULATE STEERING ASSIST
COMPENSATION VALUE $I_T'$
$I_T' = I_T + I_i + I_f + I_r$ —S8

READ MOTOR ELECTRICAL ANGLE $\theta$ —S9

REFERENCE PHASE CURRENT
CALCULATION MAP TO CALCULATE
U-PHASE TO W-PHASE CURRENT
COMMAND VALUES Iu TO Iw —S10

CALCULATE PHASE
CURRENT TARGET VALUES
$I_{TU}^* = I_T' \times Iu$
$I_{TV}^* = I_T' \times Iv$
$I_{TW}^* = I_T' \times Iw$ —S11

READ MOTOR SENSED
CURRENTS Idu TO Idw —S12

CALCULATE CURRENT DEVIATIONS
$\Delta Iu = I_{TU}^* - Idu$
$\Delta Iv = I_{TV}^* - Idv$
$\Delta Iw = I_{TW}^* - Idw$ —S13

COMPUTE PI CONTROL
$Vu = Kp \times \Delta Iu + Ki \int \Delta Iudt$
$Vv = Kp \times \Delta Iv + Ki \int \Delta Ivdt$
$Vw = Kp \times \Delta Iw + Ki \int \Delta Iwdt$ —S14

PROCESS VOLTAGE LIMITING —S15

CALCULATE DUTY COMMAND VALUES
$Du = 50 + (Vu / 2Vb) \times 100$
$Dv = 50 + (Vv / 2Vb) \times 100$
$Dw = 50 + (Vw / 2Vb) \times 100$ —S16

OUTPUT DUTY COMMAND VALUES Du,
Dv AND Dw TO GATE DRIVE CIRCUIT —S17

RETURN

# FIG.37

STEERING
ASSIST
COMMAND
VALUE
(I_T)

VEHICLE
SPEED
(V)
LOW

HIGH

L12
L9
L10
L11
L7
L8  L5
L6
L3
L1
L2  L4

0    Ts1    Ts2

STEERING TORQUE (Ts)

## F I G . 3 8 A

PHASE
CURRENT 0
COMMAND
VALUE
(Iu)

ELECTRICAL
ANGLE $\theta$

## F I G . 3 8 B

PHASE
CURRENT 0
COMMAND
VALUE
(Iv)

ELECTRICAL
ANGLE $\theta$

## F I G . 3 8 C

PHASE
CURRENT 0
COMMAND
VALUE
(Iw)

ELECTRICAL
ANGLE $\theta$

# F I G. 3 9

START CURRENT
SENSING PROCESSING

Dj < D_{S1} ? ─ S31
　N

Dj > D_{S2} ? ─ S40 　Y

FD = "0" ─ S32

FD = "0" ? ─ S41 　Y
　N

FD = "1" ─ S42

READ COUNT VALUE N OF PWM
PULSE GENERATION COUNTER ─ S33

READ COUNT VALUE N OF PWM
PULSE GENERATION COUNTER ─ S43

N = N_{MAX} ? ─ S34

N = 0 ? ─ S44
　Y
　N

RETURN

READ MOTOR CURRENT Iaj ─ S35

PROCESS A/D CONVERSION
OF MOTOR CURRENT Idj ─ S36

SUBTRACT REFERENCE VOLTAGE
Vref FROM DIGITAL MOTOR
CURRENT TO CALCULATE NET
DIGITAL MOTOR CURRENT ─ S37

ATTACH POSITIVE/NEGATIVE
SIGN TO NET DIGITAL MOTOR
CURRENT TO CALCULATE
DIGITAL MOTOR CURRENT Idj ─ S38

STORE DIGITAL MOTOR
CURRENT Idj IN RAM ─ S39

RETURN

# F I G. 4 0

# F I G. 4 1

FIG.42

# FIG.43

# F I G . 4 4

# F I G . 4 5

CONVENTIONAL EXAMPLE

F I G. 4 6 A

MOTOR
CURRENT  0
(A)

0                          1000
            TIME

PRESENT INVENTION

F I G. 4 6 B

MOTOR
CURRENT  0
(A)

0                          1000
            TIME

PRESENT INVENTION

F I G. 4 6 C

BACK
EMF   0
(V)

, 0                        1000
            TIME

101

$Vu = V_0 * \sin(\omega t + \alpha)$

U

$R_0$

$Iu = I_0 * \sin(\omega t)$

$Vun = V_0 * \sin(\omega t + \alpha)$

$L_0$

$Vwu = \sqrt{3} * V_0 * \sin(\omega t - 4\pi/3 + \pi/6)$

$Vuv = \sqrt{3} * V_0 * \sin(\omega t + \pi/6)$

$Ke、Kt$
$eu = \omega * Kt * \sin(\omega t)$

$Vn = 0v$

$Iw = I_0 * \sin(\omega t - 4\pi/3)$

$Iv = I_0 * \sin(\omega t - 2\pi/3)$

V

W

$Vv = V_0 * \sin(\omega t - 2\pi/3 + \alpha)$

$Vw = V_0 * \sin(\omega t - 4\pi/3 + \alpha)$

$Vvw = \sqrt{3} * V_0 * \sin(\omega t - 2\pi/3 + \pi/6)$

EP 1 826 899 A1

# F I G. 4 8 A

TERMINAL VOLTAGE OF
UNCONNECTED MOTOR

——— TERMINAL VOLTAGE Vua
----- TERMINAL VOLTAGE Vub
——— VOLTAGE DEVELOPED ACROSS COIL Vuab

# F I G. 4 8 B

TERMINAL VOLTAGE OF
WYE-CONNECTION MOTOR

——— TERMINAL VOLTAGE Vu
----- TERMINAL VOLTAGE Vv
——— VOLTAGE BETWEEN TERMINALS Vuv
– – – NEUTRAL POINT VOLTAGE Vn

# FIG.49A

COIL TERMINAL
VOLTAGE OF
UNCONNECTED MOTOR

——— VOLTAGE DEVELOPED ACROSS COIL Vuab
——— VOLTAGE DEVELOPED ACROSS COIL Vvab
----- VOLTAGE DEVELOPED ACROSS COIL Vwab

# FIG.49B

VOLTAGE DEVELOPED
ACROSS COIL OF
WYE-CONNECTION MOTOR
$\left(\begin{array}{c}\text{TERMINAL VOLTAGE-}\\\text{NEUTRAL POINT VOLTAGE}\end{array}\right)$

——— VOLTAGE DEVELOPED ACROSS COIL Vun
——— VOLTAGE DEVELOPED ACROSS COIL Vvn
----- VOLTAGE DEVELOPED ACROSS COIL Vwn

# F I G. 5 0

SET A/D CONVERSION TRIGGER
TIMING TO UPPER SUMMIT OF
TRIANGULAR WAVE

−Ih

NEGATIVE
DIRECTION

POSITIVE
DIRECTION

MOTOR CURRENT

0[A]

+Ih

SET A/D CONVERSION TRIGGER
TIMING TO LOWER SUMMIT OF
TRIANGULAR WAVE

# FIG.51

```
        ┌──────────────────────┐
        │    START CURRENT     │
        │  SENSING PROCESSING  │
        └──────────────────────┘
                  │
                  │  S51
        ┌─────────────────┐  N
        ◇   Idj<-Ih ?     ◇──────────────────────────────────┐
        └─────────────────┘                                  │
                  │ Y                        S52             │
        ┌─────────────────┐        ◇   Idj>+Ih ?   ◇ Y       │
        │    FD = "0"      │ S32    └──────────────┘───────────→
        └─────────────────┘              │ N    S41
                  │ S33         ◇   FD= "0" ?   ◇ Y
        ┌──────────────────────┐ └──────────────┘──→
        │ READ COUNT VALUE N   │        │ N
        │ OF PWM PULSE         │
        │ GENERATION COUNTER   │
        └──────────────────────┘
```

READ COUNT VALUE N OF PWM PULSE GENERATION COUNTER — S33

N=N MAX ? — S34

FD = "1" — S42

READ COUNT VALUE N OF PWM PULSE GENERATION COUNTER — S43

N=0 ? — S44

RETURN

READ MOTOR CURRENT Iaj — S35

PROCESS A/D CONVERSION OF MOTOR CURRENT Idj — S36

SUBTRACT REFERENCE VOLTAGE Vref FROM DIGITAL MOTOR CURRENT TO CALCULATE NET DIGITAL MOTOR CURRENT — S37

ATTACH POSITIVE/NEGATIVE SIGN TO NET DIGITAL MOTOR CURRENT TO CALCULATE DIGITAL MOTOR CURRENT Idj — S38

STORE DIGITAL MOTOR CURRENT Idj IN RAM — S39

RETURN

EP 1 826 899 A1

F I G . 5 2

# FIG.53

EP 1 826 899 A1

F I G . 5 4

# F I G. 5 5

(a)

(b)

(c)

(d)

(e)

(f)

# FIG.56

(a)

Trw1

Trw3

Vb

twa

twb

Vwa

Vwb

Lw

Trw2

Trw4

SHORT FAULT
AT FET OF
Trw4

(b)

Pw1

(c)

Pw2

(d)

Td

Vwa

VR[V]

0[V]

−VF[V]

(e)

0[V]

Vwb

(f)

Vws

# F I G . 5 7

START NORMAL MODE
PROCESSING

READ TORQUE SENSED VALUE T — S1

$Ts = T - Vo$ — S2

READ VEHICLE SPEED SENSED VALUE V — S3

REFERENCE CONTROL MAP TO CALCULATE
STEERING ASSIST COMMAND VALUE $I_T$ — S4

READ MOTOR ANGULAR VELOCITY $\omega$ — S5

CALCULATE INERTIAL COMPENSATION
VALUE $I_i$ AND FRICTION
COMPENSATION VALUE $I_f$ — S6

DIFFERENTIATE STEERING TORQUE Ts
TO CALCULATE CENTER RESPONSIVENESS
IMPROVEMENT COMPENSATION VALUE $I_r$ — S7

CALCULATE STEERING ASSIST
COMPENSATION VALUE $I_T'$
$I_T' = I_T + I_i + I_f + I_r$ — S8

READ MOTOR ELECTRICAL ANGLE $\theta$ — S9

REFERENCE PHASE CURRENT
CALCULATION MAP TO CALCULATE
U-PHASE TO W-PHASE CURRENT
COMMAND VALUES Iu TO Iw — S10

CALCULATE PHASE
CURRENT TARGET VALUES
$I_{TU}{}^* = I_T' \times Iu$
$I_{TV}{}^* = I_T' \times Iv$
$I_{TW}{}^* = I_T' \times Iw$ — S11

READ MOTOR SENSED
CURRENTS Idu TO Idw — S12

CALCULATE CURRENT DEVIATIONS
$\Delta Iu = I_{TU}{}^* - Idu$
$\Delta Iv = I_{TV}{}^* - Idv$
$\Delta Iw = I_{TW}{}^* - Idw$ — S13

COMPUTE PI CONTROL
$Vu = Kp \times \Delta Iu + Ki \int \Delta Iu dt$
$Vv = Kp \times \Delta Iv + Ki \int \Delta Iv dt$
$Vw = Kp \times \Delta Iw + Ki \int \Delta Iw dt$ — S14

PROCESS VOLTAGE LIMITING — S15

CALCULATE DUTY COMMAND VALUES
$Du = 50 + (Vu / 2Vb) \times 100$
$Dv = 50 + (Vv / 2Vb) \times 100$
$Dw = 50 + (Vw / 2Vb) \times 100$ — S16

AF $\neq$ "0" ? — S61

Y / N

OUTPUT PWM SIGNAL OUTPUT
SUSPENSION COMMAND OF PHASE IN
WHICH ABNORMALITY HAS OCCURRED — S63

OUTPUT DUTY COMMAND
VALUES Du, Dv AND Dw
TO GATE DRIVE CIRCUIT — S62

RETURN

$\omega \mid > \omega s$ ? — S64

N / Y

OUTPUT DUTY COMMAND VALUES
OF TWO NORMAL PHASES — S65

LIMIT DUTY COMMAND VALUES OF
TWO NORMAL PHASES TO SET
VALUES DL TO DH, THEN OUTPUT — S66

RETURN

# F I G.5 8

START ABNORMALITY
DETECTION PROCESSING

READ ADDED VOLTAGE
Vus TO Vws —— S71

CALCULATE MOVING AVERAGE
VALUES Vusm(n) TO Vwsm(n) —— S72

S73

$|Vusm(n)-Vb| > Vms$ ?  —— N

Y

S75

$|Vvsm(n)-Vb| > Vms$ ?  —— N

Y

S77

$|Vwsm(n)-Vb| > Vms$ ?  —— N

Y

SET ABNORMALITY
FLAG AF TO "1" —— S74

SET ABNORMALITY
FLAG AF TO "2" —— S76

SET ABNORMALITY
FLAG AF TO "3" —— S78

S79

SET ABNORMALITY
FLAG AF TO "0"

RETURN

EP 1 826 899 A1

## F I G . 5 9 A

U-PHASE CURRENT
V-PHASE CURRENT
W-PHASE CURRENT

PHASE
CURRENT
(A)

## F I G . 5 9 B

MOTOR TORQUE
W-PHASE TORQUE

Ln

TORQUE
(Nm)

DRIVE
TORQUE SIDE

BRAKING
TORQUE SIDE

La

# F I G. 6 0 A

Legend:
- ----- U-PHASE CURRENT
- —— V-PHASE CURRENT
- —— W-PHASE CURRENT

PHASE CURRENT (A)

# F I G. 6 0 B

Legend:
- ----- MOTOR TORQUE
- —— W-PHASE TORQUE

TORQUE (Nm)

DRIVE TORQUE SIDE

BRAKING TORQUE SIDE

F I G. 6 1

# FIG. 62

EP 1 826 899 A1

# FIG.63

EP 1 826 899 A1

<table>
<tr><td colspan="2" align="center">**INTERNATIONAL SEARCH REPORT**</td><td colspan="2">International application No.<br>PCT/JP2005/021615</td></tr>
</table>

| | |
|---|---|
| A. CLASSIFICATION OF SUBJECT MATTER<br>*H02P6/08*(2006.01), *B62D5/04*(2006.01), *B62D6/00*(2006.01), *H02M7/48*<br>(2006.01) | |

According to International Patent Classification (IPC) or to both national classification and IPC

| B. FIELDS SEARCHED |
|---|
| Minimum documentation searched (classification system followed by classification symbols)<br>*H02P6/08*(2006.01), *B62D5/04*(2006.01), *B62D6/00*(2006.01), *H02M7/48*<br>(2006.01) |

| Documentation searched other than minimum documentation to the extent that such documents are included in the fields searched |
|---|
| Jitsuyo Shinan Koho      1922-1996    Jitsuyo Shinan Toroku Koho    1996-2005<br>Kokai Jitsuyo Shinan Koho    1971-2005    Toroku Jitsuyo Shinan Koho    1994-2005 |

| Electronic data base consulted during the international search (name of data base and, where practicable, search terms used) |
|---|
| |

C. DOCUMENTS CONSIDERED TO BE RELEVANT

| Category* | Citation of document, with indication, where appropriate, of the relevant passages | Relevant to claim No. |
|---|---|---|
| Y | JP 2002-345283 A (Koyo Seiko Co., Ltd.),<br>29 November, 2002 (29.11.02),<br>Fig. 1<br>(Family: none) | 1-61 |
| A | JP 2004-15968 A (NSK Ltd.),<br>15 January, 2004 (15.01.04),<br>Fig. 1<br>(Family: none) | 1-42 |
| Y | JP 11-122978 A (ST Microelectronics S.r.l.),<br>30 April, 1999 (30.04.99),<br>Claim 1<br>& US 6057663 A       & EP 896422 A1 | 1-61 |

| ☒ Further documents are listed in the continuation of Box C. | ☐ See patent family annex. |
|---|---|

| | | |
|---|---|---|
| * | Special categories of cited documents: | "T"   later document published after the international filing date or priority date and not in conflict with the application but cited to understand the principle or theory underlying the invention |
| "A" | document defining the general state of the art which is not considered to be of particular relevance | |
| "E" | earlier application or patent but published on or after the international filing date | "X"   document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y"   document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&"   document member of the same patent family |

| Date of the actual completion of the international search<br>22 December, 2005 (22.12.05) | Date of mailing of the international search report<br>10 January, 2006 (10.01.06) |
|---|---|
| Name and mailing address of the ISA/<br>Japanese Patent Office | Authorized officer |
| Facsimile No. | Telephone No. |

Form PCT/ISA/210 (second sheet) (April 2005)

**INTERNATIONAL SEARCH REPORT**

International application No.

PCT/JP2005/021615

C (Continuation). DOCUMENTS CONSIDERED TO BE RELEVANT

| Category* | Citation of document, with indication, where appropriate, of the relevant passages | Relevant to claim No. |
|---|---|---|
| A | JP 8-205586 A (Fuji Electric Co., Ltd.),<br>09 August, 1996 (09.08.96),<br>Claim 1<br>(Family: none) | 1-61 |
| A | JP 2003-70280 A (Hitachi, Ltd.),<br>07 March, 2003 (07.03.03),<br>Claim 1<br>(Family: none) | 1-42 |
| A | JP 2001-18822 A (Toyota Motor Corp.),<br>23 January, 2001 (23.01.01),<br>Fig. 1<br>(Family: none) | 1-42 |
| Y | JP 2001-128482 A (Yamaha Motor Co., Ltd.),<br>11 May, 2001 (11.05.01),<br>Claim 1<br>(Family: none) | 43-61 |
| A | JP 6-311783 A (Nippondenso Co., Ltd.),<br>04 November, 1994 (04.11.94),<br>Claim 1<br>(Family: none) | 43-61 |

Form PCT/ISA/210 (continuation of second sheet) (April 2005)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2004201487 A
- JP 2003200838 A
- JP 2002238293 A
- JP 12350490 A
- JP 7096387 B
- JP 10181617 A
- JP 11263240 A
- WO 98588338 A
- JP 2003237597 A